# EUROPEAN PATENT SPECIFICATION

(11) **EP 2 904 953 B1**
(45) Date of publication and mention of the grant of the patent: **05.12.2018**
(21) Application number: 13843223.2
(22) Date of filing: 15.02.2013
(51) Int. Cl.: A47J 43/042

(54) **COOKING DEVICE**
KOCHVORRICHTUNG
DISPOSITIF DE CUISSON

(30) Priority: 05.10.2012 JP 2012222981
(43) Date of publication of application: 12.08.2015
(73) Proprietor: Toshiba Lifestyle Products & Services Corporation, Tokyo 198-8710 (JP)
(72) Inventor: KATSUKI, Rie, Tokyo 105-8001 (JP); KOBAYASHI, Yuko, Tokyo 105-8001 (JP); AKIBA, Toshikatsu, Tokyo 105-8001 (JP); SHIMA, Yasuo, Tokyo 105-8001 (JP); ITO, Hideki, Tokyo 105-8001 (JP)
(74) Representative: Moreland, David
(86) International application number: PCT/JP2013/053766
(87) International publication number: WO 2014/054301

(56) References cited:
- JP-A- H0 227 957
- JP-A- 2002 125 644
- JP-A- 2007 295 888
- JP-A- 2008 206 907
- JP-A- 2008 206 907
- JP-A- 2008 284 187
- JP-A- 2009 113 866
- JP-U- 3 175 828
- JP-U- S59 145 338

## Description

### Technical Field

Embodiments described herein relate generally to a cooking device, for example, a mixer, a slicer, a food processor and the like.

### Background Art

A mixer processes food contained in a cooking container by rotating a cutter installed at the bottom of the cooking container commonly called a bottle using an electric motor (for example, food is stirred while being crushed). The processing is generally performed in an atmosphere in which the oxygen concentration is 21%. Thus, the degree of oxidation of processed food due to oxygen in the cooking container is high and the processed food is more likely to discolor and also the flavor is more likely to deteriorate. A similar problem is also known in the production method of apple juice.

To solve such a problem, crushing apples and squeezing juice therefrom in a substantially oxygen-free atmosphere, that is, a nitrogen gas atmosphere or a carbon dioxide gas atmosphere is proposed. Similarly, to solve the problem with a mixer, processing food by rotating a cutter and while at the same time, separating a carbon dioxide gas, a nitrogen gas, and an oxidizing lean gas from the air and supplying these gases into a cooking container in which food is contained to replace the air in the cooking container is proposed.

By taking these measures, discoloration of food and deterioration of the flavor can be inhibited during food processing. To prepare a nitrogen gas, for example, a device such as a gas separator to generate the gas is needed. Thus, in addition to higher costs, the number of components increases and the configuration becomes more complex, making the configuration unsuitable for miniaturization.

A mixer may be used in a form in which hot food, for example, soup is poured into a cooking container and the hot food is stirred. In such usage, a gas in the cooking container is taken into the soup while the soup being stirred, leading to expansion of the soup. Thus, the pressure inside the cooking container rises excessively and there is a danger that a cap or the like closing an opening of the cooking container is inadvertently opened. Such a thing can also occur when the air in the cooking container is replaced by a nitrogen gas.

### Citation List

### Patent Literature

Patent Literature 1: Jpn. Pat. Appln. KOKAI Publication No. 9-206040
Patent Literature 2: Jpn. Pat. Appln. KOKAI Publication No. 5-192255
Patent Literature 3: Japanese Publication No. JP 2008 206907 A
Patent Literature 4: Japanese Publication No. JP 3 175828 U

Patent literature 3 discloses an electric cooker capable of making a highly nutritious soup by increasing nutrient components while preventing oxidation of the nutrient components. To achieve this there is provided an electric cooker including a main body with a built-in motor; a vessel detachably placed on the main body; a cutter connected to the motor to cut foods in the vessel, heating means which heats the inside of the vessel; a lid which covers the vessel; temperature detection means which detects a temperature in the vessel, and a control means which controls the heating means based on a signal of the temperature detection means.

Patent Literature 4 discloses a fruit juice / food high-speed mixer capable, in a vacuum environment, to perform high-speed agitation of fruit juice / food. A large amount of bubbles can be prevented from occurring at the time of high-speed stirring to produce a smooth health drinks including a rich fiber by using a mixer with a three-way tube including a switching valve and vacuum pump. The mixer is connected to a switching valve and a vacuum pump via a three-way tube.

### Summary of Invention

### Technical Problem

Embodiments provide a cooking device capable of processing food with a simple configuration while inhibiting oxidation of food and also inhibiting pressure inside a cooking container from rising excessively.

### Solution to Problem

To solve the above problem, it is provided a cooking device according to claim 1.

In the following description various embodiments of the disclosure are described.

### Brief Description of Drawings

FIG. 1 is an exploded sectional view schematically showing a mixer according to a first embodiment.
FIG. 2 is a sectional view schematically showing a combined state of a driving device, a cooking container, and a processing tool of the mixer in FIG. 1.
FIG. 3 is a sectional view schematically showing a combined state of the driving device, the cooking container, and a cover of the mixer in FIG. 1.
FIG. 4A is a perspective view showing a first valve included in the driving device of the mixer in FIG. 1.
FIG. 4B is a sectional view showing the first valve.
FIG. 5 is a sectional view showing a second valve included in the driving device of the mixer in FIG. 1.
FIG. 6 is a front view showing an operation panel included in the driving device of the mixer in FIG. 1.
FIG. 7 is a perspective view showing a cover-side check valve included in the cover of the mixer in FIG. 1.
FIG. 8 is a sectional view showing the cover-side check valve in FIG. 7.
FIG. 9 is a flow chart showing operation procedures controlled by a program stored in the driving device included in the mixer in FIG. 1.
FIG. 10 is a flow chart showing details of steps performing a pressure reducing operation in FIG. 9.
FIG. 11 is a flow chart showing details of steps performing a dwelling mixing operation in FIG. 9.
FIG. 12 is a flow chart showing operation procedures controlled by the program stored in the driving device included in the mixer in FIG. 1.
FIG. 13 is an exploded sectional view schematically showing a mixer according to a second embodiment.
FIG. 14 is an exploded sectional view schematically showing a mixer according to a third embodiment.
FIG. 15A is a sectional view showing a configuration allowing sealing of a housing included in the mixer in FIG. 14 to unseal in a state in which the housing is sealed.
FIG. 15B is a sectional view showing the configuration allowing sealing of the housing included in the mixer in FIG. 14 to unseal in a state in which the housing is unsealed.
FIG. 16 is a flow chart showing procedures controlled by the program stored in the driving device included in the mixer in FIG. 14.
FIG. 17 is an exploded sectional view schematically showing a mixer according to a fourth embodiment.
FIG. 18 is an exploded sectional view schematically showing a mixer according to a fifth embodiment.
FIG. 19 is a sectional view schematically showing a combined state of the driving device, the cooking container, and the cover of the mixer in FIG. 18.
FIG. 20 is a schematic sectional view showing a combined state of the driving device and the cooking container of the mixer in FIG. 18.
FIG. 21 is a sectional view schematically showing a state in which pressure is reduced again by a mixer according to a sixth embodiment.
FIG. 22 is a sectional view schematically showing a combined state of a driving unit, the cooking container, and a closing member of the mixer in FIG. 21.
FIG. 23 is a sectional view schematically showing a combined state of the driving unit, a storage container, the closing member, and the cover of the mixer in FIG. 21.
FIG. 24 is an exploded sectional view schematically showing a mixer according to a seventh embodiment together with another container.
FIG. 25 is an exploded sectional view schematically showing a mixer according to an eighth embodiment.
FIG. 26 is a sectional view showing a valve mechanism included in the mixer in FIG. 25.
FIG. 27 is a sectional view showing a manual pressure reducing device included in the mixer in FIG. 25.
FIG. 28 is an exploded sectional view schematically showing a mixer according to a ninth embodiment.
FIG. 29 is an exploded sectional view schematically showing a mixer according to a tenth embodiment.
FIGS. 30A to 30G are explanatory views showing procedures for handling a mixer according to an eleventh embodiment.
FIG. 31 is a sectional view schematically showing the mixer according to the eleventh embodiment in a state of FIG. 30C or 30D.
FIG. 32 is a sectional view schematically showing the mixer according to the eleventh embodiment in a state of FIG. 30F.
FIG. 33 is an exploded sectional view schematically showing a mixer according to a twelfth embodiment.
FIG. 34 is a sectional view schematically showing an upper portion of the mixer in FIG. 33 when viewed from a front direction.
FIG. 35A is a side view showing a liquid detection device included in the mixer in FIG. 33 in a non-detected state.
FIG. 35B is a side view showing the liquid detection device in a detected state.
FIG. 36 is an exploded sectional view schematically showing a mixer according to a thirteenth embodiment.
FIG. 37 is a sectional view schematically showing a condition of use of an inner cover included in the mixer in FIG. 36.
FIG. 38 is a plan view showing the inner cover included in the mixer in FIG. 36.
FIG. 39 is an exploded sectional view schematically showing a mixer according to a fourteenth embodiment.
FIG. 40 is a sectional view schematically showing the closing member included in the mixer in FIG. 39.
FIG. 41 is a sectional view showing an expansion/contraction portion included in an opening and closing member in FIG. 40.
FIG. 42 is a sectional view schematically showing a state in which juice is produced by the mixer in FIG. 39 by reducing pressure of food.
FIG. 43 is a sectional view schematically showing a state after juice is produced by the mixer in FIG. 39.
FIG. 44 is a sectional view schematically showing a state in which pressure inside the cooking container is restored to the atmospheric pressure to retrieve juice produced by the mixer in FIG. 39.
FIG. 45 is an exploded sectional view schematically showing a mixer according to a fifteenth embodiment.
FIG. 46 is a sectional view schematically showing a first stage of a cooking procedure using the mixer in FIG. 45.
FIG. 47 is a sectional view schematically showing a second stage of the cooking procedure using the mixer in FIG. 45.
FIG. 48 is a sectional view schematically showing a third stage of the cooking procedure using the mixer in FIG. 45.
FIG. 49 is a sectional view schematically showing a fourth stage of the cooking procedure using the mixer in FIG. 45.
FIG. 50 is an exploded sectional view schematically showing a mixer according to a sixteenth embodiment.
FIG. 51 is a diagram schematically illustrating the configuration of a pressure reducing device included in the mixer in FIG. 50.
FIG. 52 is a sectional view schematically showing a situation in which the pressure inside the cooking container is reduced by using the mixer in FIG. 50.
FIG. 53 is a sectional view schematically showing a situation of mixing by using the mixer in FIG. 50.
FIG. 54 is an exploded sectional view schematically showing a mixer according to a seventeenth embodiment.
FIG. 55 is an exploded sectional view schematically showing a mixer according to an eighteenth embodiment.
FIG. 56 is a sectional view schematically showing a condition of use of the mixer in FIG. 55.

### Description of Embodiments

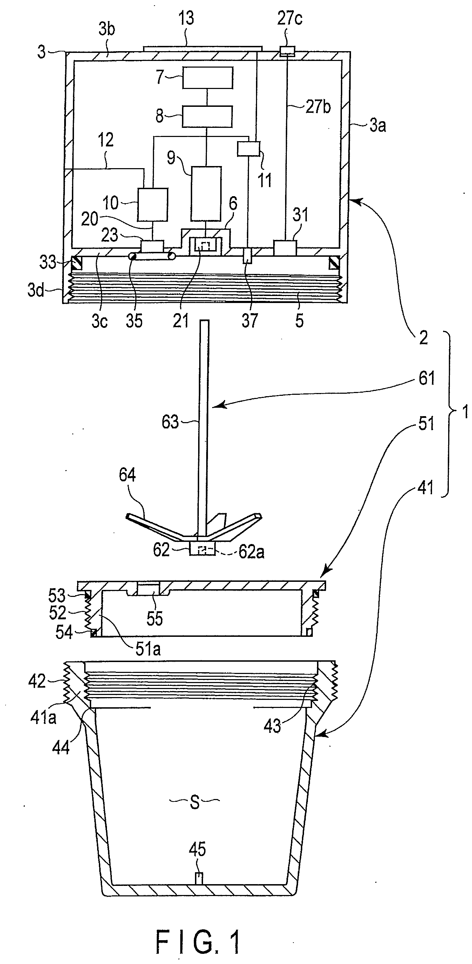

Hereinafter, a cooking device, for example, a mixer suitable for use in a common household according to the first embodiment will be described in detail with reference to FIGS. 1 to 12.

A mixer 1 shown in FIG. 1 includes a driving device 2, which also serves as a closing member, a cooking container 41, a cover 51, and a processing tool 61.

The driving device 2 includes a housing 3, an AC (alternating current)/DC (direct current) switching power supply 7, a DC (direct current)/DC (direct current) converter 8, a motor 9, a pressure reducing device 10, a control device 11, an operation panel 13, a tool linking member 21 functioning as a supporting portion of the processing tool 61, a check valve 23, a release valve 31, a first sealant 33, a seal ring 35, and a cover detection device 37.

The housing 3 is formed of, for example, a circumferential wall 3a in a cylindrical shape, an upper wall 3b, and a closed wall portion 3c. The upper wall 3b closes a top end of the circumferential wall 3a. The closed wall portion 3c partitions a lower portion of the circumferential wall 3a.

A lower circumferential wall portion 3d projecting downward from the closed wall portion 3c is made of the lower portion of the circumferential wall 3a. The bottom end of the lower circumferential wall portion 3d is open. A female screw portion 5 is formed on an inner circumferential surface of the lower circumferential wall portion 3d. The closed wall portion 3c has an upward height 6 in the center thereof. A space formed inside the height 6 is open downward.

The AC/DC switching power supply 7, the DC/DC converter 8, the motor 9, the pressure reducing device 10, the control device 11, the check valve 23, and a portion of the release valve 31 are contained in the housing 3.

A commercial AC power supply is supplied to the AC/DC switching power supply 7 via a power supply cord (not shown). AC/DC switching power supply 7 is a power converter. The switching power supply 7 obtains desired output power from input power by adjusting the ON/OFF time ratio (duty ratio) of a semiconductor switching device.

The DC/DC converter 8 converts a DC output voltage output from the AC/DC switching power supply 7 into other DC power. DC power obtained by the DC/DC converter 8 is supplied to the motor 9, the pressure reducing device 10, the control device 11, and the operation panel 13.

An electric motor, for example, a DC (direct current) motor is used as the motor 9. It is preferable to use a reverse-rotatable electric motor as the motor 9 and the electric motor can reverse the rotation of an output axis depending on the direction of the supplied current.

For example, an electric vacuum pump can suitably be used as the pressure reducing device 10. However, the pressure reducing device 10 is not limited to the vacuum pump and any pump capable of performing an exhaust operation can be used. The pressure reducing device 10 is driven by DC power supplied from the DC/DC converter 8. A exhaust pipe 12 is connected to a discharge port of the pressure reducing device 10 and the tip of the exhaust pipe 12 is open to the outside of the housing 3.

For example, a microcomputer can suitably be used as the control device 11, but instead of the microcomputer, a sequencer can also be used. The control device 11 made of a microcomputer includes an operation unit and a memory. The control device 11 controls driving of each of the motor 9 and the pressure reducing device 10 according to various programs stored in the memory and also controls various displays on the operation panel 13. Incidentally, the motor 9 and the pressure reducing device 10 of the mixer 1 can also be driven manually and in such a case, the control device 11 may be omitted.

The operation panel 13 is mounted on the driving device 2 such that the device can be operated from outside. More specifically, the operation panel 13 is mounted on, for example, the surface of the upper wall 3b of the housing 3. Incidentally, the operation panel 13 may also be mounted on the surface of the circumferential wall 3a of the housing 3.

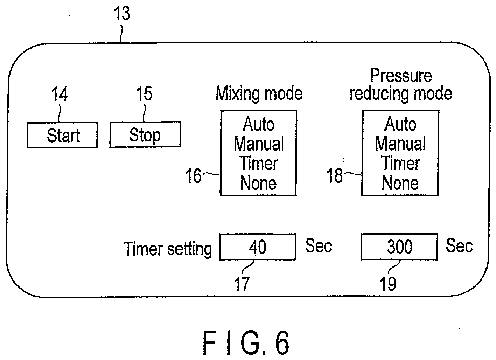

The operation panel 13 includes, as shown in FIG. 6, a start switch 14, a stop switch 15, a cooking mode display unit, more specifically, a mixing mode display unit 16, a cooking time display unit 17, a pressure reducing mode display unit 18, and a pressure reducing time display unit 19.

The start switch 14 and the stop switch 15 are, for example, touch switches and repeat ON/OFF each time an operator touches with a finger. When the start switch 14 is operated to turn on, an operation of cooking such as mixing or pressure reduction is started under the control of the control device 11. Then, when a predetermined cooking time passes, the stop switch 15 is automatically turned on or the stop switch 15 is manually operated to turn on and the cooking operation or pressure reducing operation is stopped under the control of the control device 11.

The mixing mode display unit 16 and the pressure reducing mode display unit 18 serve both as a touch switch and a display. Thus, display content of preset modes is selected and displayed in these display units under the control of the control device 11 each time the user touches.

As display content of the mixing mode display unit 16 and the pressure reducing mode display unit 18, for example, "Auto", "Manual", "Timer", and "None" are preset.

When "Auto" is displayed in the mixing mode display unit 16, an auto operation mode that performs a cooking operation (for example, a mixing operation) stored in advance in the memory of the control device 11 is selected based on an ON operation of the start switch 14. The cooking operation is thereby started and also the stop thereof is automatically accomplished. When "Manual" is displayed in the mixing mode display unit 16, the cooking operation is started and stopped according to touch operations of the start switch 14 and the stop switch 15. When "Timer" is displayed in the mixing mode display unit 16, the cooking operation is automatically started and stopped according to the cooking time (timer set time) displayed in the cooking time display unit 17. When "None" is displayed in the mixing mode display unit 16, the cooking mode is not executed.

When "Auto" is displayed in the pressure reducing mode display unit 18, an auto operation mode that performs a pressure reducing operation stored in advance in the memory of the control device 11 is selected based on an ON operation of the start switch 14. The pressure reducing operation is thereby started and also the stop thereof is automatically accomplished. When "Manual" is displayed in the pressure reducing mode display unit 18, the pressure reducing operation is started and stopped according to touch operations of the start switch 14 and the stop switch 15. When "Timer" is displayed in the pressure reducing mode display unit 18, the pressure reducing operation is automatically started and stopped according to the pressure reducing time displayed in the pressure reducing time display unit 19. When "None" is displayed in the pressure reducing mode display unit 18, the pressure reducing mode is not executed.

The set time is displayed in the cooking time display unit 17 and the pressure reducing time display unit 19 under the control of the control device 11. The cooking time such as a mixing time and the pressure reducing time are displayed in these display units. The displayed time increases each time the operator touches the cooking time display unit 17 or the pressure reducing time display unit 19. To cancel the time displayed in the cooking time display unit 17 or the pressure reducing time display unit 19, the stop switch 15 may be touched.

If the start switch 14 is touched after, for example, "Auto" being set to both of the mixing mode and the pressure reducing mode on the operation panel 13, the mixing operation and the pressure reducing operation stored in the memory of the control device 11 are performed under the control of the device. If the start switch 14 is touched after "None" being set to the mixing mode and "Manual" to the pressure reducing mode, only the pressure reducing operation is performed. The pressure reducing operation is stopped by touching the stop switch 15. Incidentally, the lineup of various switches and various display units on the operation panel 13 is not limited to the example of FIG. 6.

The tool linking member 21 is fixed to the tip (bottom end in FIG. 1) of the output axis of the motor 9. The tool linking member 21 is disposed outside the housing 3, for example, in an inner space of the height 6 included in the housing 3. An end of a tool axis 63 described later is connected to the tool linking member 21 such that the end can be inserted and removed in the up and down direction. The tool linking member 21 is indentation-engaged with the end of the tool axis 63 so that rotation of the output axis is transmitted to the tool axis while the end of the tool axis 63 is connected by insertion.

As a shaft coupling structure for the engagement, for example, the tool linking member 21 has an engaging groove (not shown) and the tool axis 63 has an engaging pin (not shown). The engaging groove crosses the center of the tool linking member 21 and is open over the bottom end and the circumferential surface of the tool linking member 21. The engaging pin is mounted on the tip of the tool axis 63 by passing through the tip in a direction perpendicular to the axial direction thereof. Accordingly, as the tip of the tool axis 63 is inserted into the tool linking member 21, the engaging pin is fitted into the engaging groove. Therefore, the rotation of the tool linking member 21 can be transmitted to the tool axis 63.

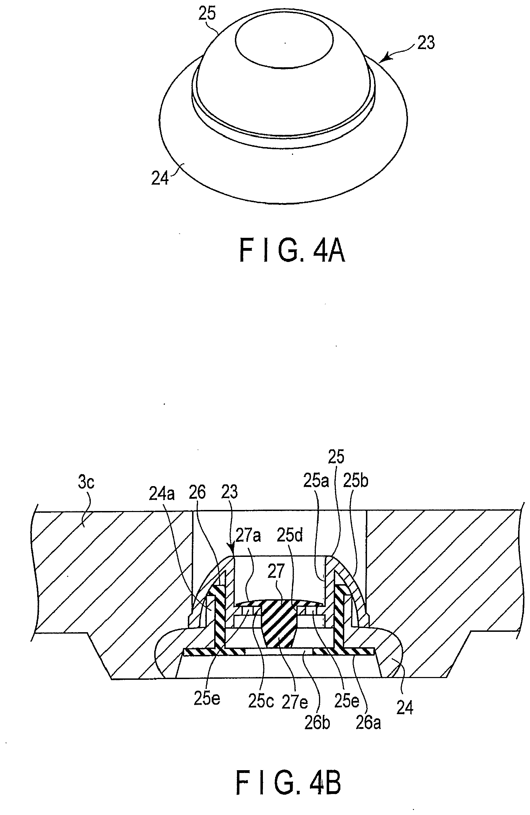

The check valve 23 is arranged on the inner side of the driving device 2, which is unreachable by the user. More specifically, the check valve 23 is mounted on, for example, the closed wall portion 3c of the driving device 2, which serves also as a closing member. The check valve 23 is used to allow the flow of air (exhaust) to the outside from inside the cooking container 41 described later and also to check the opposite flow of air. Thus, the check valve 23 includes, as shown in FIGS. 4A and 4B, a base 24, a valve housing 25, a sealant 26, and a valve body 27. The check valve 23 and the pressure reducing device 10 are connected by an intake pipe 20 that propagates a negative pressure generated by the pressure reducing device 10 to the check valve 23.

Both ends in the up and down direction of the base 24 are open. An upper portion of the base 24 is formed of a small-diameter cylindrical portion 24a having a smaller diameter than a bottom end open diameter. The valve housing 25 includes a housing wall 25a in a cylindrical shape, a cover circumferential wall 25b, and a valve seat wall 25c. The cover circumferential wall 25b continues by turning downward from the top end of the housing wall 25a and covers the outer circumference of the housing wall 25a by moving away from the wall. The valve seat wall 25c is provided so as to partition a lower portion of the housing wall 25a. The valve seat wall 25c has a through hole 25d in the center portion thereof and also a plurality of valve holes 25e around the through hole 25d.

The valve housing 25 is disposed in an upper portion of the base 24 in a form in which the small-diameter cylindrical portion 24a is placed between the housing wall 25a and the cover circumferential wall 25b. The sealant 26 is sandwiched between the small-diameter cylindrical portion 24a and the housing wall 25a to secure airtightness therebetween. The sealant 26 is formed from a flexible material such as rubber. The sealant 26 includes a plate portion 26a provided like horizontally partitioning the inside of the base 24. A through hole 26b is formed in the center portion of the plate portion 26a. A net or sponge (not shown) to prevent food from entering the intake pipe 20 during food processing is fitted to the through hole 26b.

The valve body 27 includes a valve plate portion 27a on the top end of a valve body base 27e. The valve body 27 is fixed to the valve housing 25 in a configuration in which the valve body base 27e is inserted into the through hole 25d of the valve seat wall 25c. The valve body base 27e is opposed to the through hole 26b. The valve plate portion 27a is formed by integrally projecting around the valve body base 27e. The valve plate portion 27a opens and closes the valve holes 25e from above. Thus, the valve plate portion 27a gradually becomes thinner as the circumference thereof is approached and is formed to be able to flexibly deform.

The check valve 23 is fixed to the closed wall portion 3c by directing the open bottom end thereof to the outside of the housing 3. An inner space of the housing wall 25a where the valve plate portion 27a is arranged is communicatively connected to an intake port (not shown) of the pressure reducing device 10 via the intake pipe 20 shown in FIGS. 1 to 3. Thus, when the pressure reducing device 10 is driven, intake pressure acts on the inner space from above. Accordingly, a circumferential portion of the valve plate portion 27a is lifted to open the valve holes 25e and in this state, the air outside the housing 3 is sucked through the check valve 23. When the pressure reducing device 10 is in a non-driven state, the valve plate portion 27a is in contact with the valve seat wall 25c from above to maintain a state in which the valve holes 25e are closed. That the pressure reducing device 10 is in a non-driven state refers to a case when the pressure reducing device 10 is in a stopped state or an accommodation space S of food described later confronted by the check valve 23 is in a pressure reduced state.

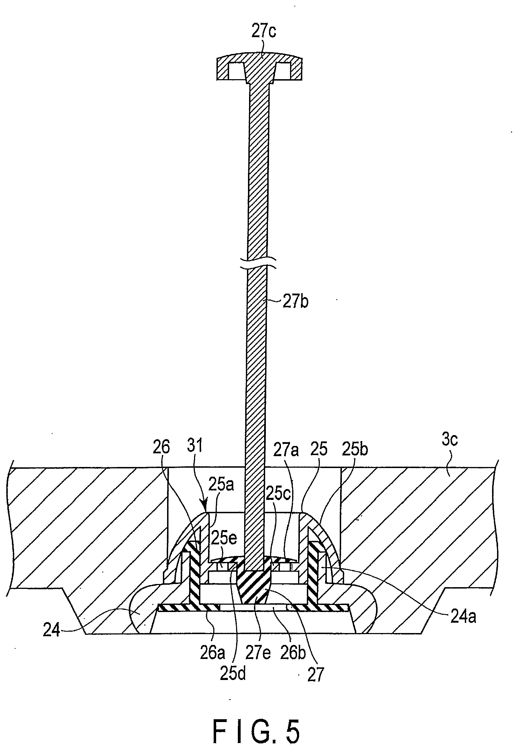

When the cooking container 41 described later is in a pressure reduced state, the release valve 31 maintains a closed state at the pressure inside the cooking container 41. In addition, the release valve 31 is opened to allow the inflow of air into the cooking container 41 based on release instructions. The release valve 31 is configured in the same manner as the check valve 23 except the configuration of the valve body and a partial arrangement of the valve body. Thus, the same reference signs are attached to the same components as those of the check valve 23 in FIG. 5 showing the configuration of the release valve 31 and the description thereof is omitted.

The valve body 27 of the release valve 31 includes the valve body base 27e inserted and fixed to the through hole 25d of the valve seat wall 25c, the valve plate portion 27a, a valve stem 27b, and a release button 27c. The valve stem 27b is linked to the valve body base 27e from above and extends upward. The release button 27c is formed on the top end of the valve stem 27b.

The release valve 31 is mounted on the housing 3 of the driving device 2 serving also as a closing member. More specifically, the release valve 31 is fixed to the closed wall portion 3c by directing the open bottom end thereof to the outside of the housing 3. In addition, the release button 27c is disposed on the upper wall 3b of the housing 3 so as to be pressable from above the housing 3.

Thus, with a pressing operation of the release button 27c, the valve body base 27e is pressed down via the valve stem 27b. Accompanying the pressing down, a circumferential portion of the valve plate portion 27a is lifted to open the valve holes 25e. Accordingly, the air inside the housing 3 can enter the accommodation space S through the valve holes 25e. Because the housing 3 is not sealed, the air enters the housing 3. In this state, therefore, the air is supplied to the accommodation space S through the release valve 31.

The release valve 31 shown in FIG. 5 is manually operated to release. Instead, however, the release valve 31 can be made to be opened/closed without relying on a manual operation. For example, a valve driving motor capable of reverse rotation to lift and lower the valve stem 27b and a valve driving mechanism including a switch that turns on/off the motor may be contained in the housing 3 so that the switch is controlled by the control device 11. Accordingly, the release valve 31 can be opened/closed by automatic control.

The first sealant 33 is used to seal the cooking container 41 described later and is formed from a flexible material such as rubber in a ring shape. The first sealant 33 is disposed along an angle formed between the closed wall portion 3c and the lower circumferential wall portion 3d of the housing 3. The first sealant 33 is preferably removable to make cleaning easier.

A ring made of rubber o the like is used as the seal ring 35. The seal ring 35 is mounted on the closed wall portion 3c from below to surround the open bottom end of the base 24 included in the check valve 23. The thickness of the seal ring 35 is thinner than that of the first sealant 33. Incidentally, instead of the driving device 2 serving also as a closing member, the seal ring 35 can also be arranged on the cover 51 by being protruded from the top surface thereof.

The cover detection device 37 is used to detect the cover 51. The cover detection device 37 is mounted on the closed wall portion 3c of the driving device 2 serving also as a closing member. The cover detection device 37 is configured by, for example, a push switch. Thus, when the cover 51 described later is mounted on the driving device 2, the cover detection device 37 is turned on by being pushed by the cover 51. The cover detection device 37 made of a push switch is restored to its OFF position when a pushing force thereon disappears. Thus, when the cover 51 is not mounted on the driving device 2, the cover detection device 37 is not pressed and maintains an OFF state.

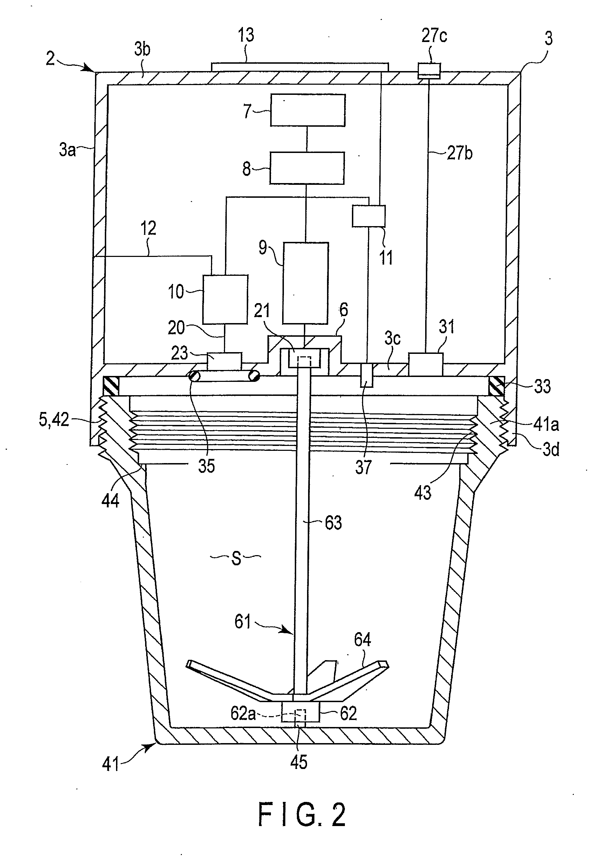

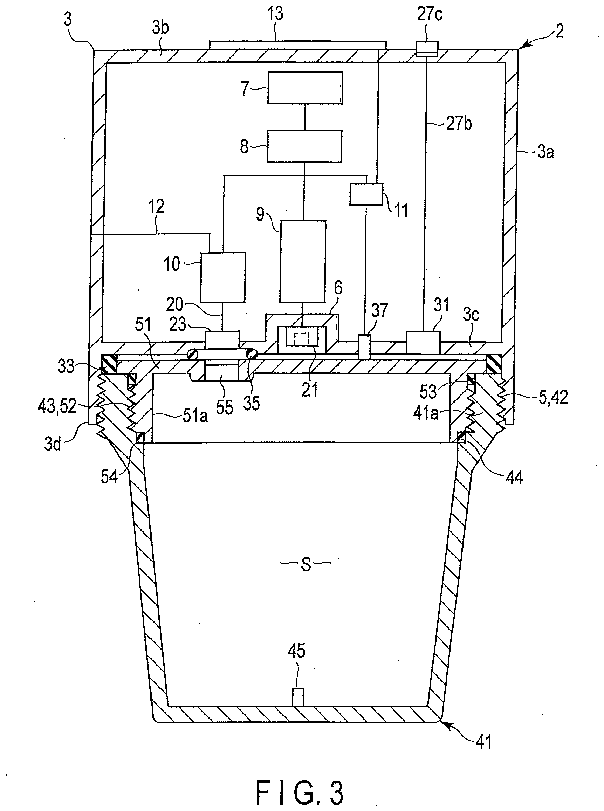

In FIGS. 2 and 3 of the drawings, the cover detection device 37 is depicted in a form of moving in the up and down direction to clarify the ON state and the OFF state of the push switch. However, when a switch configured to perform a switching operation by an included actuator being moved while in contact with the cover is adopted, the switch as a whole does not have to be moved. Further, the cover detection device 37 is not limited to the push switch and a proximity sensor, for example, an infrared distance sensor can also be used.

The cooking container 41 is formed by, as shown in FIG. 1 and so on, the accommodation space S of food being partitioned. The cooking container 41 is preferably formed from a material through which the internal accommodation space S can be seen, for example, a material such as glass or plastics, but the material is not limited to such examples. The top end of the cooking container 41 is open.

An outer screwing portion 42 is formed on the outer circumference of an opening edge 41a of the cooking container 41 and also an inner screwing portion 43 is formed on the inner circumference of the opening edge 41a. The outer screwing portion 42 is made of a male screw portion. The outer screwing portion 42 and the female screw portion 5 of the driving device 2 serving also as a closing member can freely removably be screwed.

The method of coupling is not limited to the screw-in method if coupling of the driving device 2 and the cooking container 41 can be secured and sealed. To simplify attachment and detachment, for example, a plurality of O rings made of rubber may be provided. That is, a plurality of O rings whose cross section in the radial direction forms an isosceles triangle is mounted on the outer circumference of the opening edge 41a in an axial direction of the opening edge 41a in a form in which a corner (top portion) sandwiched between a pair of equilaterals thereof is away from the opening edge 41a and the top portion of these O rings is closely brought into contact with the inner surface of the lower circumferential wall portion 3d to be able to secure coupling and sealing of the driving device 2 and the cooking container 41. In this case, the female screw portion on the inner circumference of the lower circumferential wall portion 3d may be omitted and also a member (not shown) to align a cover-side check valve 55 and the check valve 23 may separately be provided.

The inner screwing portion 43 is made of a female screw portion. The inner screwing portion 43 and a male screw portion 52 of the cover 51 described later can freely removably be screwed. Because food is stored or carried while the cover 51 is mounted, screwing is preferable as the method of connection to be able to reliably mount the cover 51.

A circular step 44 for receiving a sealant is formed on the inner circumference of the cooking container 41. The step 44 continues downward from the inner screwing portion 43. A supporting portion, for example, a fixing axis 45 projects upward in the center portion of the bottom wall of the cooking container 41. The fixing axis 45 freely rotatably supports the processing tool 61 described later. The fixing axis 45 is preferably formed from a material with high abrasion resistance, for example, a metal. Incidentally, the supporting portion may be a bearing hole open to the top surface in the center portion of the bottom wall of the cooking container 41.

The cover 51 is removably mounted on the upper portion of the cooking container 41 to open/close the accommodation space S. The diameter of the cover 51 is smaller than the inside diameter of the first sealant 33. The cover 51 has a cylindrical portion 51a whose diameter is slightly smaller than the outermost circumference thereof and the male screw portion 52 is formed on the outer circumference of the cylindrical portion 51a.

A second sealant 53 and a third sealant 54 are mounted on the cover 51. These sealants are O rings formed in a circular shape from a material such as rubber. The second sealant 53 is arranged on the outer circumference of the top end of the cylindrical portion 51a. The third sealant 54 is arranged on the outer circumference of the bottom end of the cylindrical portion 51a.

The second sealant 53 is sandwiched, as shown in FIG. 3, between the inner circumference of the top end of the opening edge 41a of the cooking container 41 and a circumferential portion of the cover 51 in a compressed state after the cover 51 being screwed into the cooking container 41 to maintain sealing therebetween. Similarly, the third sealant 54 is sandwiched, as shown in FIG. 3, between the step 44 of the cooking container 41 and the outer circumference of the bottom end of the cylindrical portion 51a in a compressed state after the cover 51 being screwed into the cooking container 41 to maintain sealing therebetween. Therefore, the cooking container 41 is sealed with these sealants while the cover 51 is first screwed into the cooking container 41.

If the mesh precision between the inner screwing portion 43 and the male screw portion 52 is high and sealing performance can be secured by these mesh portions, the second sealant 53 and the third sealant 54 can be omitted.

The cover-side check valve 55 is mounted on the cover 51. The cover-side check valve 55 is disposed immediately below the check valve 23 opposite thereto in the same direction while the cooking container 41 closed by the cover 51 is connected to the driving device 2.

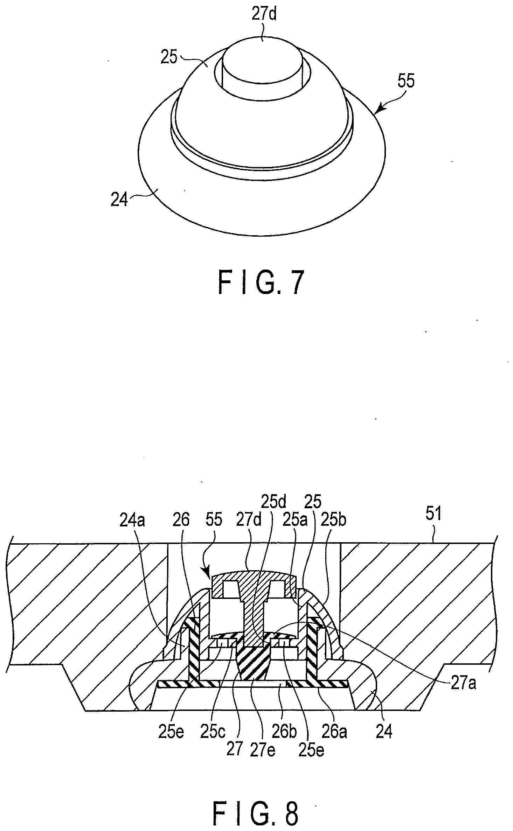

The cover-side check valve 55 is configured to include, as shown in FIGS. 7 and 8, a push button 27d for valve release and otherwise, the cover-side check valve is configured in the same manner as the check valve 23. Thus, the same reference signs are attached to the same components as those in the check valve 23 and the description thereof is omitted.

The push button 27d forms a portion of the valve body 27. That is, the push button 27d is linked to the valve body base 27e and projects upward. A push operation can manually be performed on the push button 27d. Accompanying the pressing down of the push button 27d, the circumferential portion of the valve plate portion 27a is lifted to open the valve holes 25e. Therefore, the air can be circulated in this state through the cover-side check valve 55. In other states, the valve holes 25e are closed by the valve plate portion 27a and the cover-side check valve 55 is retained in a state in which the circulation of air is blocked. When the cover-side check valve 55 is in a closed state, the push button 27d is preferably, as shown in FIG. 8, arranged lower than the top surface of the cover 51. The cover-side check valve 55 can thereby be inhibited from inadvertently being pushed and opened when the cooking container 41 closed by the cover 51 is carried or the like.

As shown in FIG. 1, the processing tool 61 includes, for example, a connection portion 62, the tool axis 63, and a tool element 64 linked to the bottom end of the tool axis 63.

The connection portion 62 has a connection hole 62a open to the undersurface thereof. The connection hole 62a can freely removably fitted to the fixing axis 45 from above. While the connection hole 62a is fitted to the fixing axis 45, a gap (see FIG. 2) is formed between the undersurface of the connection portion 62 and the top surface of the bottom wall of the cooking container 41. Accordingly, interference between the connection portion 62 and the bottom wall of the cooking container 41 while the processing tool 61 is rotated using the fixing axis 45 as a supporting point.

The tool axis 63 is linked to the upper side of the connection portion 62 and extends in a straight line in the up and down direction. The top end of the tool axis 63 is removably inserted into the tool linking member 21 from below and removed. Therefore, both of the upper and lower ends of the processing tool 61 are freely rotatably supported by the fixing axis 45 and the tool linking member 21. The tool element 64 is linked to the bottom end of the tool axis 63. The tool element 64 is a member to process food inside the cooking container 41 and, for example, a mixing blade suitable for crushing and kneading is used.

The procedure when the mixer 1 is used in auto mode will be described.

First, put the processing tool 61 into the cooking container 41 and fit the connection portion 62 of the processing tool 61 to the fixing axis 45 of the cooking container 41 from above. Then, put food cut to an appropriate size into the cooking container 41, that is, the accommodation space S and, in some cases, also a liquid or the like.

Next, mount the driving device 2 on the upper portion of the cooking container 41 to close the top end opening of the cooking container 41. The driving device 2 is mounted by screwing the female screw portion 5 thereof to the male screw portion 42 of the cooking container 41 from above. Accordingly, the closed wall portion 3c of the driving device 2 covers the top end opening of the cooking container 41 and the lower circumferential wall portion 3d covers the opening edge 41a of the cooking container 41 from outside.

In addition, the first sealant 33 is sandwiched between the closed wall portion 3c and the opening edge 41a to seal the accommodation space S of the cooking container 41. Further, with the screwing of the driving device 2, the top end of the tool axis 63 of the processing tool 61 positioned by the fixing axis 45 is inserted into the tool linking member 21 from the lower side thereof. Accordingly, the processing tool 61 is supported on both ends. FIG. 2 shows a state in which driving device 2 and the cooking container 41 are properly linked. At this point, the cover 51 is not used.

Then, select "Auto" as the display content for each of the mixing mode display unit 16 and the pressure reducing mode display unit 18 and turn on the start switch 14. The cover 51 is not used at this point and the cover detection device 37 is retained in an OFF state.

When the start switch 14 is turned on, the pressure reducing device 10 and the motor 9 are drive at the same time or with a time difference by the control device 11. The driving of these devices is automatically stopped after a preset time passes. If the stop switch 15 is turned on while being driven, the control device 11 stops the driving of the pressure reducing device 10 and the motor 9 at that time.

A negative pressure propagates to the check valve 23 due to an exhaust operation of the driven pressure reducing device 10 to open the check valve 23. Thus, the air in the cooking container 41 passes through the check valve 23 to be exhausted to the outside, reducing the pressure inside the cooking container 41. In other words, the oxygen concentration inside the cooking container 41 becomes lower than that of the air.

In such a pressure reduced state, the processing tool 61 is rotated by a rotating operation of the driven motor 9. Accordingly, food inside the cooking container 41 is crushed and mixed to produce juice.

Next, open the release valve 31 by performing a pressing operation of the release button 27c while and pressure reducing device 10 and the motor 9 are stopped. Accordingly, the air inside the housing 3, in other words, the air outside the accommodation space S is caused to flow into the cooking container 41 by passing through the release valve 31. Then, rotate the driving device 2 serving as a closing member and the cooking container 41 relatively in the loosening direction to separate these devices. In this case, as described above, the pressure reduced state inside the cooking container 41 is released and it is not difficult to do the separation work. Lastly, remove the processing tool 61 from the cooking container 41.

In such production of juice, it is preferable to control the mixing operation as described above by the control device 11. In this case, the motor 9 capable of reverse rotation is first caused to rotate in normal direction and opposite direction in a predetermined time after mixing is started. Alternatively, the motor 9 is caused to rotate in normal direction or opposite direction intermittently and next after the predetermined time passes, the motor 9 is caused to continuously rotate in normal direction. By controlling the rotation direction and the rotation time of the motor 9 by the control device 11 as described above, juice in which the grain size of crushed food is uniform, so-called smooth juice can be produced.

In this control, the control device 11 exercises control to switch the direction in which the current passed to the motor 9 flows to rotate the motor 9 in normal direction and opposite direction. Further, the control device 11 controls the rotation time of the motor 9 by exercising PWM control of the motor 9 to adjust the duty ratio of the voltage applied to the motor 9. More specifically, an intermittent operation of the motor 9 can be performed by applying the voltage to the motor 9 after decreasing the duty ratio. A continuous operation of the motor 9 can be performed by applying the voltage to the motor 9 after increasing the duty ratio.

With the driving of the motor 9 being controlled as described above by the control device 11, large food is coarsely cut in the initial stage and then, grains of food gradually become finer and more uniform so that smooth juice can be finished.

Juice or the like produced inside the cooking container 41 according to the above procedure can directly be provided for drinking using the cooking container 41 as a drink container or can be poured into another storage container to be stored at low temperature in a refrigerator or the like. When juice inside the cooking container 41 is directly drunk by using the cooking container as a drinking container, as described above, the processing tool 61 is already detached and thus, the processing tool 61 is not a hindrance when drinking juice.

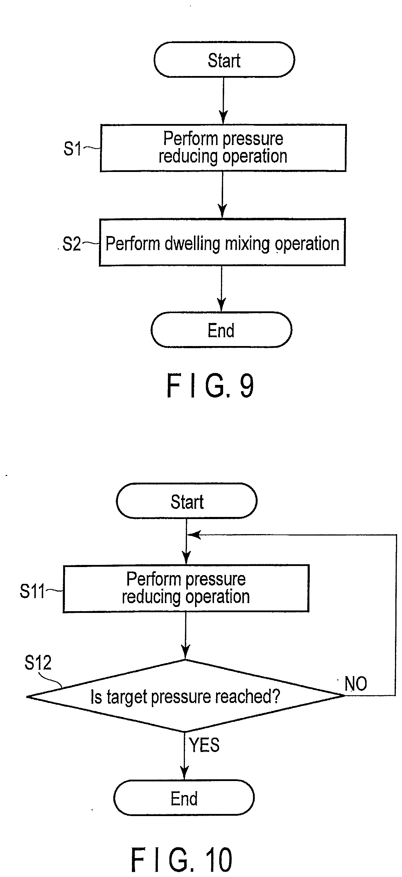

In the auto mode and other modes, the control device 11 of the mixer 1 exercises the control according to the flow chart shown in FIG. 9 after the start switch 14 being turned on. That is, the control device causes the motor to perform the pressure reducing operation in step S1 and then the dwelling mixing operation in step S2.

The pressure reducing operation is performed by continuously driving the pressure reducing device 10 until the pressure inside the cooking container 41 reaches the target pressure. That is, following the flow chart shown in FIG. 10, the control device 11 causes the motor to perform the pressure reducing operation in step S11 and then determines whether the target pressure is reached in step S12. If the determination in step 12 is NO, the control device returns to step S11 and the determination in step S12 is repeated until the pressure inside the cooking container 41 reaches the target pressure.

The target pressure is desirably less than 0.7 atmospheric pressure from the viewpoint of preventing discoloration of food. Because food comes into contact with oxygen during mixing, the lower the target pressure, the more oxidation can be inhibited. It is difficult to realize a complete vacuum and thus, the most desirable target pressure is 0.11 atmospheric pressure.

A pressure sensor may be used as a unit configured to acquire the target pressure, but it is desirable to use the following means that does not use the pressure sensor to acquire the target pressure. If, for example, the volume of the cooking container 41 and the pressure reducing rate by the pressure reducing device 10 are known, the following control may be applied. That is, the memory of the control device 11 is caused to store the specified time operated from conditions of the known volume and pressure reducing rate. Next, when the time of pressure reducing operation reaches the specified time, the pressure inside the cooking container 41 is determined to have fallen to the target pressure and the driving of the pressure reducing device 10 is stopped.

The dwelling mixing operation refers to an operation that causes mixing while retaining the pressure inside the cooking container 41 at the target pressure. A case in which sealing of a connection portion between the driving device 2 and the cooking container 41 may be insufficient can be considered depending of the degree of screwing of the driving device 2 serving also as a closing member. In such a state, after the pressure reducing operation is performed in step S1, the pressure inside the cooking container 41 returns to the atmospheric pressure. Thus, the target pressure can be maintained by performing a dwelling mixing operation to periodically reduce the pressure inside the cooking container 41.

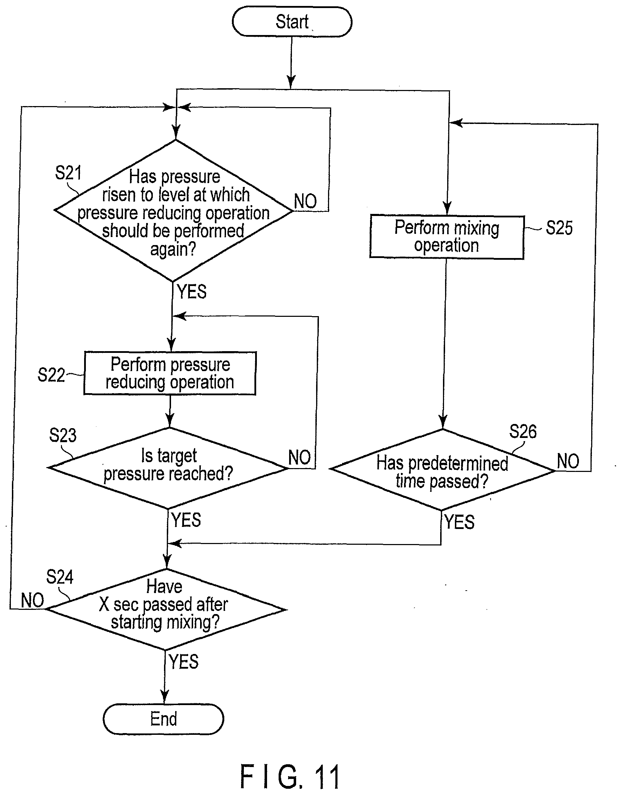

The dwelling mixing operation is performed by the control device 11 according to the flow chart shown in FIG. 11. The flow chart shown in FIG. 11 includes a first control system and a second control system performed in parallel. The first control system includes steps S21 to 24 and the second control system includes steps S25 and S26.

Step S21 determines whether the pressure inside the cooking container 41 has risen to a preset pressure at which a pressure reducing operation should be performed again. This determination is repeated until YES in the determination is obtained. When the determination in step S21 becomes YES, the next step S22 drives the pressure reducing device 10 to perform the pressure reducing operation. The next step S23 determines whether the pressure inside the cooking container 41 has reached the target pressure. If the determination is NO, the driving of the pressure reducing device 10 is continued by returning to step S22. When the determination in step S23 becomes YES, the next step 24 determines whether a predetermined time (X s) has passed after starting mixing. If the determination in this step 24 is NO, the dwelling mixing operation is continued by returning to step S21. When the determination in step 24 becomes YES, the dwelling mixing operation is terminated.

In the second control system, first, step S25 performs a mixing operation by driving the motor 9. The next step S26 determines whether a predetermined time has passed after starting the mixing operation. If the determination in step S26 is NO, the driving of the motor 9 is continued by returning to step S25. If the determination in step S26 is NO, the next step is step S24 of the first control system.

The determination in step S21 or step S23 in the dwelling mixing operation can be made by using a pressure sensor. However, like the acquisition of the target pressure as described in step S12, it is preferable to make such a determination based on an elapsed time from the termination time of step S1 in which the pressure reducing operation is performed. If performance of airtightness (sealing) by the first sealant 33 is high and sealing performance can sufficiently be maintained, steps S21 to S24 executing the flow chart in FIG. 11 can be omitted.

As described above, the mixer 1 in the above configuration processes, for example, mixes food accommodated in the accommodation space S by rotation of the processing tool 61 in a state in which the air in the accommodation space S partitioned by the cooking container 41 is exhausted and pressure-reduced. Because food is mixed in a low oxygen concentration realized by the pressure reduction, oxidation of mixed food by the air can be inhibited. Accordingly, discoloration of mixed food by oxidation is less likely to occur and also the flavor of food is less likely to deteriorate and therefore, high-quality juice can be produced.

The mixer 1 can process hot food such as soup put into the cooking container 41 such that smoothness of the food is added by mixing the food by rotating the processing tool 61. In this case, the cooking container 41 and the driving device 2 can be inhibited from inadvertently separating. That is, when hot food is mixed, if the amount of air mixed therewith is large, the mixed air expands due to heat of the food. Due to the expansion, pressure acts as a force to separate the cooking container 41 and the driving device 2. However, as described above, the mixer 1 mixes under a reduced pressure and the amount of air mixed with hot food is small and also the accompanying expansion pressure decreases. Therefore, an occurrence of the above malfunction can be avoided.

The mixer 1 in the above configuration is configured to exhaust the air inside the cooking container 41 by the pressure reducing device 10 to make the oxygen concentration inside the cooking container 41 low. Thus, there is no need to replace the air inside the cooking container 41 with a gas containing no oxygen such as a nitrogen gas. Accordingly, a gas separator that generates a gas containing no oxygen and components such as piping and a pump to feed a separated gas are not needed. Therefore, the configuration of the mixer 1 is made simpler. In addition, a gas containing no oxygen is not supplied and thus, the flavor of food to be mixed is not affected by a supplied gas like when the above gas is mixed. Further, because a gas containing no oxygen is not supplied, the pressure inside the cooking container does not rise to a high pressure and when hot food is cooked as described above, the pressure inside the cooking container is not raised.

The mixer 1 performs a mixing operation after the pressure inside the cooking container 41 (accommodation space S) is reduced and thus, cooking can reliably be done in a low oxygen concentration, which is preferable. However, cooking can also be done by starting a mixing operation (cooking operation) simultaneously with a pressure reducing operation.

Next, the procedure for retaining juice produced by mixing under reduced pressure again by using the cooking container 41 and the cover 51 when the juice is carried or preserved for a long period of time will be described.

Separate the driving device 2 and the cooking container 41 having produced juice according to the aforementioned procedure and also detach the processing tool 61 and then, screw the cover 51 into the inner screwing portion 43 of the cooking container 41 to close the top end opening of the cooking container 41 with the cover 51. Then, screw the driving device 2 into the outer screwing portion 42 of the cooking container 41 again for connection. Accordingly, the driving device 2 serving also as a closing member is arranged by covering the cover 51.

With the driving device 2 and the cooking container 41 being properly connected, the cover-side check valve 55 mounted on the cover 51 is arranged immediately below the mounted check valve 23 of the driving device 2. In addition, the top surface of the cover 51 is brought into close contact with the undersurface of the seal ring 35 and the check valve 23 and the cover-side check valve 55 are communicatively connected. The path of the connection is the inner space of the seal ring 35 and is sealed with the seal ring 35 from outside. Further, the cover detection device 37 mounted on the driving device 2 is turned on by being pushed up by the cover 51 and a detection signal thereof can be supplied to the control device 11. A state in which the driving device 2, the cooking container 41, and the cover 51 are properly combined as described above is shown in FIG. 3.

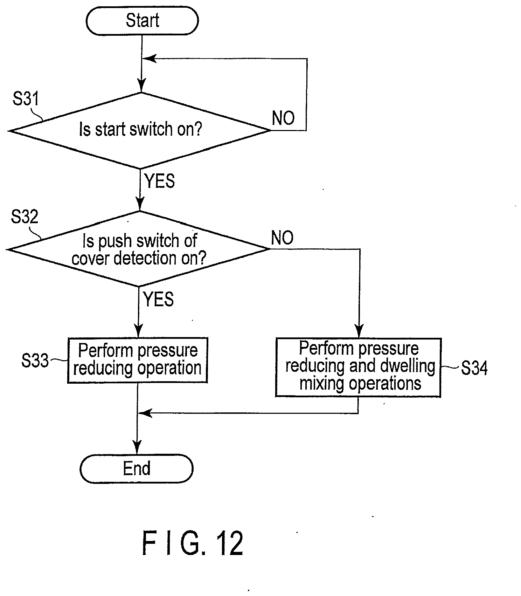

The operation of the mixer 1 in this state is controlled according to the flow chart shown in FIG. 12 to reduce the pressure inside the cooking container 41 again.

That is, the control device 11 first makes the determination in step S31, that is, determines whether the start switch 14 is turned on. This determination is repeated until YES in the determination is obtained. When the determination in step S31 becomes YES, in the next step S32, the control device 11 determines whether the push switch forming the cover detection device 37 is turned on.

The cover detection device 37 is already turned on in the state of FIG. 3 and so the control device 11 performs the next step S33. That is, a pressure reducing operation in which the pressure reducing device 10 is driven for a fixed time is performed by the control device 11. At this point, the motor 9 is not driven. Accordingly, a negative pressure propagates to the check valve 23 due to an exhaust operation of the pressure reducing device 10 and so the check valve 23 is opened. In addition, accompanying the opening of the check valve 23, the negative pressure also acts on the cover-side check valve 55 and the cover-side check valve 55 is also opened. Thus, the air in the cooking container 41 is exhausted via the cover-side check valve 55 and the check valve 23, reducing the pressure inside the cooking container 41.

When stored, food has a smaller area in contact with oxygen than when mixing and oxidation is less likely. From the viewpoint of saturated vapor pressure, generally lower pressure makes evaporation of moisture more likely and the taste of food preserved for a long period of time may be dried out. Thus, it is preferable to set the target pressure higher than when mixing. If, for example, the target pressure when mixing is 0.1 atmospheric pressure, the pressure for preservation may be set to 0.5 atmospheric pressure.

After the pressure reducing operation terminates, the driving device 2 is manually detached from the cooking container 41. Regardless of the removal, the cover 51 maintains the cooking container 41 in a sealed state. Furthermore, a negative pressure inside the cooking container 41 acts on the cover-side check valve 55 mounted on the cover 51 and so the valve plate portion 27a of the cover-side check valve 55 closes the valve holes 25e. That is, because the cover-side check valve 55 is closed, the cooking container 41 is maintained in a pressure reduced state.

Therefore, if the cooking container 41 maintained in a pressure reduced state by the cover 51 is preserved in a refrigerator or the like as a storage container, juice can be kept in a state of low oxygen and low temperature. Accordingly, juice can be preserved in a fresh state for a long period of time.

Instead of preserving in a refrigerator, the cooking container 41 maintained in a pressure reduced state by the cover 51 can be carried. In this case, the cover-side check valve 55 is arranged such that the top surface thereof is lower than the push button 27d of the cover 51. Thus, the push button 27d is inhibited from being pressed inadvertently while being carried so that the storage environment of juice can be maintained in a pressure reduced state (low oxygen state).

To drink juice in the carried cooking container 41, the user may press the push button 27d with a finger immediately before drinking. Accordingly, the cover 51 is opened and outside air can be caused to flow into the cooking container 41 through the cover-side check valve 55. Thus, the cover 51 can easily be detached by a manual operation from the cooking container 41 without being prevented by the pressure inside the cooking container 41. Then, juice inside the cooking container 41 can be drunk.

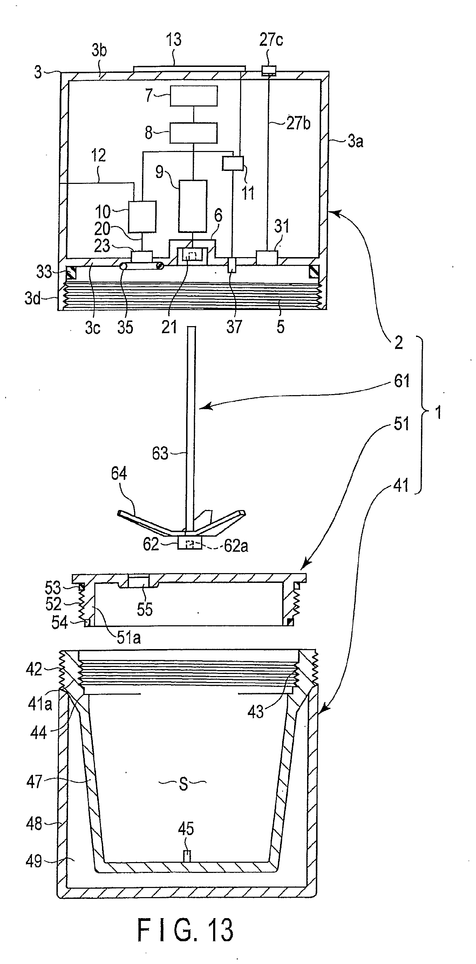

FIG. 13 shows the second embodiment. The second embodiment is different from the first embodiment in the configuration described below and the other configuration is the same as that of the first embodiment. Thus, the same reference signs are attached to components achieving the same functions as those in the first embodiment or similar functions and the description thereof is omitted.

The second embodiment is different from the first embodiment in that a cooking container 41 has a thermal insulating function and is configured to increase heat retaining properties of juice or the like produced inside the cooking container 41.

The cooking container 41 has the thermal insulating function and is formed in a double structure of a container body 47 and an outer container body 48. The other configuration of the container body 47 is the same as that of the cooking container 41 described in the first embodiment.

The outer container body 48 covers other portions than an opening edge 41a of the container body 47 from outside by forming a heat insulating space 49 between the portions and the outer container body. The heat insulating space 49 is preferably a vacuum. Incidentally, the container body 47 and the outer container body 48 may be formed from opaque materials that do not allow to see through. In addition, the outer container body 48 is preferably made of a material whose thermal conductivity is lower than that of the container body 47.

In the second embodiment including the cooking container 41 as described above, juice in a pressure reduced state can be stored outside a refrigerator or carried by thermally insulating so that juice in a pressure reduced state is not warmed.

A mixer 1 in the second embodiment has the same configuration as that in the first embodiment including a configuration that is not shown except the configuration described above. Therefore, also in the second embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. The cooking container 41 having the thermal insulating function included in the mixer 1 according to the second embodiment can also be applied to each embodiment described below.

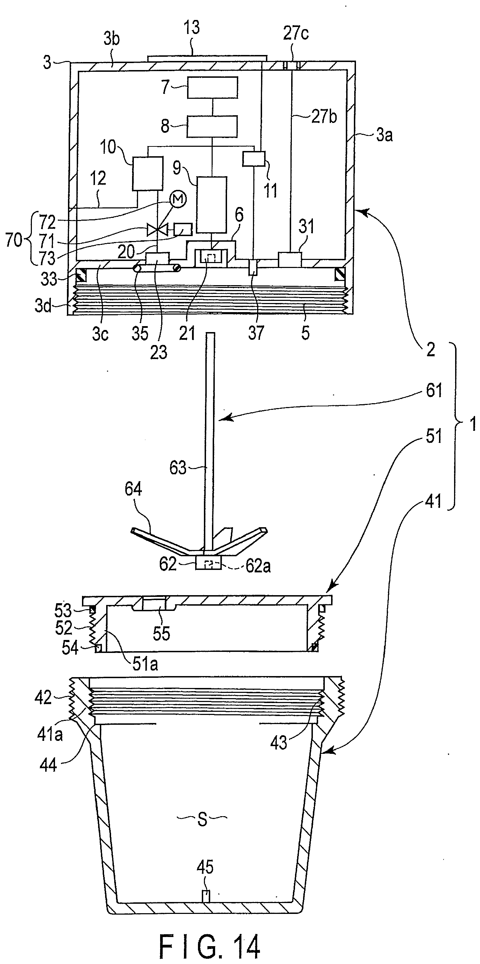

FIGS. 14 to 16 show the third embodiment. The third embodiment is different from the first embodiment in the configuration described below and the other configuration is the same as that of the first embodiment. Thus, the same reference signs are attached to components achieving the same functions as those in the first embodiment or similar functions and the description thereof is omitted.

The third embodiment is different from the first embodiment in that a configuration capable of reducing the pressure inside a driving device 2 containing a motor 9 and a pressure reducing device 10 is included.

More specifically, in a mixer 1 according to the third embodiment, a housing 3 of the driving device 2 is formed in a sealed structure. An exhaust device 70 is disposed inside the housing 3. The exhaust device 70 is configured to exhaust the air inside the housing 3 by using preferably the pressure reducing device 10. More specifically, as shown in FIG. 14, the exhaust device 70 includes, for example, a switching valve 71, a valve driving motor 72, and a valve-side check valve 73.

The switching valve 71 is mounted on an intake pipe 20 connecting a suction port of the pressure reducing device 10 and a check valve 23. The switching valve 71 is switched to a first state or a second state by the valve driving motor 72. The valve-side check valve 73 is connected to the switching valve 71. The valve-side check valve 73 is opened when an intake pressure (negative pressure) of the pressure reducing device 10 acts thereon and otherwise, retains a closed state. The configuration of the valve-side check valve 73 is the same as that of the check valve 23 shown in FIGS. 4A and 4B.

When the switching valve 71 is switched to the first state, the valve-side check valve 73 retains a closed state so that the pressure reducing device 10 and the inside of the housing 3 change to an unconnected state and also the pressure reducing device 10 and the check valve 23 are retained in a connected state. When the switching valve 71 is switched to the second state, the valve-side check valve 73 retains an open state so that the pressure reducing device 10 and the inside of the housing 3 are communicatively connected and also the pressure reducing device 10 and the check valve 23 are retained in a unconnected state.

Thus, if the valve-side check valve 73 is switched to the first state while the pressure reducing device 10 operates, the air inside the cooking container 41 is exhausted to create a pressure reduced state. If the valve-side check valve 73 is switched to the second state while the pressure reducing device 10 operates, the air in the housing 3 is exhausted so that the pressure inside the housing 3 can be caused to reduce.

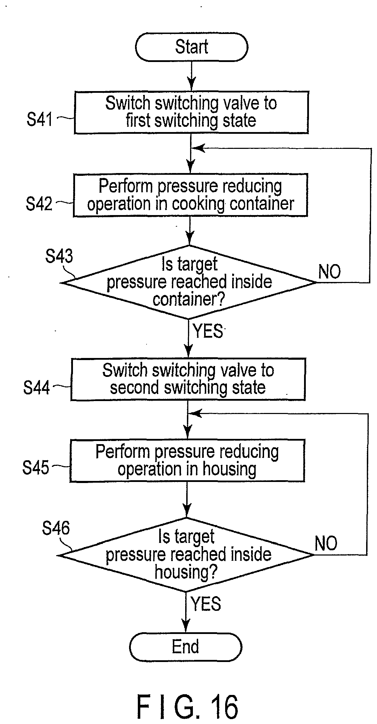

The mixer 1 including the exhaust device 70 as described above is controlled according to the flow chart shown in FIG. 16.

That is, step S41 is first performed. That is, the control device 11 switches the switching valve 71 to the first state by normally rotating the valve driving motor 72. Accordingly, the pressure reducing device 10 and the inside of the cooking container 41 are communicatively connected. Next, the control device 11 performs step S42, thereby operating the pressure reducing device 10 to reduce the pressure inside the cooking container 41.

Then, the control device 11 makes determination in step S43. That is, a determination whether the pressure inside the cooking container 41 has fallen to reach the target pressure is made. If the determination is NO, the control device returns to step S42. If the determination in step S43 is YES, the control device 11 performs the next step S44. The valve driving motor 72 is rotated in opposite direction by this step 44 to switch the switching valve 71 to the second state. Therefore, the pressure reducing device 10 and the housing 3 are communicatively connected.

The control device 11 performs the next step S45 in this state and thus, the pressure reducing device 10 is driven again to exhaust the air in the housing 3, leading to a pressure reduced state. Next, the control device 11 performs step S46. That is, the control device determines whether the pressure inside the housing 3 has reached the target pressure. If the determination is NO, the control device returns to step S45. If the determination in step S46 is YES, the pressure reducing operation of the housing 3 terminates. Then, the operation changes to a dwelling mixing operation in which the motor 9 is driven.

Because the mixing operation (cooking operation) is performed while the housing 3 is in a pressure reduced state as described above, the propagation of a driving sound of the motor 9 to the outside of the housing 3 is inhibited and quietness can be achieved.

The timing of reducing the pressure inside the housing 3 may be the reversed order of the third embodiment, that is, the pressure inside the housing 3 may be reduced prior to the pressure reduction of the cooking container 41. While the pressure reducing device 10 is used to reduce the pressure inside the housing 3 in the third embodiment, a dedicated housing pressure reducing device (exhaust pump) to reduce the pressure inside the housing 3 may be provided separately from the pressure reducing device 10. In this case, the suction port of the exhaust pump is communicatively connected to the inside of the housing and the discharge port of the exhaust pump is communicatively connected to the outside of the housing 3. Therefore, by driving the exhaust pump when appropriate to reduce the pressure inside the housing 3, the propagation of the driving sound generated by the motor 9 to the surroundings can be inhibited to reduce noise.

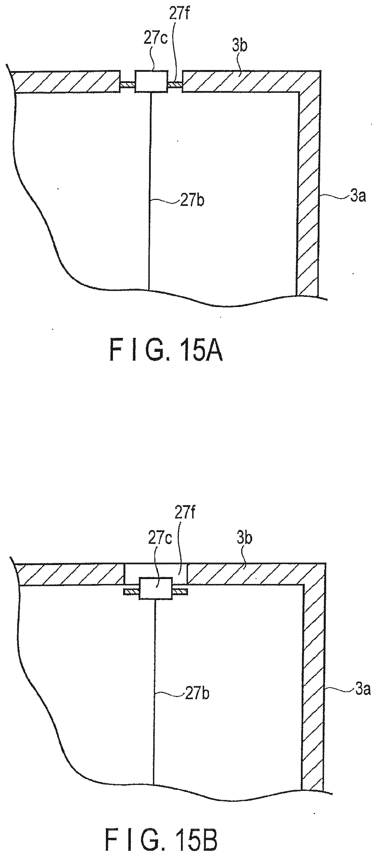

To cancel the pressure reduction of the sealed housing 3, as shown in FIGS. 15A and 15B, the surroundings of a release button 27c of a release valve 31 are sealed with a seal 27f mounted on the release button 27c. When, as shown in FIG. 15A, the release button 27c is not pressed, a state in which the housing 3 is sealed with the seal 27f is retained. When, as shown in FIG. 15A, the release button 27c is pressed, a space is generated between the housing 3 and the seal 27f. Thus, the air outside the housing 3 is taken into the housing 3 and the pressure reduced state of the housing 3 can be canceled. At the same time, the pressure reduced state inside the accommodation space S can also be canceled.

The mixer 1 in the third embodiment has the same configuration as that in the first embodiment including a configuration that is not shown except the configuration described above. Therefore, also in the third embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. The exhaust device 70 included in the mixer 1 according to the third embodiment can also be applied to each of the fifth to seventh embodiments described below.

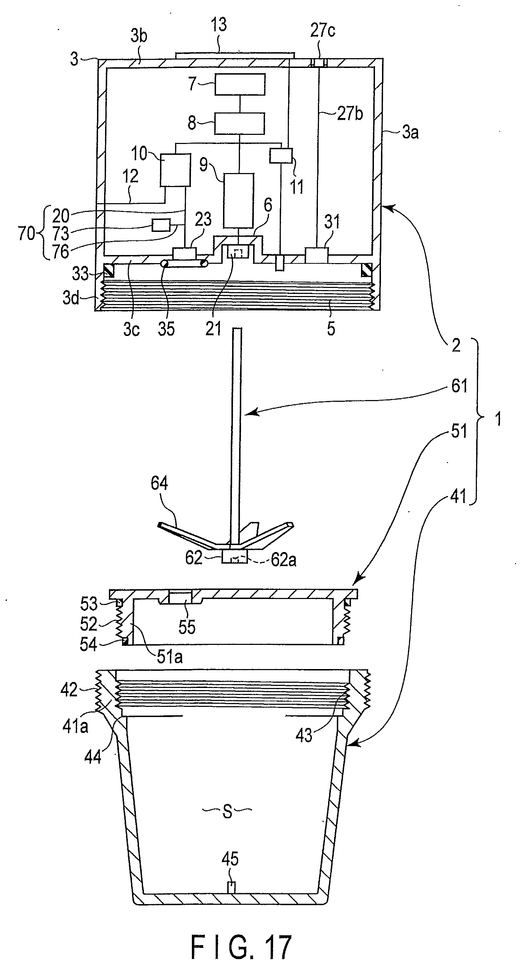

While the third embodiment is suitable for reducing the pressure inside the housing 3 with precision, the fourth embodiment shown in FIG. 17 may be carried out if the precision of pressure reduction does not matter.

The fourth embodiment is different from the first embodiment in the configuration described below and the other configuration is the same as that of the first embodiment. Thus, the same reference signs are attached to components achieving the same functions as those in the first embodiment or similar functions and the description thereof is omitted. Incidentally, the third embodiment is referred to when necessary.

The fourth embodiment is different from the first embodiment in that a configuration capable of reducing the pressure inside a driving device 2 containing a motor 9 and a pressure reducing device 10 is included.

More specifically, in a mixer 1 according to the fourth embodiment, a housing 3 of the driving device 2 is formed in a sealed structure. A sealed state of the housing 3 can be canceled by pressing a release button 27c of a release valve 31. The configuration thereof is the same as that in the third embodiment described by using FIGS. 15A and 15B.

As shown in FIG. 17, an exhaust device 70 is disposed inside the housing 3. The exhaust device 70 is formed of an intake pipe 20, a branch pipe 76 branched therefrom, and a valve-side check valve 73. The intake pipe 20 connects the pressure reducing device 10 and a check valve 23. The valve-side check valve 73 is mounted on the branch pipe 76. The configuration of the valve-side check valve 73 is the same as that of the valve-side check valve described in the first embodiment and thus, the description thereof is omitted.

The diameter of the intake pipe 20 and that of the branch pipe 76 are different such that the pressure inside the housing 3 and that inside the cooking container 41 are the same at substantially the same time. These pipe diameters are set in accordance with the volume of the housing 3 and that of the cooking container 41. Because the pipe diameters are different, the speed of exhausting the air in the housing 3 and the speed of exhausting the air in the cooking container 41 are different when the pressure reducing device 10 operates.

In the fourth embodiment, therefore, with the driving of the pressure reducing device 10, the pressure inside the housing 3 and the pressure inside the cooking container 41 can be reduced at the same time and also the pressure inside the cooking container 41 and the pressure inside the housing 3 can be reduced to a predetermined pressure at the same time when the pressure reduction terminates Therefore, the propagation of a driving sound generated by the motor 9 arranged in the housing 3 to the surroundings is inhibited in a mixing operation performed next so that noise can be reduced.

The exhaust device 70 adopted in the fourth embodiment does not need a switching valve and a valve driving motor when compared with the exhaust device used in the third embodiment. Thus, the present embodiment has advantages of a simple configuration and low cost.

The mixer 1 in the fourth embodiment has the same configuration as that in the first embodiment including a configuration that is not shown except the configuration described above. Therefore, also in the fourth embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. The exhaust device 70 included in the mixer 1 according to the fourth embodiment can also be applied to each of the fifth to seventh embodiments described below.

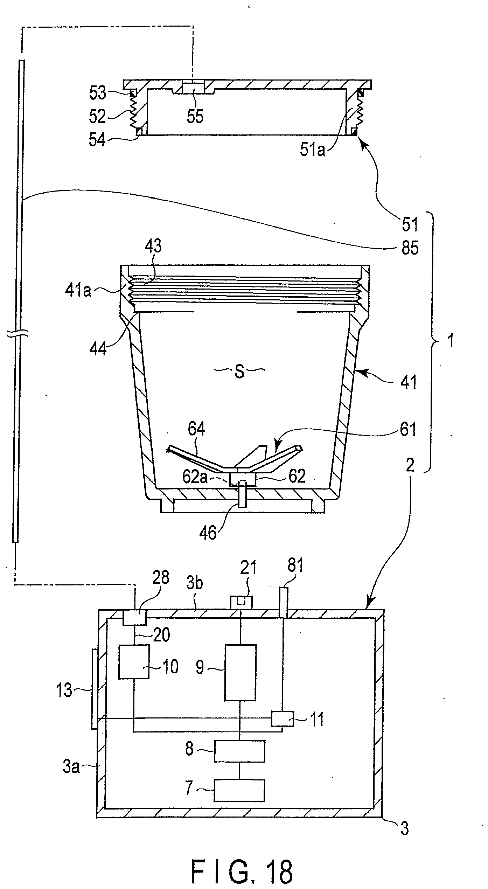

FIGS. 18 to 20 show the fifth embodiment. The fifth embodiment is different from the first embodiment in the configuration described below and the other configuration is the same as that of the first embodiment. Thus, the same reference signs are attached to components achieving the same functions as those in the first embodiment or similar functions and the description thereof is omitted. Further, the cooking container 41 described in the second embodiment is referred to when necessary.

In the fifth embodiment, a driving device 2 does not serve as a closing member and is arranged below a cooking container 41. In other words, the fifth embodiment is different from the first embodiment in that the cooking container 41 is freely removably placed on the driving device 2.

More specifically, in the fifth embodiment, a housing 3 of the driving device 2 is configured as a stand on which the cooking container 41 is placed. In the housing 3, a circumferential wall in which a male screw portion included in a housing in the first embodiment is omitted. Accordingly, a closed wall portion included in the housing in the first embodiment is used as a bottom wall. In the fifth embodiment, a tool linking member 21 linked to a motor 9 is disposed on an upper wall 3b of the housing 3. In addition, in the fifth embodiment, an operation panel 13 is mounted on a front surface of a circumferential wall 3a of the housing 3.

Further in the fifth embodiment, instead of a cover detection device used in the first embodiment, a container detection device 81 similar to the cover detection device is mounted on the upper wall 3b of the housing 3 by projecting upward therefrom. The container detection device 81 is configured by, for example, a push switch.

When the cooking container 41 is placed on the driving device 2, the push switch is turned on by the container. When the cooking container 41 is not placed on the driving device 2, the push switch is not pressed and maintains an OFF state.

In FIGS. 18 to 20 of the drawings, the container detection device 81 is depicted in a form of moving in the up and down direction to clarify the ON state and the OFF state of the push switch. However, when a switch configured to perform a switching operation by an included actuator being moved while in contact with the cover is used, the switch as a whole does not have to be moved. Further, the container detection device 81 is not limited to the push switch and a proximity sensor, for example, an infrared distance sensor can also be used.

A fitting 28 is mounted on, for example, the upper wall 3b of the housing 3.

A rotation axis 46 serving also as a supporting portion of a processing tool 61 is freely rotatably mounted on the cooking container 41 used in the fifth embodiment by passing through the center portion of the bottom wall of the cooking container 41. The lower portion of the rotation axis 46 is removably connected to a tool linking member 21 by being inserted thereinto from above. While the rotation axis 46 and the tool linking member 21 are connected, the rotation axis 46 is rotated with the rotation of the tool linking member 21.

The upper portion of the rotation axis 46 is configured in the same manner as a top end of a tool axis 63 included in the processing tool 61 described in the first embodiment. A connection portion 62 of the processing tool 61 is removably connected to the rotation axis 46 from above. The processing tool 61 in the fifth embodiment is configured not to include a tool axis described in the first embodiment.

In the fifth embodiment, only an inner screwing portion 43 is formed on an opening edge 41a of the cooking container 41 and an outer screwing portion described in the first embodiment is not formed on the outer circumference of the opening edge 41a.

In the fifth embodiment, a cover 51 also serves as a closing member. The cover 51 opens/closes a top end opening of the cooking container 41 and also retains the cooking container 41 in a sealed state while the top end opening is closed. The configuration of the cover 51 and various components and valves mounted thereon is the same as in the first embodiment.

Further, a mixer 1 according to the fifth embodiment includes intake piping 85. The intake piping 85 is made of a tube or the like, but may be hard. One end of the intake piping 85 can be attached/detached to/from the fitting 28 from outside the housing 3. To reliably retain the connection, it is preferable to provide a lock mechanism that is manually operated for the fitting 28. Similarly, the other end of the intake piping 85 can be attached/detached to/from a cover-side check valve 55 mounted on the cover 51 from above. To reliably retain the connection, it is preferable to provide a lock mechanism that is manually operated for the cover-side check valve 55.

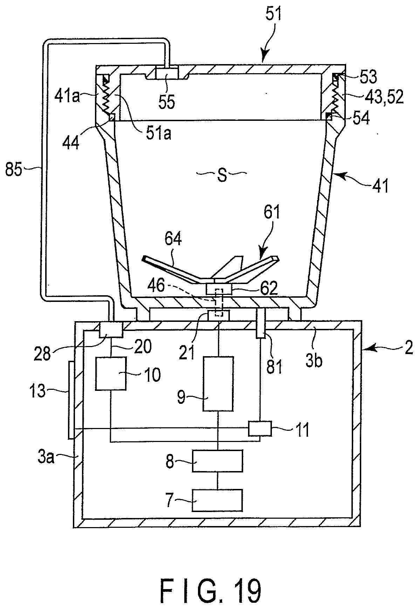

A state in which the mixer 1 according to the fifth embodiment is used is shown in FIG. 19. In this state, the cooking container 41 in which food is accommodated is placed on the driving device 2 and the cover 51 is mounted on the cooking container 41 to seal the accommodation space S. In addition, both ends of the intake piping 85 are each connected to the check valve 23 and the cover-side check valve 55 to communicatively connect to these valves.

In this state, the container detection device 81 is pressed by the cooking container 41 to detect the container. Thus, the control device 11 is in a position to be able to operate the motor 9 and a pressure reducing device 10. Further, the tool linking member 21 and the connection portion 62 of the processing tool 61 are in a connected state via the rotation axis 46 of the cooking container 41.

Therefore, a negative pressure formed accompanying the driving of the pressure reducing device 10 propagates to the cooking container 41 via the intake piping 85. Thus, the air inside the cooking container 41 is exhausted and the pressure inside the cooking container 41 is reduced, leading to a low oxygen state.

When the motor 9 is driven in this state, the processing tool 61 inside the cooking container 41 is rotated via the tool linking member 21 and the rotation axis 46. Accordingly, food is mixed. The control of the pressure reducing operation and the mixing operation is exercised according to various flow charts described in the first embodiment.

After food is mixed under a reduced pressure inside the cooking container 41 in this manner, the intake piping 85 is removed and also the cooking container 41 is detached from the driving device 2. The detached cooking container 41 can be used as a storage container in a state in which the reduced pressure inside the accommodation space S is maintained. To take out food (juice) inside the cooking container 41, the cover 51 may be detached from the cooking container 41 after pressing the cover-side check valve 55 with a hand to be released.

In addition to the cooking container 41, the mixer 1 according to the fifth embodiment further includes a storage container 87. The configuration of the storage container 87 is the same as that of the cooking container 41 described in the second embodiment except that the rotation axis 46 is not included. Juice inside the cooking container 41 is poured into the storage container 87 and the juice is placed in a low oxygen environment according to the following procedure before being stored or carried.

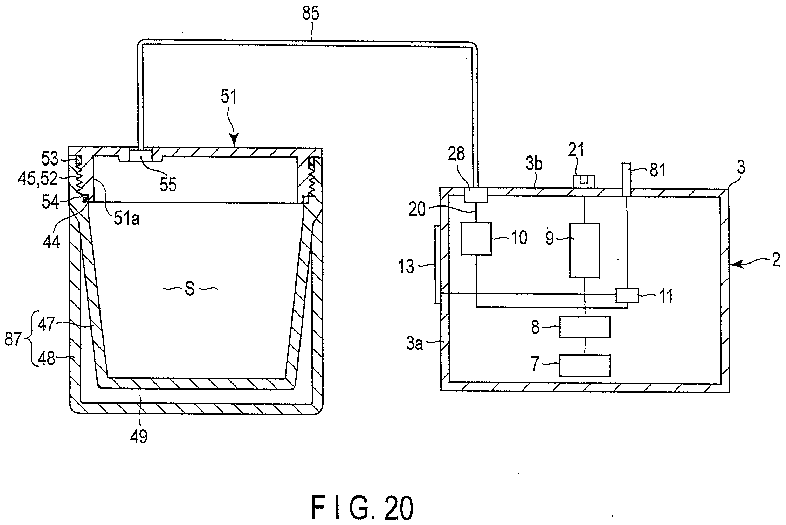

That is, screw the cover 51 detached from the cooking container 41 into the storage container 87, thereby sealing the storage container 87. Instead of the cover 51, a cover dedicated to the storage container 87 and mounted with the cover-side check valve 55 can be used. After the cooking container 41 is sealed, connect both ends of the intake piping 85 each to the check valve 23 and the cover-side check valve 55. This state is shown in FIG. 20. Then, after selecting the "manual" mode by touching and operating a pressure reducing mode display unit 18 of an operation panel 13 shown in FIG. 6, operate a start switch 14 and after an appropriate time passes, operate a stop switch 15. The pressure reducing device 10 is thereby operated during the appropriate time and so the pressure inside the storage container 87 sealed with the cover 51 can be reduced. If the auto mode is selected for the pressure reduction, the container detection device 81 is in a non-detected state and thus, the motor 9 is not driven and a pressure reducing operation by the driving of the pressure reducing device 10 is performed.

The procedure for using the cooking container 41 detached from the driving device 2 directly as a storage container and placing juice inside in a low oxygen environment is as follows. First, mount the cover 51 on the cooking container 41 again and connect both ends of the intake piping 85 each to the check valve 23 and the cover-side check valve 55. Next, touch and operate the pressure reducing mode display unit 18 of the operation panel 13 shown in FIG. 6 to select the "manual" mode. Then, operate the start switch 14 and after an appropriate time, operate the stop switch 15.

The pressure reducing device 10 is thereby operated during the appropriate time and so the pressure inside the cooking container 41 sealed with the cover 51 can be reduced. If the auto mode is selected for the pressure reduction, the container detection device 81 is not in a detected state and thus, the motor 9 is not driven and a pressure reducing operation by the driving of the pressure reducing device 10 is performed.

The cooking container 41 whose pressure is reduced as described above can be stored at low temperature in a refrigerator or the like or the cooking container 41 can be directly carried and used as a drinking container.

The mixer 1 in the fifth embodiment has the same configuration as that in the first embodiment including a configuration that is not shown except the configuration described above. Therefore, also in the fifth embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. The storage container 87 included in the mixer 1 according to the fifth embodiment as an accessory can also be applied to each of other embodiments.

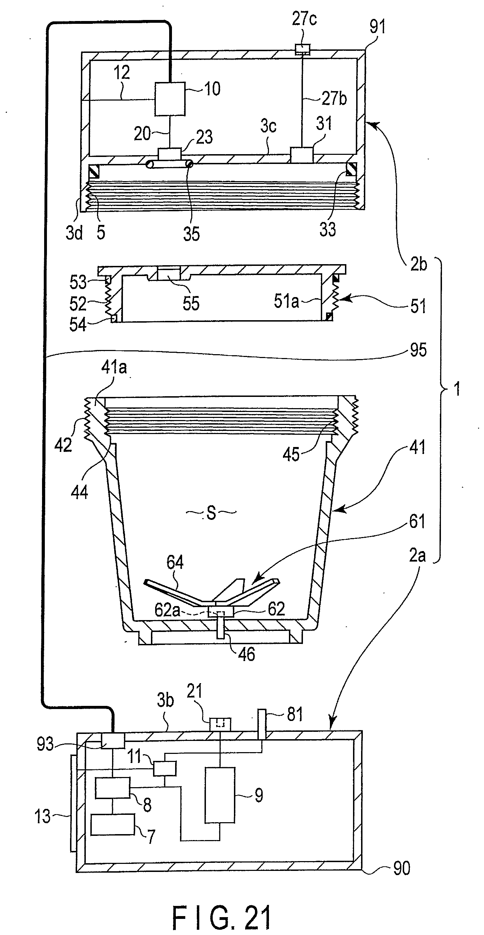

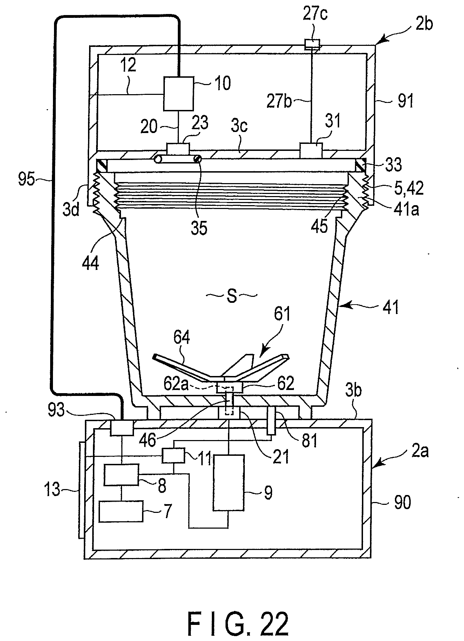

FIGS. 21 to 23 show the sixth embodiment. The sixth embodiment is different from the fifth embodiment in the configuration described below and the other configuration is the same as that of the fifth embodiment. Thus, the same reference signs are attached to components achieving the same functions as those in the fifth embodiment or similar functions and the description thereof is omitted. Further, the first embodiment is referred to when necessary.

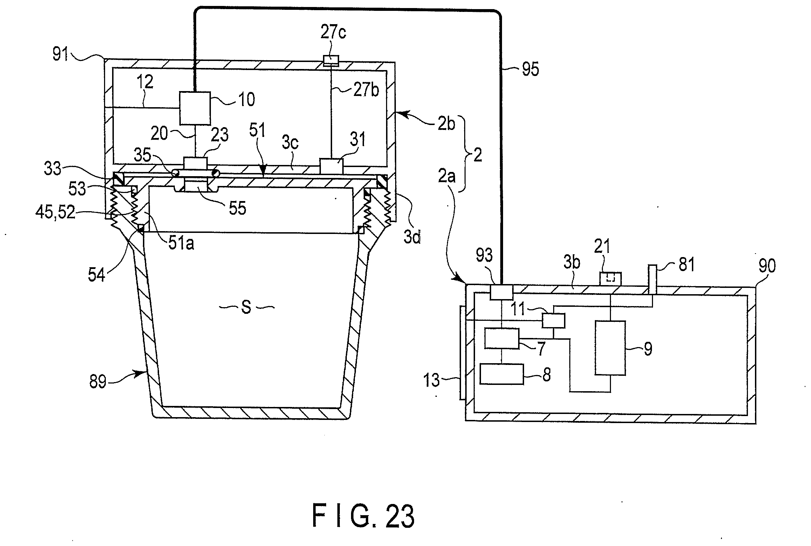

In the sixth embodiment, a driving device 2 is formed of, as shown in FIG. 23, a driving unit 2a and a closing member 2b.

The driving unit 2a is configured by removing a pressure reducing device 10 and a check valve 23 from a driving device described in the fifth embodiment. The pressure reducing device 10 and the check valve 23 that are removed are contained in a housing 91 of the closing member 2b. A cooking container 41 is freely removably placed on the driving unit 2a. Attachment/detachment of the cooking container 41 is detected by a container detection device 81. In addition, a rotating force is transmitted to a processing tool 61 in the cooking container 41 via a tool linking member 21 and a rotation axis 46.

The closing member 2b is configured by removing an AC/DC switching power supply 7, a DC/DC converter 8, a motor 9, a control device 11, an operation panel 13, and the tool linking member 21 from a driving device described in the first embodiment. Thus, the closing member 2b includes lower circumferential wall portion 3d where a closed wall portion 3c and a female screw portion 5 are formed. In addition, a release valve 31, a first sealant 33, and a seal ring 35 are mounted on the closing member 2b. Incidentally, a cover detection device used in the first embodiment is not mounted on the closing member 2b. Each of the removed components is disposed in a housing 90 of the driving unit 2a.

The cooking container 41 used in the sixth embodiment has, like a cooking container described in the first embodiment, an outer screwing portion 42 formed on the outer circumference of an opening edge 41a thereof. Thus, the closing member 2b can be attached/detached by closing a top end opening of the cooking container 41. In addition, while a cover 51 is mounted on the cooking container 41, the closing member 2b is mounted by covering the cover 51 and also covering the upper portion of the cooking container 41.

Further in the sixth embodiment, a connecting device 95 that electrically connects the control device 11 of the driving unit 2a and the pressure reducing device 10 of the closing member 2b is included. The connecting device 95 is formed as, for example, an electric cable forming a path of power and electric signals. The electric cable has an adequate length and both ends thereof are directly fixed to the control device 11 and the pressure reducing device 10. An electric connector 96 may be arranged in at least one of the housing 90 of the driving unit 2a and the housing 91 of the closing member 2b so that the electric cable is removably connected to the electric connector 96. The electric connection device may use radio communication, instead of wires.

A state in which a mixer 1 according to the sixth embodiment is used is shown in FIG. 21. In this state, the cooking container 41 in which food is accommodated is placed on the driving device 2 and the closing member 2b as a cover is mounted on the cooking container 41 to seal the accommodation space S. In the same state, the control device 11 of the driving unit 2a and the pressure reducing device 10 of the closing member 2b are electrically connected by the connecting device 95.

In addition, the tool linking member 21 and a connection portion 62 of the processing tool 61 are in a connected state via the rotation axis 46 of the cooking container 41. Further, the container detection device 81 has detected the cooking container 41 after being pressed by the container and thus, the control device 11 is in a position to be able to operate the motor 9 and the pressure reducing device 10.

Therefore, when the pressure reducing device 10 in the closing member 2b arranged on the upper side of the cooking container 41 is driven, a negative pressure generated accompanying the driving propagates into the cooking container 41 through the check valve 23. Accordingly, the air inside the cooking container 41 is exhausted and the pressure inside the cooking container 41 is reduced. Under this reduced pressure, the motor 9 in the driving unit 2a on which the cooking container 41 is placed is driven. Accordingly, the processing tool 61 inside the cooking container 41 is rotated via the tool linking member 21 and the rotation axis 46 and so food is mixed and juice produced. The control of the pressure reducing operation and the mixing operation is exercised according to various flow charts described in the first embodiment.

After food is mixed under a reduced pressure inside the cooking container 41 in this manner, the cooking container 41 is detached from the driving unit 2a. Accordingly, juice can be stored in a pressure reduced state with the processing tool 61 attached.

To take out food, a release button 27c of a release valve 31 is first pressed to open the release valve 31 to restore the pressure inside the cooking container 41 to the atmospheric pressure and then the closing member 2b is detached from the cooking container 41. In this state, juice inside the cooking container 41 can be poured into a storage container 89 to be stored or carried.

When juice is stored or carried, as described above, the juice inside the container can be placed in a low oxygen environment according to the following procedure. The storage container 89 is configured to exclude a rotation axis and a supporting portion at the bottom thereof and the other configuration is the same as that of the cooking container 41 described in the first embodiment.

First, screw the cover 51 into the inner side of the opening edge 41a of the cooking container 41 to seal the cooking container 41. Then, screw the closing member 2b to fit to the outer side of the opening edge 41a to mount the closing member in a state of covering the cover 51. In this state, connect the pressure reducing device 10 inside the closing member 2b and the control device 11 inside the driving unit 2a by the electric connecting device 95 such as an electric wire with insulating coating. This state is shown in FIG. 23. In FIG. 21 to 23, reference numeral 93 shows a wire connector. The wire connector 93 is fixed to the housing 90 and a terminal of the connecting device 95 is removably connected thereto.

After selecting the "manual" mode by touching and operating a pressure reducing mode display unit 18 of the operation panel 13 shown in FIG. 6, operate a start switch 14 and after an appropriate time passes, operate a stop switch 15. The pressure reducing device 10 is thereby operated during the appropriate time and so the pressure inside the cooking container 41 sealed with the cover 51 can be reduced. If the auto mode is selected for the pressure reduction, the container detection device 81 is in a non-detected state and thus, the motor 9 is not driven, but a pressure reducing operation by the driving of the pressure reducing device 10 is performed. After the pressure reducing operation is stopped after a fixed time, detach the closing member 2b from the cooking container 41. Accordingly, the cooking container 41 sealed with the cover 51 can be used as a storage container or a carrying container.

Incidentally, the cooking container 41 detached from the driving device 2 can directly be used as a storage container to place juice inside in a low oxygen environment. In this case, the auto made is selected for reducing the pressure inside the cooking container 41 sealed with the cover 51. However, the container detection device 81 is not in a state of having detected the cooking container and thus, the motor 9 is not driven and a pressure reducing operation by the driving of the pressure reducing device 10 is performed. Thus, the cooking container 41 whose pressure is reduced can be stored at low temperature in a refrigerator or the like or the cooking container 41 can be directly carried and used as a drinking container.

The mixer 1 in the sixth embodiment has the same configuration as that in the fifth embodiment including a configuration that is not shown except the configuration described above. Therefore, also in the sixth embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

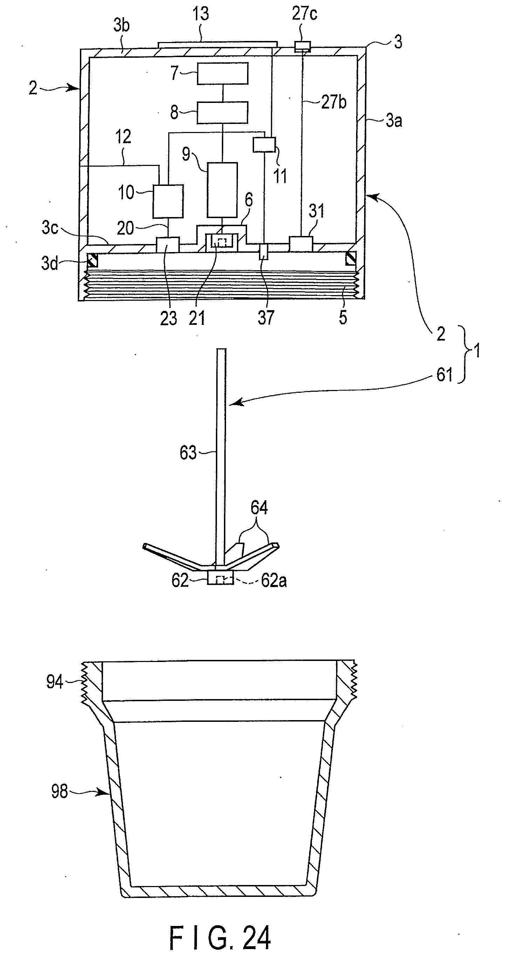

FIG. 24 shows the seventh embodiment. The seventh embodiment is different from the first embodiment in the configuration described below and the other configuration is the same as that of the seventh embodiment. Thus, the same reference signs are attached to components achieving the same functions as those in the first embodiment or similar functions and the description thereof is omitted.

The seventh embodiment has a configuration obtained by omitting a seal ring, a cooking container and components mounted thereon, and a cover and components mounted thereon from a configuration in the first embodiment. In addition, a processing tool 61 is removably connected to a tool linking member 21 by being inserted thereinto from below. However, a retaining device (not shown) that retains the processing tool 61 to prevent the processing tool from falling due to its self weight in this connected state is provided.

In the seventh embodiment, another container 98 is used as a cooking container, instead of a dedicated container like in the embodiments described above. The other container 98 is a container having a size and an outer screwing portion 99 such that a driving device 2 serving also as a closing member can removably be screwed and mounted on the outer circumference of an opening edge thereof from above. No component corresponding to the fixed axis is provided at the bottom of the other container 98. The other container 98 may be provided by a manufacturing and sales company of a mixer 1 or a different company from the manufacturing and sales company.

The mixer 1 in the seventh embodiment has the same configuration as that in the first embodiment including a configuration that is not shown except the configuration described above. Therefore, also in the seventh embodiment, as in the first embodiment described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. If the seventh embodiment is carried out by mounting a rod-like arm that can be gripped by the user on a housing 3 of the driving device 2 serving also as a closing member, the device can be used like a hand mixer.

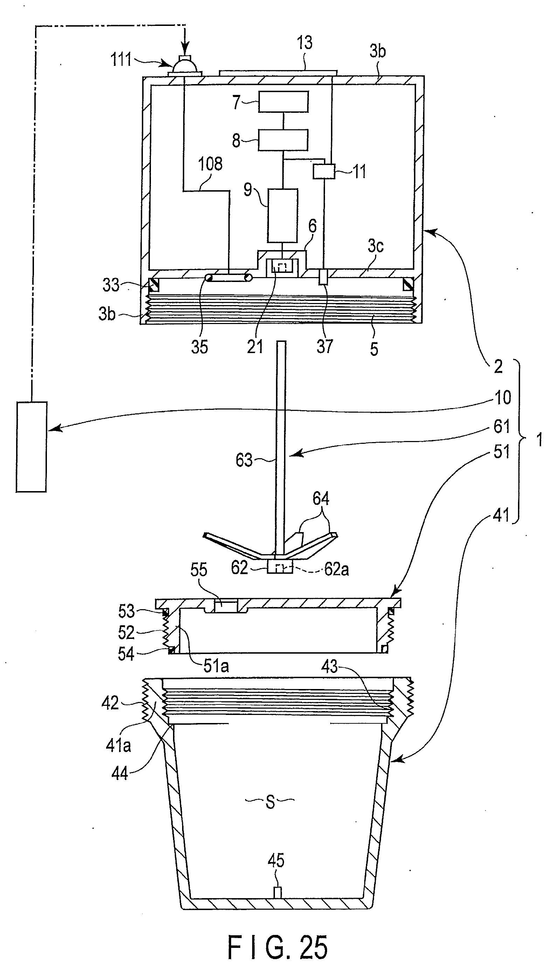

FIGS. 25 to 27 show the eighth embodiment. The eighth embodiment is different from the first embodiment in the configuration described below and the other configuration is the same as that of the first embodiment. Thus, the same reference signs are attached to components achieving the same functions as those in the first embodiment or similar functions and the description thereof is omitted.

A mixer 1 according to the eighth embodiment is different from a mixer according to the first embodiment in the following configuration. Instead of arranging a pressure reducing device 10 inside a housing 3 of a driving device 2 serving also as a closing member, the pressure reducing device 10 is provided outside the housing 3. In addition, instead of omitting a release valve, a valve stem, and a release button included in a mixer in the first embodiment, an intake pipe, and a check valve, a valve device 111 and air piping 108 communicatively connecting the valve device 111 and an accommodation space S are included.

More specifically, a vacuum pump is used as the pressure reducing device 10. The pressure reducing device 10 is to be provided as a set with a cooking unit from the manufacturing and sales company of the mixer 1, but instead, separately from the cooking unit, the pressure reducing device may be provided by a different company from the manufacturing and sales company of the mixer 1. The cooking unit includes the driving device 2 containing a motor 9, a cooking container 41, a cover 51, and a processing tool 61.

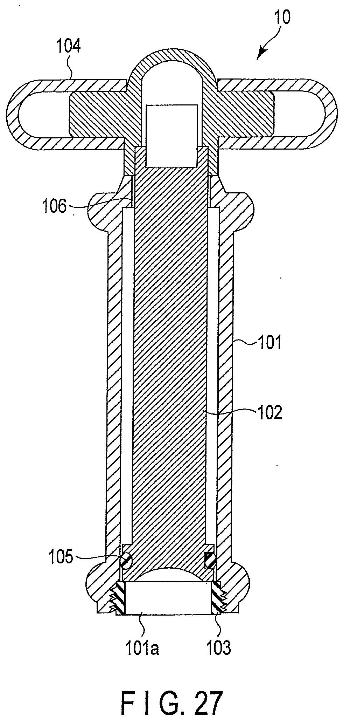

An example of the pressure reducing device 10 is shown in FIG. 27. The pressure reducing device 10 is, for example, a manual vacuum pump that performs a pumping operation by a piston 102 inserted into a cylinder 101 being manually reciprocated in an axial direction.

One end of the cylinder 101 is used as an inlet port 101a and the inner circumferential surface of the inlet port 101a is covered with an elastically deformable seal ring 103. A handle 104 for push pull operation is linked to an end of the piston 102 projected from the other end of the cylinder 101. A piston ring 105 that is slidably in contact with the inner surface of the cylinder 101 is attached to the outer circumference of the end of the piston 102 arranged inside the cylinder 101. The piston ring 105 has a slit. The air can be vented from the inlet port 101a to another end 101b side of the cylinder 101. A gap 106 for air vent is provided between the inner circumferential surface of the other end 101b of the cylinder 101 and the piston 102.

A negative pressure is generated in the inlet port 101a by the pressure reducing device 10 by the handle 104 being gripped by the user and the piston 102 being pulled out. At this point, the air between the cylinder 101 and the piston 102 flows out by passing through the gap 106. Conversely, the air pressure inside the inlet port 101a is raised by pushing the pulled-out piston 102 into the cylinder 101. At this point, the outside air flows into the cylinder 101 by passing through the gap 106. Therefore, the pressure reducing device 10 shown in FIG. 27 can perform a pumping operation by manually reciprocating the piston 102.

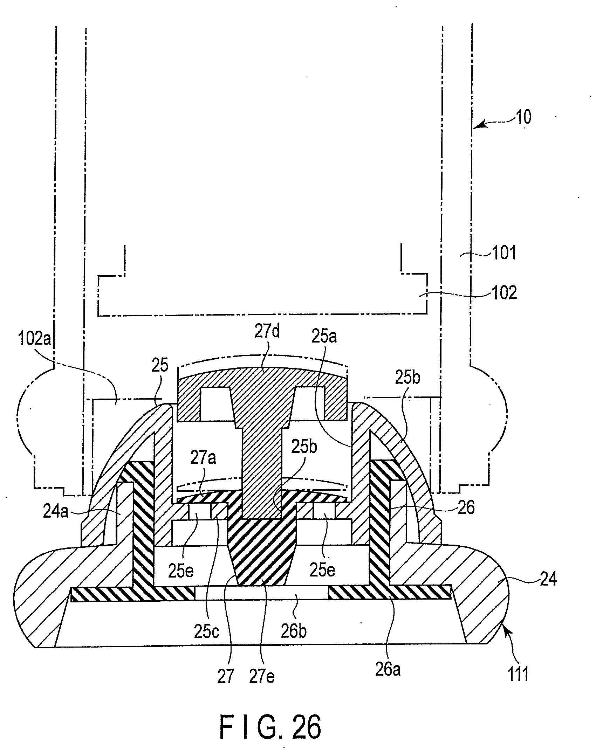

The valve device 111 mounted on the driving device 2 having the housing 3 and serving as a closing member combines the functions of a check valve and a release valve described in the first embodiment. Thus, when compared with the first embodiment, the numbers of valves and pipes can be reduced. As shown in FIG. 26, the configuration of the valve device 111 is the same as that of a cover-side check valve 55 described by using FIG. 7 and thus, the same reference signs are attached to the same components as those in the cover-side check valve 55 and the description thereof is omitted.

The valve device 111 is mounted on a flat upper wall 3b of the housing 3 and projected upward. A push button 27d for valve release included in the valve device 111 can be operated and pushed down. The valve device 111 is opened by this operation.

One end of the air piping 108 is connected to a base 24 included in the valve device 111. The other end of the air piping 108 is supported by a closed wall portion 3c of the housing 3. The other end is open to an inner space surrounded by a seal ring 35. Thus, when a valve hole 25e of the valve device 111 is opened by a negative pressure acting on the valve device 111 from above or the push button 27d being pressed, the valve device 111 and the air piping 108 are communicatively connected.

The configuration of the mixer 1 described above in the eighth embodiment is the same as that of a mixer in the first embodiment except the configuration described above.

Next, the procedure for using the mixer 1 in the eighth embodiment will briefly be described.

First, put the processing tool 61 into the cooking container 41 and fit a connection portion 62 of the processing tool 61 to a fixing axis 45 of the cooking container 41 from above. Then, place food cut to an appropriate size inside (accommodation space S) the cooking container 41.

Next, mount the driving device 2 serving as a closing member on the upper portion of the cooking container 41 by screwing to close the top end opening of the cooking container 41. Accordingly, a processing axis 63 is fitted to a tool linking member 21 and the processing tool 61 is thereby supported on both ends. In addition, the accommodation space S of the cooking container 41 is sealed.

Then, place the manual pressure reducing device 10 on the housing 3 of the driving device 2 serving also as a closing member. In this case, as shown by a chain double-dashed line in FIG. 26, the pressure reducing device 10 is placed such that at least an upper portion of a valve housing 25 included in the valve device 111 is arranged inside the inlet port 101a of the pressure reducing device 10. Next, operate the pressure reducing device 10 by operating the piston 102 to repeatedly reciprocate the piston in the up and down direction. Incidentally, providing a retaining portion to prevent accidental movement of the pressure reducing device 10 on the upper wall 3b of the housing 3 is preferable from the viewpoint of being able to perform a manual pumping operation smoothly because the state of placement of the pressure reducing device 10 is thereby stabilized.

Each time the piston 102 is pulled out from the cylinder 101, the pressure reducing device 10 performs an exhaust operation. A negative pressure generated thereby propagates to a valve plate portion 27a from above and thus, the valve plate portion 27a is lifted to open the valve hole 25e. Thus, the air inside the cooking container 41 is exhausted to the outside after passing through the air piping 108, the valve hole 25e of the valve device 111, and further the pressure reducing device 10. Conversely when the piston 102 is pushed into the cylinder 101, the air pressure acting on the valve plate portion 27a from above rises and the valve plate portion 27a closes the valve hole 25e and thus, no air is exhausted. Thus, accompanying repeated push pull operations of the piston 102, the air in the accommodation space S is exhausted. Accordingly, the pressure inside the cooking container 41 is reduced and the oxygen concentration inside the cooking container 41 becomes lower than that in the air.

After the pressure inside the cooking container 41 is properly reduced in this manner, the pressure reducing device 10 is detached from the housing 3. In this state, a negative pressure of the accommodation space S propagates to the valve hole 25e through the air piping 108 to attract the valve plate portion 27a to a valve seat wall 25c. Thus, the valve hole 25e is retained in a closed state and a pressure reduced state of the accommodation space S is maintained.

In this state, turn on a start switch 14 to drive the motor 9 for a desired time by a control device 11. The processing tool 61 is thereby rotated and food inside the cooking container 41 is crushed and mixed in a pressure reduced state to produce juice.

Perform a pressing operation of the push button 27d while the motor 9 is stopped. Accordingly, accompanying the pressing down of the center portion of a valve body 27, a circumferential portion of the valve plate portion 27a is lifted in relation to the valve seat wall 25c to open the valve hole 25e. That is, the valve device 111 is opened. Accordingly, the air outside the accommodation space S flows into the cooking container 41 by passing through the valve device 111 and the air piping 108. Then, rotate the driving device 2 serving as a closing member and the cooking container 41 relatively in the loosening direction to separate these devices. Lastly, remove the processing tool 61 from the cooking container 41.

Therefore, also in the eighth embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

In the eighth embodiment, the cover 51 is mounted on the cooking container 41 after the processing tool 61 being removed. In this state, the pressure reducing device 10 may be arranged immediately above the cover-side check valve 55 to perform a manual operation of the pressure reducing device 10. The cover-side check valve 55 is thereby opened so that the pressure inside the cooking container 41 can be reduced.

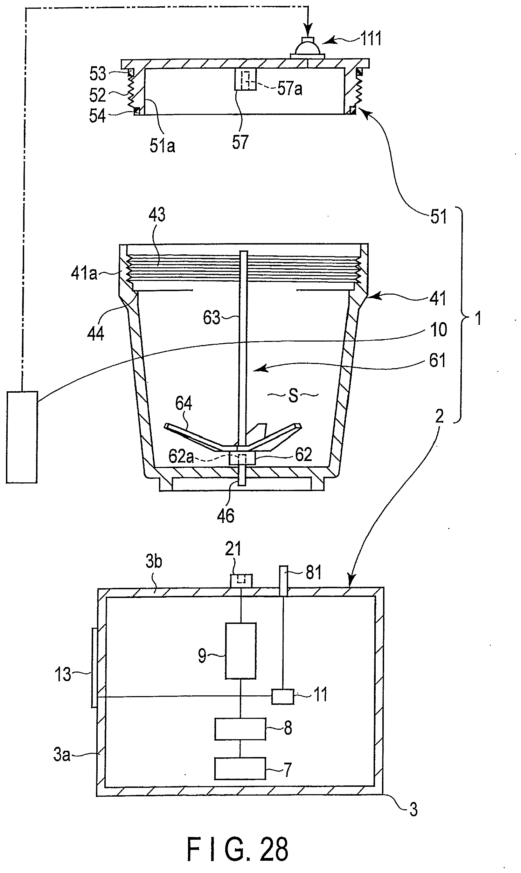

FIG. 28 shows the ninth embodiment. The ninth embodiment is different from the fifth embodiment in the configuration described below and the other configuration is the same as that of the fifth embodiment. Thus, the same reference signs are attached to components achieving the same functions as those in the fifth embodiment or similar functions and the description thereof is omitted. Further, FIGS. 26 and 27 are referred to when necessary.

A mixer 1 according to the ninth embodiment is different from a mixer according to the fifth embodiment in the following configuration. Instead of arranging a pressure reducing device and an intake pipe inside a housing 3 of a driving device 2, the pressure reducing device 10 is provided outside the housing 3. Accordingly, intake piping included in a mixer according to the fifth embodiment is omitted. Further, instead of a cover-side check valve included in a mixer according to the fifth embodiment, a valve device 111 is mounted on a cover 51 serving also as a closing member and the cover 51 includes an axis supporting portion 57. In addition, a processing tool 61 includes a tool axis 63.

More specifically, a vacuum pump is used as the pressure reducing device 10. The pressure reducing device 10 is to be provided as a set with a cooking unit from the manufacturing and sales company of the mixer 1, but instead, separately from the cooking unit, the pressure reducing device may be provided by a different company from the manufacturing and sales company of the mixer 1. The cooking unit includes the driving device 2 containing a motor 9, a cooking container 41, the cover 51, and the processing tool 61.

The pressure reducing device 10 is the same as a pressure reducing device described in the eighth embodiment using FIG. 27 and thus, the description of the configuration of the pressure reducing device 10 is omitted here.

The valve device 111 is the same as a valve device described in the eighth embodiment using FIG. 26 and thus, the description of the configuration of the valve device 111 is omitted here. The valve device 111 is mounted on the cover 51 and projected upward. Thus, a push button 27d for valve release (see FIG. 26) included in the valve device 111 can be operated and pushed down. The valve device 111 is opened by this operation.

The axis supporting portion 57 is projected in the center portion on the back side of the cover 51. The axis supporting portion 57 includes a bearing hole 57a open to the undersurface thereof.

The processing tool 61 includes a connection portion 62, the tool axis 63, and a tool element 64. The connection portion 62 is supported by being removably fitted from above to a rotation axis 46 mounted freely rotatably on the bottom wall of the cooking container 41. Mechanical power of the rotation axis 46 to which the connection portion 62 is fitted is provided to the connection portion. The tool axis 63 is linked to the upper side of the connection portion 62 and extends upward in a straight line. The top end of the tool axis 63 is removably inserted into the bearing hole 57a from below and rotatably supported by the axis supporting portion 57. The tool element 64 is linked to the tool axis 63.

The configuration of the mixer 1 described above in the ninth embodiment is the same as that of a mixer in the fifth embodiment except the configuration described above.

Next, the procedure for using the mixer 1 in the ninth embodiment will briefly be described.

First, put the processing tool 61 into the cooking container 41 and fit the connection portion 62 of the processing tool 61 to a fixing axis 45 of the cooking container 41 from above. Then, place food cut to an appropriate size inside (accommodation space S) the cooking container 41.

Next, mount the cover 51 serving as a closing member on the upper portion of the cooking container 41 by screwing to close the top end opening of the cooking container 41. Accordingly, a processing axis 83 is fitted to the axis supporting portion 57 and the processing tool 61 is thereby supported on both ends. In addition, the accommodation space S of the cooking container 41 is sealed.

Then, place the manual pressure reducing device 10 on the cover 51 serving also as a closing member. In this case, as shown by the chain double-dashed line in FIG. 26, the pressure reducing device 10 is placed such that at least an upper portion of a valve housing 25 body included in the valve device 111 is arranged inside an inlet port 101a (see FIG. 27) of the pressure reducing device 10. Next, operate the pressure reducing device 10 by operating a piston 102 (see FIG. 27) to repeatedly reciprocate the piston in the up and down direction. Incidentally, if a retaining portion to prevent accidental movement of the pressure reducing device 10 is provided on the cover 51, the state of placement of the pressure reducing device 10 is thereby stabilized and the retaining portion is preferable from the viewpoint of being able to perform a manual pumping operation smoothly.

Each time the piston 102 is pulled out from the cylinder 101 (see FIG. 27), the pressure reducing device 10 performs an exhaust operation. A negative pressure generated thereby propagates to a valve plate portion 27a (see FIG. 26) from above and thus, the valve plate portion 27a is lifted to open a valve hole 25e (see FIG. 26). Thus, the air inside the cooking container 41 is exhausted to the outside after passing through the valve hole 25e of the valve device 111 and further the pressure reducing device 10. Conversely when the piston 102 is pushed into the cylinder 101, the air pressure acting on the valve plate portion 27a from above rises and the valve plate portion 27a closes the valve hole 25e and thus, no air is exhausted. Thus, accompanying repeated push pull operations of the piston 102, the air in the accommodation space S is exhausted. Accordingly, the pressure inside the cooking container 41 is reduced and the oxygen concentration inside the cooking container 41 becomes lower than that in the air.

After the pressure inside the cooking container 41 is properly reduced in this manner, the pressure reducing device 10 is detached from the housing 3. In this state, a negative pressure of the accommodation space S propagates to the valve hole 25e to attract the valve plate portion 27a to a valve seat wall 25c (see FIG. 26). Thus, the valve hole 25e is retained in a closed state and a pressure reduced state of the accommodation space S is maintained.

In this state, turn on a start switch 14 (see FIG. 6) of an operation panel 13 to drive the motor 9 for a desired time by a control device 11. The processing tool 61 is thereby rotated and food inside the cooking container 41 is crushed and mixed in a pressure reduced state to produce juice. In this case, the processing tool 61 is supported on both upper and lower ends by the axis supporting portion 57 and the rotation axis 46 and thus, cooking can be done by rotating the processing tool 61 in a stable state without the processing tool 61 being detached from the rotation axis 46.

Perform a pressing operation of the push button 27d while the motor 9 is stopped. Accordingly, accompanying the pressing down of the center portion of a valve body 27 (see FIG. 26), a circumferential portion of the valve plate portion 27a is lifted in relation to the valve seat wall 25c to open the valve hole 25e. That is, the valve device 111 is opened. Accordingly, the air outside the accommodation space S flows into the cooking container 41 by passing through the valve device 111. Then, rotate the cover 51 serving as a closing member and the cooking container 41 relatively in the loosening direction to separate these devices. Lastly, remove the processing tool 61 from the cooking container 41 by gripping the top end of the tool axis 63. Therefore, the processing tool 61 can be detached without causing juice to flow out of the cooking container 41 and touching juice.

In the ninth embodiment, the cover 51 is mounted on the cooking container 41 after the processing tool 61 being removed. In this state, the pressure reducing device 10 may be arranged immediately above a cover-side check valve 55 to perform a manual operation of the pressure reducing device 10. The cover-side check valve 55 is thereby opened so that the pressure inside the cooking container 41 can be reduced.

Also in the ninth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

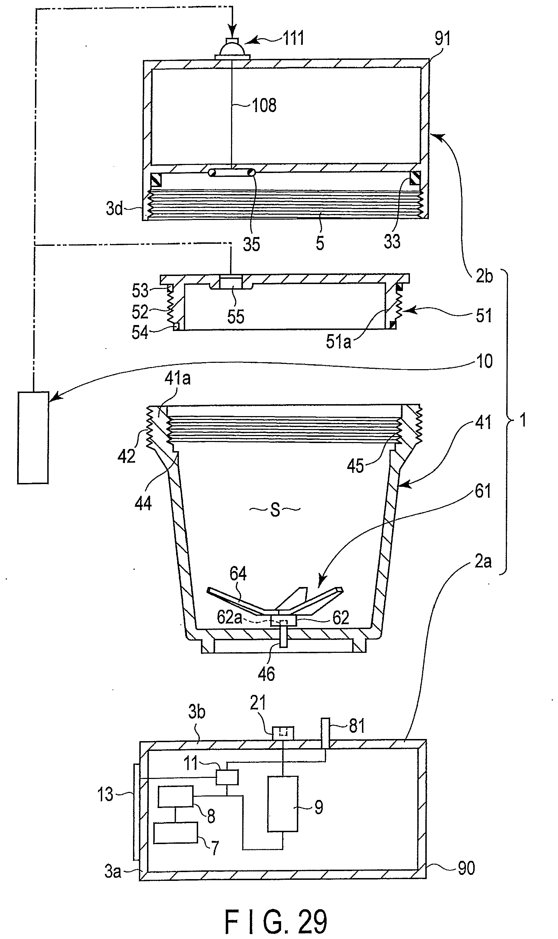

FIG. 29 shows the tenth embodiment. The tenth embodiment is different from the sixth embodiment in the configuration described below and the other configuration is the same as that of the sixth embodiment. Thus, the same reference signs are attached to components achieving the same functions as those in the six embodiment or similar functions and the description thereof is omitted. Further, FIGS. 26 and 27 are referred to when necessary.

A mixer 1 according to the tenth embodiment is different from a mixer according to the sixth embodiment in the following configuration. Instead of arranging a pressure reducing device 10 inside a housing 3 of a driving device 2 serving also as a closing member, the pressure reducing device 10 is provided outside the housing 3. Accordingly, an electric connection device and electric connector included in a mixer according to the sixth embodiment are omitted. In addition, instead of omitting a release valve, a valve stem, and a release button provided in a closing member included in a mixer in the sixth embodiment, an intake pipe, and a check valve, a valve device 111 and air piping 108 communicatively connecting the valve device 111 and an accommodation space S are included in a closing member 2b.

More specifically, a vacuum pump is used as the pressure reducing device 10. The pressure reducing device 10 is to be provided as a set with a cooking unit from the manufacturing and sales company of the mixer 1, but instead, separately from the cooking unit, the pressure reducing device may be provided by a different company from the manufacturing and sales company of the mixer 1. The cooking unit includes the driving device 2 containing a motor 9, a cooking container 41, the closing member 2b, and a processing tool 61.

The pressure reducing device 10 is the same as a pressure reducing device described in the eighth embodiment using FIG. 27 and thus, the description of the configuration of the pressure reducing device 10 is omitted here.

The valve device 111 is the same as a valve device described in the eighth embodiment using FIG. 26 and thus, the description of the configuration of the valve device 111 is omitted here. The valve device 111 is mounted on an upper wall of a housing 91 of the closing member 2b and projected upward. Thus, a push button 27d for valve release (see FIG. 26) included in the valve device 111 can be operated and pushed down. The valve device 111 is opened by this operation.

One end of the air piping 108 is connected to a base 24 (see FIG. 26) included in the valve device 111. The other end of the air piping 108 is supported by a closed wall portion 3c of the housing 91 included in the closing member 2b. The other end is open to an inner space surrounded by a seal ring 35. Thus, when a valve hole 25e of the valve device 111 is opened by a negative pressure acting on the valve device 111 from above or the push button 27d being pressed, the valve device 111 and the air piping 108 are communicatively connected. In the tenth embodiment, the closing member 2b is not limited to the configuration including the housing 91 and a configuration similar to that of a cover 51 may be adopted. In this case, the tenth embodiment may be carried out by omitting the air piping 108.

The configuration of the mixer 1 described above in the tenth embodiment is the same as that of a mixer in the sixth embodiment except the configuration described above.

Next, the procedure for using the mixer 1 in the tenth embodiment will briefly be described.

First, put the processing tool 61 into the cooking container 41 and fit a connection portion 62 of the processing tool 61 to a fixing axis 45 of the cooking container 41 from above. Then, place food cut to an appropriate size inside (accommodation space S) the cooking container 41.

Next, mount the closing member 2b on the upper portion of the cooking container 41 by screwing to close the top end opening of the cooking container 41 to seal the accommodation space S.

Then, place the manual pressure reducing device 10 on the housing 91 of the closing member 2b. In this case, as shown by the chain double-dashed line in FIG. 26, the pressure reducing device 10 is placed such that at least an upper portion of a valve housing 25 included in the valve device 111 is arranged inside an inlet port 101a (see FIG. 26) of the pressure reducing device 10. Next, operate the pressure reducing device 10 by operating a piston 102 (see FIG. 27) to repeatedly reciprocate the piston in the up and down direction. Incidentally, if a retaining portion to prevent accidental movement of the pressure reducing device 10 is provided on the upper wall of the housing 91 included in the closing member 2b, the state of placement of the pressure reducing device 10 is thereby stabilized and the retaining portion is preferable from the viewpoint of being able to perform a manual pumping operation smoothly.

Each time the piston 102 is pulled out from a cylinder 101 (see FIG. 27), the pressure reducing device 10 performs an exhaust operation. A negative pressure generated thereby propagates to a valve plate portion 27a (see FIG. 26) from above and thus, the valve plate portion 27a is lifted to open a valve hole 25e (see FIG. 26). Thus, the air inside the cooking container 41 is exhausted to the outside after passing through the air piping 108, the valve hole 25e (see FIG. 26) of the valve device 111, and further the pressure reducing device 10. Conversely when the piston 102 is pushed into the cylinder 101, the air pressure acting on the valve plate portion 27a from above rises and the valve plate portion 27a closes the valve hole 25e and thus, no air is exhausted. Thus, accompanying repeated push pull operations of the piston 102, the air in the accommodation space S is exhausted. Accordingly, the pressure inside the cooking container 41 is reduced and the oxygen concentration inside the cooking container 41 becomes lower than that in the air.

After the pressure inside the cooking container 41 is properly reduced in this manner, the pressure reducing device 10 is detached from the closing member 2b. In this state, a negative pressure of the accommodation space S propagates to the valve hole 25e through the air piping 108 to attract the valve plate portion 27a to a valve seat wall 25c (see FIG. 26). Thus, the valve hole 25e is retained in a closed state and a pressure reduced state of the accommodation space S is maintained.

Next, place the cooking container 41 on a housing 90 of a driving unit 2a and connect a tool linking member 21 and a rotation axis 46. Incidentally, the exhaust operation of the cooking container 41 can also be performed while the sealed cooking container 41 is arranged on the driving unit 2a.

Then, turn on a start switch 14 (see FIG. 6) of an operation panel 13 to drive the motor 9 for a desired time by a control device 11. The processing tool 61 is thereby rotated and food inside the cooking container 41 is crushed and mixed in a pressure reduced state to produce juice.

Perform a pressing operation of the push button 27d while the motor 9 is stopped. Accordingly, accompanying the pressing down of the center portion of a valve body 27 (see FIG. 26), a circumferential portion of the valve plate portion 27a is lifted in relation to the valve seat wall 25c (see FIG. 26) to open the valve hole 25e. That is, the valve device 111 is opened. Accordingly, the air outside the accommodation space S flows into the cooking container 41 by passing through the valve device 111 and the air piping 108. Then, rotate the closing member 2b and the cooking container 41 relatively in the loosening direction to separate these devices. Lastly, remove the processing tool 61 from the cooking container 41 if necessary.

Therefore, also in the tenth embodiment, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

In the tenth embodiment, a cover 15 is mounted on the cooking container 41 after the processing tool 61 being removed. In this state, the pressure reducing device 10 may be arranged immediately above a cover-side check valve 55 to perform a manual operation of the pressure reducing device 10. The cover-side check valve 55 is thereby opened so that the pressure inside the cooking container 41 can be reduced.

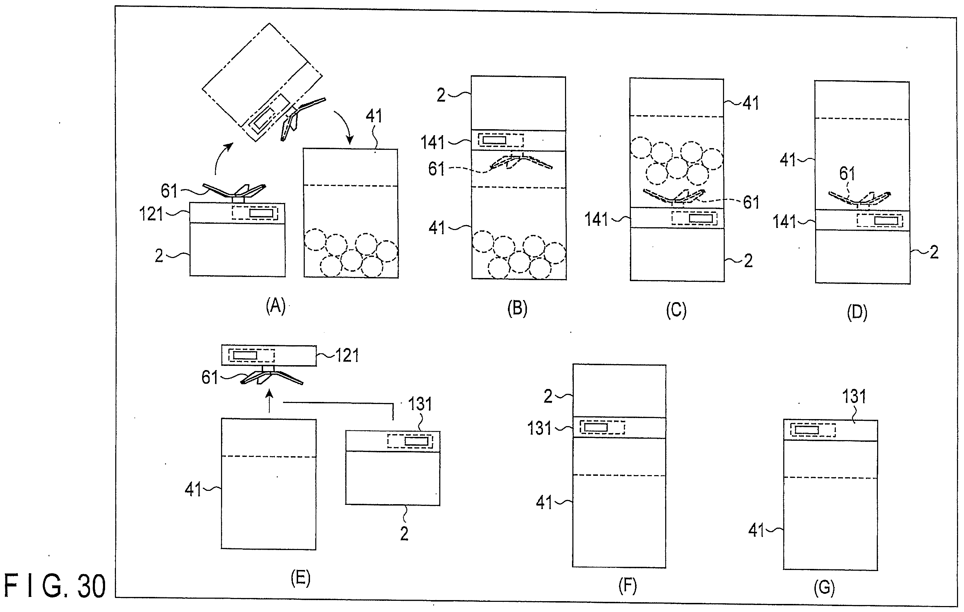

FIGS. 30 to 32 show the eleventh embodiment. In a mixer according to the eleventh embodiment described below, the same reference signs are attached to components achieving the same functions as those described in the first to tenth embodiments or similar functions and the description thereof is omitted. Further, FIGS. 4A, 4B, 7, and 8 are referred to when necessary.

A mixer 1 according to the eleventh embodiment includes a driving device 2, a cooking container 41, a first cover 121 serving as a first closing member, and a second cover 131 serving as a second closing member.

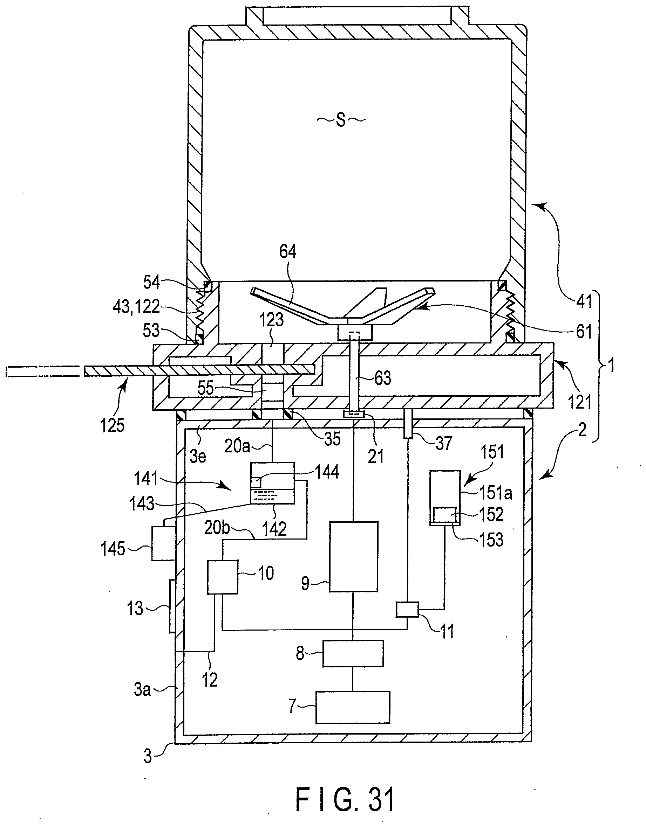

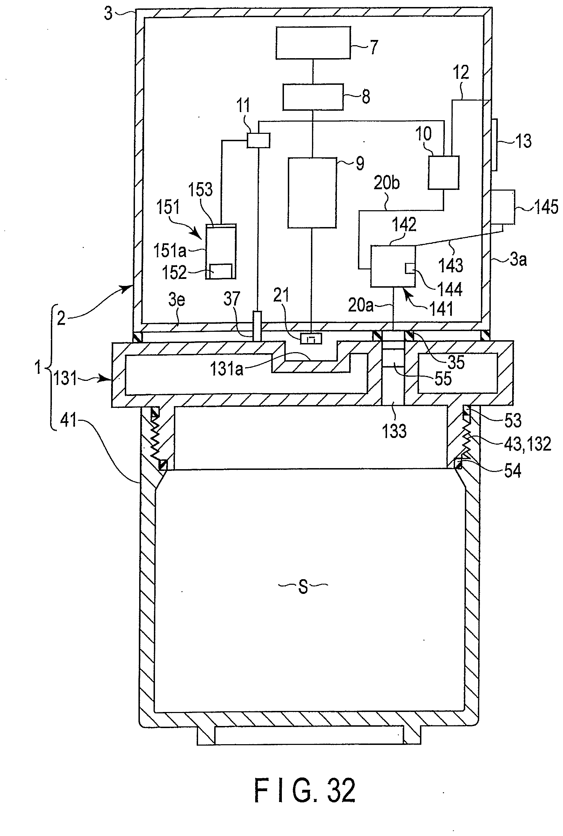

As shown in FIGS. 31 and 32, the driving device 2 includes a housing 3, an AC (alternating current)/DC (direct current) switching power supply 7, a DC (direct current)/DC (direct current) converter 8, a motor 9, a pressure reducing device 10, a control device 11, an operation panel 13, a tool linking member 21 functioning as a supporting portion of a processing tool 61 described later, a cover detection device 37, a first protection device 141 to protect the pressure reducing device 10, and a determination device 151.

The AC/DC switching power supply 7, the DC/DC converter 8, the motor 9, the pressure reducing device 10, the control device 11, the first protection device 141, and the determination device 151 are contained in the housing 3.

An electric motor, for example, a DC (direct current) motor is used as the motor 9. The rotation of the output axis can be reversed by the direction of the current supplied to the motor 9. For example, an electric vacuum pump can suitably be used as the pressure reducing device 10. The pressure reducing device 10 is driven by DC power supplied from the DC/DC converter 8. A exhaust pipe 12 is connected to a discharge port of the pressure reducing device 10 and the tip of the exhaust pipe 12 is open to the outside of the housing 3.

A first intake pipe 20a and a second intake pipe 20b communicatively connected thereto are provided to guide the air inside an accommodation space S to the pressure reducing device 10. The first intake pipe 20a is open to a one-end wall 3e in a thickness direction of the housing 3. The second intake pipe 20b is connected to the pressure reducing device 10.

For example, a microcomputer can suitably be used as the control device 11. The control device 11 controls driving of each of the motor 9 and the pressure reducing device 10 according to various programs stored in the memory included in the control device and also controls various displays on the operation panel 13. The operation panel 13 is mounted on the surface of the driving device 2 such that the device can be operated from outside.

The operation panel 13 includes the start switch, the stop switch, and the cooking mode display units, more specifically, the mixing mode display unit, the cooking time display unit, and the pressure reducing mode display unit described by using FIG. 6.

The tool linking member 21 is fixed to the tip of the output axis of the motor 9. The tool linking member 21 is disposed outside the housing 3. An end of a tool axis 63 described later is connected to the tool linking member 21 such that the end can be inserted and removed in the up and down direction. The tool linking member 21 is indentation-engaged with the end of the tool axis 63 so that rotation of the output axis is transmitted to the tool axis 63 while the end of the tool axis 63 is connected by insertion.

The cover detection device 37 is used to detect the first cover 121 and the second cover 131. The cover detection device 37 is mounted on the one-end wall 3e of the housing 3 close to the tool linking member 21. The cover detection device 37 is configured by, for example, a push switch. Thus, when the first cover 121 or the second cover 131 described later is arranged by covering the one-end wall 3e, the cover detection device 37 is pressed by the cover and turned on. The cover detection device 37 made of a push switch is restored to its OFF position when a pushing force thereon disappears.

In FIGS. 31 and 32, the cover detection device 37 is depicted in a form of moving in the up and down direction to clarify the ON state and the OFF state of the push switch. However, when a switch configured to perform a switching operation by an included actuator being moved while in contact with the cover is adopted, the switch as a whole does not have to be moved.

The first protection device 141 is provided to prevent juice from reaching the pressure reducing device 10. The first protection device 141 includes a liquid reservoir container 142, a drainage tube 143, and a liquid level detection device 144.

The liquid reservoir container 142 is disposed at some midpoint of the intake pipe, that is, between the first intake pipe 20a and the second intake pipe 20b by being communicatively connected thereto. The first intake pipe 20a is connected to one end in the up and down direction of the liquid reservoir container 142. The second intake pipe 20b is connected to the liquid reservoir container 142 in a height position different from that of the first intake pipe 20a.

The drainage tube 143 communicatively connects the other end of the liquid reservoir container 142 and the outside of the housing 3 to drain juice inside the liquid reservoir container 142 out of the housing 3. The drainage tube 143 is inclined such that the liquid inside the liquid reservoir container 142 flows out due to the self-weight. A cup 145 to receive juice drained from the drainage tube 143 is removably attached to the outside surface of the housing 3. This cup 145 can prevent the outside surface of the housing 3 from being stained with juice and also makes processing of juice drained out of the housing 3 easier.

A water level sensor such as a float switch is used as the liquid level detection device 144. The liquid level detection device 144 detects whether the remaining liquid (remaining juice) inside the liquid reservoir container 142 has reached a predetermined height. The predetermined height is set to a height lower than the connection point of the liquid reservoir container 142 and the second intake pipe 20b. Detection information of the liquid level detection device 144 is supplied to the control device 11. When the liquid level detection device 144 detects a liquid level exceeding the predetermined height, the control device 11 is in charge of inhibiting the operation of the pressure reducing device 10, regardless of whether the pressure reducing device 10 is stopped or driven. When the liquid level detection device 144 detects a liquid level exceeding the predetermined height, the control device 11 may cause the operation panel 13 to display, based on the information, an alarm calling the user's attention thereto.

The determination device 151 includes, for example, a dead weight 152 vertically movably accommodated in a container 15a long in the up and down direction and a switch 153 turned ON/OFF by being arranged at one end of the container and the dead weight 152 being brought into contact and moved away. The determination device 151 determines whether the pressure reducing device 10 is positioned above or below the cooking container 41.

That is, if, as shown in FIG. 31, the switch 153 is positioned below the dead weight 152, the switch 153 is pressed by the dead weight 152 and, for example, turned on. Accordingly, the pressure reducing device 10 is determined to be positioned below the cooking container 41. If, as shown in FIG. 32, the switch 153 is positioned above the dead weight 152, the dead weight 152 is apart from the switch 153 in the downward direction and the switch 153 is turned off. Accordingly, the pressure reducing device 10 is determined to be positioned above the cooking container 41.

Detection information of the determination device 151 is supplied to the control device 11. If the determination device 151 determines that the pressure reducing device 10 is positioned above the cooking container 41, the control device 11 exercises control that enables driving of the pressure reducing device 10. Conversely, if the determination device 151 determines that the pressure reducing device 10 is positioned below the cooking container 41, the control device 11 inhibits driving of the pressure reducing device 10. Therefore, when a check valve 23 described later fails or the pressure reducing device 10 is mistakenly driven during rotation of the processing tool 61, juice or the like inside the cooking container 41 can be prevented from being sucked into the pressure reducing device 10.

The cooking container 41 is formed by, as shown in FIGS. 31 and 32, the accommodation space S of food being partitioned. The cooking container 41 is preferably formed from a material through which the internal accommodation space S can be seen, for example, a material such as glass or plastics. One end of the cooking container 41 is open.

A screwing portion used for connection to the first and second covers, for example, an inner screwing portion 43 configured by a female screw portion is formed on a one-end opening edge of the cooking container 41.

The first cover 121 is used when the pressure of the cooking container 41 is reduced or food is processed. The first cover 121 includes an outer screwing portion 122 configured by a screwing portion, for example, a male screw portion. The outer screwing portion 122 is removably screwed into the inner screwing portion 43. Accordingly, the first cover 121 can be inserted into or removed from the cooking container 41 to open/close the accommodation space S. A sealant 53 is mounted on the root of the outer screwing portion 122. A sealant 54 is mounted on the tip of the outer screwing portion 122.

As shown in FIG. 31, the first cover 121 has a vent hole 123 cut through in the thickness direction thereof. The first cover 121 can removably be mounted on the driving device 2 by a linking device like a clamp and a clamp pad (not shown).

The processing tool 61, a cover-side check valve 55, and a second protection device 125 are mounted on the first cover 121.

The processing tool 61 includes the tool axis 63 and a tool element 64 linked to one end of the tool axis 63. The tool axis 63 is freely rotatably mounted on the first cover 121 by passing through in the thickness direction thereof. The tool element 64 is arranged on the side on which the outer screwing portion 122 is projected. The end of the tool axis 63 on the opposite side of the tool element 64 is removably fitted to the tool linking member 21 and a rotating force of the tool linking member 21 is provided to the tool axis 63.

The cover-side check valve 55 is contained in the vent hole 123. The cover-side check valve 55 has the same configuration as that of a check valve described in each of the above embodiments. Thus, the cover-side check valve 55 is opened when the air inside the cooking container 41 is exhausted and closed when not exhausted.

The second protection device 125 opens/closes the vent hole 123 upstream of the cover-side check valve 55 based on an air flow passing through the vent hole 123. The second protection device 125 is formed from a shutter plate reciprocated, for example, in a direction intersecting the vent hole 123. The shutter plate can move, as indicated by a solid line in FIG. 31, between a closed position crossing the vent hole 123 and a closed position not crossing the vent hole 123. The shutter plate is moved, for example, manually. Incidentally, a driving mechanism formed from an electromagnet or a driving mechanism including a motor may be incorporated into the first cover 121 to cause the mechanism to reciprocate the shutter plate automatically.

The second protection device 125 is arranged in a position to open the vent hole 123 when the pressure is reduced and in a position to close the vent hole 123 when food is processed. Thus, when the cover-side check valve 55 fails or the pressure reducing device 10 is mistakenly driven during rotation of the processing tool 61, juice or the like inside the cooking container 41 can be prevented from being sucked into the pressure reducing device 10 by the second protection device 125.

In addition to the second protection device 125, the eleventh embodiment includes the first protection device 141 described above and thus, the pressure reducing device 10 can doubly be protected, leading to high protection performance. However, the eleventh embodiment can be carried out by omitting the second protection device 125.

A seal ring 35 is mounted on one of the first cover 121 and the one-end wall 3e of the housing 3, for example, the one-end wall 3e. The seal ring 35 is sandwiched between the first cover 121 and the one-end wall 3e in a form like surrounding an opening end of the vent hole 123. The internal space of the seal ring 35 in a sandwiched state is communicatively connected to not only the vent hole 123, but also the first intake pipe 20a. Therefore, the vent hole 123 can communicatively connected to the intake port of the pressure reducing device 10 via the internal space of the seal ring 35, the first intake pipe 20a, the liquid reservoir container 142, and the second intake pipe 20b.

The second cover 131 is used after being substituted for the first cover 121. More specifically, the second cover 131 is used when the pressure inside the cooking container 41 in which processed juice remains is reduced and then, the cooking container 41 is carried or stored in a refrigerator or the like. The second cover 131 can removably be mounted on the driving device 2 by a linking device like a clamp and a clamp pad (not shown).

As shown in FIG. 32, the second cover 131 includes an outer screwing portion 132 configured by a screwing portion, for example, a male screw portion. The outer screwing portion 132 is removably screwed into the inner screwing portion 43. Accordingly, the second cover 131 can be inserted into or removed from the cooking container 41 to open/close the accommodation space S. The sealant 53 is mounted on the root of the outer screwing portion 132. The sealant 54 is mounted on the tip of the outer screwing portion 132. Reference sign 131a in FIG. 32 shows a recess formed in the second cover 131. The recess 131a is provided to escape the tool linking member 21.

The second cover 131 includes a vent hole 133 cut through in the thickness direction thereof. The cover-side check valve 55 is mounted on the second cover 131. The cover-side check valve 55 has the same configuration as that of a cover-side check valve described in each of the above embodiments. Thus, the cover-side check valve 55 is opened when the air inside the cooking container 41 is exhausted or a push button 27d included in the cover-side check valve 55 is manually pressed and is closed otherwise.

The seal ring 35 mounted on one of the second cover 131 and the one-end wall 3e of the housing 3, for example, the one-end wall 3e is sandwiched between the second cover 131 and the one-end wall 3e in a form like surrounding the vent hole 133. The internal space of the seal ring 35 in a sandwiched state is communicatively connected to not only the vent hole 133, but also the first intake pipe 20a. Therefore, the vent hole 133 can communicatively connected to the intake port of the pressure reducing device 10 via the internal space of the seal ring 35, the first intake pipe 20a, the liquid reservoir container 142, and the second intake pipe 20b.

Next, the method of handling the mixer 1 according to the eleventh embodiment will be described with reference to FIGS. 30A to 30G.

First, as shown in FIG. 30A, link the driving device 2 and the first cover 121 with the processing tool 61 and also separate the cooking container 41 from the assembly. In this state, put food to be processed into the cooking container 41.

Next, mount the assembly on the cooking container 41 from above. In this case, the assembly is turned upside down so that the processing tool 61 is positioned below the first cover 121 and then the outer screwing portion 122 of the first cover 121 is screwed into the inner screwing portion 43 of the cooking container 41. Accordingly, as shown in FIG. 30B, the driving device 2 is arranged above the cooking container 41 and also the first cover 121 is not in contact with the food (including the liquid) inside the cooking container 41. In this state, the switch 153 of the determination device 151 is turned off. Based thereon, the control device 11 exercises control to inhibit the operation of the motor 9 and also exercises control to enable driving of the pressure reducing device 10. In this state, the shutter plate forming the second protection device 125 is arranged in an open state of the vent hole 123.

In the state of FIG. 30B, perform an operation to reduce the pressure using the operation panel 13 to drive the pressure reducing device 10. The cover-side check valve 55 is opened by a negative pressure generated thereby. Thus, the air inside the cooking container 41 is exhausted and the pressure inside the accommodation space S is reduced, leading to a lower oxygen concentration. In this case, the liquid level inside the cooking container 41 is apart from the first cover 121 in the downward direction and there is no possibility that the liquid inside the cooking container 41 will be sucked into the pressure reducing device 10.

Then, close the vent hole 123 by the shutter plate forming the second protection device 125 and in this state, as shown in FIG. 30C, turn the whole mixer 1 upside down. Accordingly, the driving device 2 is positioned below the cooking container 41 and also the food inside the cooking container 41 is in contact with the first cover 121 from above. In this state, the switch 153 of the determination device 151 is turned on. Based thereon, the control device 11 exercises control to enable the operation of the motor 9 and also exercises control to inhibit driving of the pressure reducing device 10.

Perform an operation for processing (mixing) using the operation panel 13 in the state of FIG. 30C to mix the food by rotating the processing tool 61. This state is shown in FIG. 30D. When mixed as described above, the driving device 2 heavy with the motor 9 and the like contained therein is arranged below the cooking container 41. In addition, the processing tool 61 is also arranged in a lower portion with respect to the cooking container 41. Therefore, there is no possibility of behavior of the upper portion of the mixer 1 oscillating when, for example, the driving device 2 is arranged above the cooking container 41 for mixing. Accordingly, even if the mixer 1 is not pushed down by the user from above, the mixer 1 can be retained in a stable state for mixing. In this state, the pressure reducing device 10 is not driven and there is no possibility that the liquid inside the cooking container 41 will be sucked into the pressure reducing device 10.

Then, turn the mixer 1 upside down again. In this state, remove the driving device 2 and then remove the first cover 121. After the processing tool 61 is removed from the cooking container 41 by the procedure described above, mixed juice remains inside the cooking container 41.

Next, form a second assembly by linking the second cover 131 to the driving device 2. This state is shown in FIG. 30E. Further, as shown in FIG. 30F, mount the assembled second assembly on the cooking container 41. That is, while the second cover 131 is arranged below the driving device 2, the outer screwing portion 132 of the second cover 131 is screwed into the inner screwing portion 43 of the cooking container 41.

Accordingly, the driving device 2 is arranged above the cooking container 41 and also the second cover 131 is not in contact with juice inside the cooking container 41. In this state, the switch 153 of the determination device 151 is turned off. Based thereon, the control device 11 exercises control to inhibit the operation of the motor 9 and also exercises control to enable driving of the pressure reducing device 10.

In the state of FIG. 30F, perform an operation to reduce the pressure using the operation panel 13 to drive the pressure reducing device 10. The cover-side check valve 55 is opened by a negative pressure generated thereby. Thus, the air inside the cooking container 41 is exhausted and the pressure inside the accommodation space S is reduced again, leading to a lower oxygen concentration. In this case, the liquid level inside the cooking container 41 is apart from the second cover 121 in the downward direction and there is no possibility that the juice inside the cooking container 41 will be sucked into the pressure reducing device 10.

Then, as shown in FIG. 30G, unlink the second cover 131 and the driving device 2 to remove the driving device 2 while the connection between the cooking container 41 and the second cover 131 is maintained. In this state, the cover-side check valve 55 is retained in a closed state due to the negative pressure inside the cooking container 41 so that the juice can be held in a low oxygen environment. Therefore, juice can be carried or preserved in a refrigerator or the like while retaining the juice in a low oxygen state by using the cooking container 41 sealed with the second cover 131.

To drink the juice inside the cooking container 41, the push button 27d of the cover-side check valve 55 of the second cover 131 is first pressed with a hand to open the cover-side check valve 55. The cooking container 41 has thereby the atmospheric pressure and the second cover 131 is detached from the cooking container 41. In this state, the juice inside can be drunk using the cooking container 41 as a drinking container.

Also in the eleventh embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

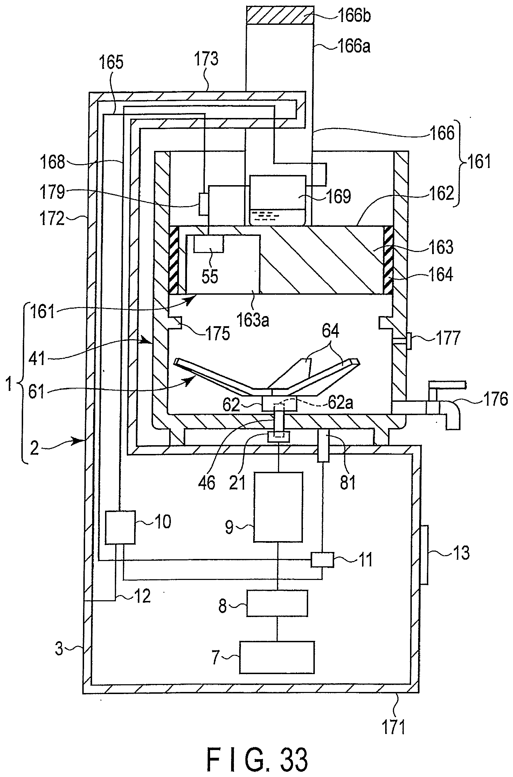

FIGS. 33 to 35 show the twelfth embodiment. In a mixer according to the twelfth embodiment described below, the same reference signs are attached to components achieving the same functions as those described in the fifth embodiment or similar functions and the description thereof is omitted.

A mixer 1 according to the twelfth embodiment includes a driving device 2, a cooking container 41, a closing member 161, and a processing tool 61.

As shown in FIG. 33, the driving device 2 includes a stand 171, a cover portion 172 raised from the stand 171, and a head portion 173 continued to the top end of the cover portion 172.

The stand 171 corresponds to a driving unit described in the fifth embodiment. The stand 171 includes a housing 3, an AC (alternating current)/DC (direct current) switching power supply 7, a DC (direct current)/DC (direct current) converter 8, a motor 9, a pressure reducing device 10, a control device 11, an operation panel 13, a tool linking member 21 functioning as a supporting portion of the processing tool 61, and a container detection device 81.

The cover portion 172 is projected upward from, for example, a backside region of the stand 171 and communicatively connected to the inside of the stand 171. The head portion 173 is opposed to the stand 171 from above. The head portion 173 is projected in the front direction from the cover portion 172 and is formed in, for example, a tapering shape.

The cooking container 41 has a volume capable of storing several cups of juice. The cooking container 41 placed on the stand 171 can be inserted and removed between the stand 171 and the head portion 173. While the cooking container 41 is placed on the stand 171, a rotation axis 46 mounted by passing through the bottom wall of the cooking container 41 is fitted to the tool linking member 21 such that rotation can be transmitted thereto.

The top end of the cooking container 41 is open. The cooking container 41 has a stopper portion 175 in a lower portion thereof. The stopper portion 175 is formed as, for example, a circular height integrally projected from the inner circumferential surface of the cooking container 41. Instead, a step formed between the upper portion and the lower portion of the cooking container 41 by making the diameter of the lower portion smaller than that of the upper portion may also be used as a stopper portion. The upper portion above the stopper portion 175 of the cooking container 41 is a cylindrical portion in which the diameter does not change. At least the cylindrical portion is transparent to allow visual recognition inside the cooking container 41.

The processing tool 61 is formed of a connection portion 62 and a tool element 64 and is configured not to include a tool axis. The processing tool 61 is removably or fixedly connected to an upper portion of the rotation axis 46 inside the cooking container 41. The top end of the processing tool 61 is arranged lower than the height position of the top end of the stopper portion 175.

A cock 176 is mounted at the bottom of the cooking container 41 below the stopper portion 175. The cock 176 includes an effluent pipe, a cock body that opens/closes the effluent pipe, and a cock handle linked to the cock body. The cock body is rotatably arranged inside the effluent pipe. Juice inside the cooking container 41 can flow out after the cock body being rotated using the cock handle to open the effluent pipe.

An air supply valve 177 is mounted on the cooking container 41 positioned between the cock 176 and the stopper portion 175. The air supply valve 177 is manually opened by the user when liquid food such as juice accumulated inside the cooking container 41 is allowed to flow out from the cock 176. When a manual opening forces acts, the air supply valve 177 is preferably configured to automatically close by the force of spring or the like.

The closing member 161 includes a head 162 and a handle 166.

The head 162 includes a head body 163 and a seal 164 mounted on a circumferential portion of the head body 163. The seal 164 is formed from rubber, elastomer or the like capable of elastic deformation. The diameter of the head 162 specified by the seal 164 is a size fitting to the inside diameter of the upper portion in the cylindrical shape of the cooking container 41.

The head 162 is fitted into the cooking container 41 movably in the up and down direction. In this fitted state, the seal 164 in an elastically deformed state is slidably in contact with the inner surface of the upper portion of the cooking container 41. The head 162 can be inserted into or removed from the cooking container 41 from above.

The head body 163 is provided with a recess 163a open to the undersurface thereof and a cover-side check valve 55 is disposed in the recess 163a. The cover-side check valve 55 has the same configuration as that of the cover-side check valve described above and is opened by a negative pressure when the air in a space below the head body 163 is exhausted and retains a closed state otherwise.

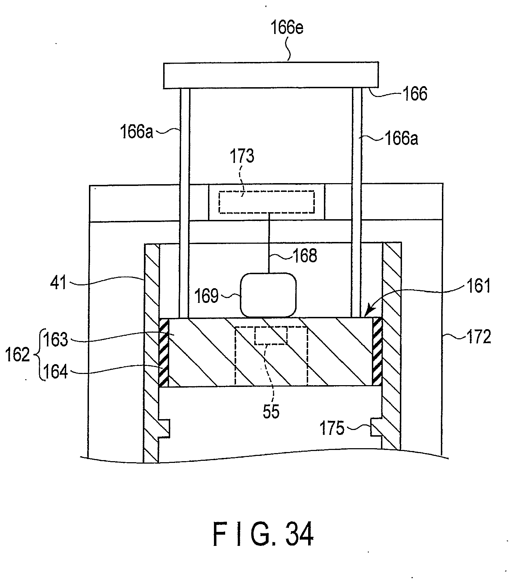

As shown in FIG. 34, the handle 166 is formed of, for example, two longitudinal bars 166a and a grip portion 166b configured as a crossbar. The bottom end of the longitudinal bar 166a is linked to the head body 163 from above. The top end of the longitudinal bar 166a is continued to the grip portion 166b to support the grip portion 166b substantially horizontally. The head 162 can be moved vertically by gripping the handle 166. The head portion 173 of the driving device 2 is arranged between the two longitudinal bars 166a to prevent interference between the handle 166 and the head portion 173 of the driving device 2.

One end of an intake pipe 168 is connected to the cover-side check valve 55 mounted on the head 162. The intake pipe 168 is drawn to the stand 171 via the head portion 173 and the inside of the cover portion 172 and a drawing-in end (other end) thereof is connected to the suction port of the pressure reducing device 10. The intake pipe 168 is made of a material that can freely be deformed following the movement of the closing member 161.

A liquid reservoir container 169 is mounted at some midpoint of the intake pipe 168. For example, the liquid reservoir container 169 is mounted in a piping region stretching between the head portion 173 and the head 162. The liquid reservoir container 169 is removably placed on the top surface of the head 162.

Being supported by the head body 163, a liquid detection device 179 is disposed on the upper side thereof. The liquid detection device 179 detects whether cooked liquid food such as juice has circulated through the cover-side check valve 55. Without being subject to constraints of the following description, a level gauge may be used, but the liquid detection device 179 is formed of a microswitch turned on/off by using movement of the intake pipe 168.

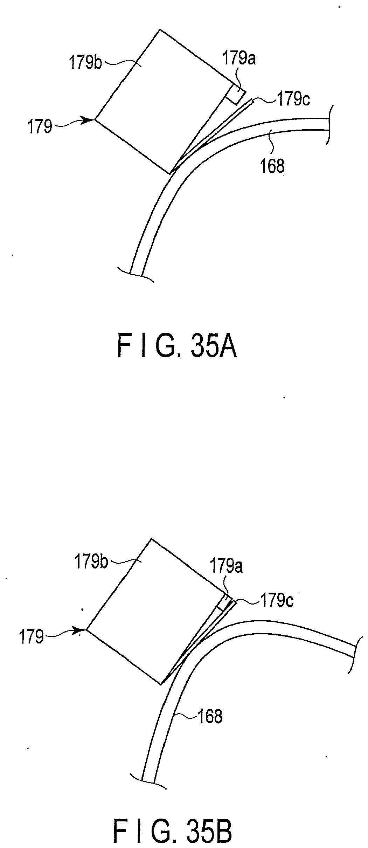

That is, as shown in FIGS. 35A and 35B, the micro-switch includes a switch body 179b having a movable body 179a that can be pushed in projected therefrom and a lever-shaped actuator 179c rotationally movably mounted on the body and which pushes in the movable body 179a when rotationally moved in a direction approaching the switch body 179b. The micro-switch retains an OFF state when the movable body 179a is not pushed by the actuator 179c and changes to an ON state when the movable body 179a is pushed by the actuator 179c.

A portion of the intake pipe 168 is piped along the actuator 179c. The air pressure when the air circulates through the intake pipe 168 is low. Thus, as shown in FIG. 35A, the actuator 179c is not pushed by the intake pipe 168 and the micro-switch retains the OFF state. When liquid food circulates through the intake pipe 168, the liquid pressure is high. Thus, as shown in FIG. 35B, the actuator 179c is pushed by the intake pipe 168 in a direction approaching the switch body 179b and the micro-switch changes to the ON state.

Detection information of the liquid detection device 179 is supplied to the control device 11 via a signal line 165 shown in FIG. 33. When a signal of detection of an outflow of liquid food by the liquid detection device 179 is supplied, the control device 11 exercises control to inhibit the operation of the pressure reducing device 10. Liquid food flowing into the intake pipe 168 is prevented from being sucked into the pressure reducing device 10 by such control and the pressure reducing device 10 is thereby protected.

The mixer 1 in the twelfth embodiment has the same configuration as that in the embodiments described above including a configuration that is not shown except the configuration described above.

Next, the procedure for using the mixer 1 in the twelfth embodiment will be described.

First, put the processing tool 61 and food to be processed into the cooking container 41 and then, insert the head 162 of the closing member 161 into the top end of the cooking container 41. Accordingly, the cooking container 41 is sealed by the closing member 161 and also the head 162 is retained in an inserted height position due to a frictional force of the seal 164.

Next, place the cooking container 41 on the stand 171 of the driving device 2 and arrange the liquid reservoir container 169 on the head 162. The state set as described above is shown in FIG. 33.

In this state, first drive the pressure reducing device 10. Accordingly, a negative pressure acts on the cover-side check valve 55 via the intake pipe 168 and the cover-side check valve 55 is opened. Thus, the pressure inside the cooking container 41 is reduced and the food is placed in a low oxygen atmosphere.

Then, stop the pressure reducing device 10 and drive the motor 9 for a desired time. The processing tool 61 is thereby rotated and the food inside the cooking container 41 is crushed to produce juice. Due to an accompanying reduction of the volume of food and the like, an air layer is formed between the liquid level of juice and the head 162.

Next, grip the handle 166b to push down the closing member 161. The pressure of the air layer is increased by the pushing down and thus, drive the pressure reducing device 10 again at an appropriate time to exhaust the air inside the cooking container 41. By repeating the work an appropriate number of times, the undersurface of the head 162 is brought into contact with the entire liquid level of juice inside the cooking container 41. Whether such a contact state is reached is checked visually by seeing through the cooking container 41.

In this state, almost all the air inside the cooking container 41 is exhausted. Therefore, juice stored inside the cooking container 41 can be retained in a state in which oxidation hardly occurs.

The juice stored as described above can be taken out of the cooking container 41 by opening the cock 176 and also opening the air supply valve 177. Accordingly, the air is supplied to the cooking container 41 from the air supply valve 177.

Thus, after allowing a desired quantity of juice to flow out from the cock 176, as described above, push down the closing member 161 and drive the pressure reducing device 10 again. Accordingly, the undersurface of the head 162 is brought into contact with the liquid level of juice inside the cooking container 41 again so that the juice inside the cooking container 41 can be retained in a state in which oxidation hardly occurs.

After the stopper portion 175 comes into contact with the closing member 161 from below, the closing member 161 will not be pushed down any more. Thus, the closing member 161 can be prevented from being damaged by the tool element 64 of the processing tool 61 after coming into contact therewith. The quantity of juice remaining in the cooking container 41 at this point is preferably set to, for example, a quantity corresponding to a cup.

Also in the twelfth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

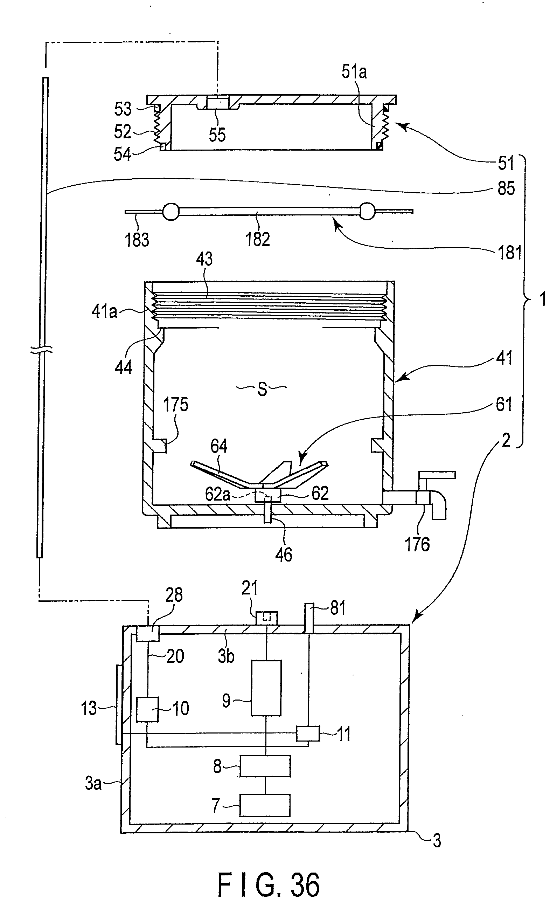

FIGS. 36 to 38 show the thirteenth embodiment. In a mixer according to the thirteenth embodiment described below, the same reference signs are attached to components achieving the same functions as those described in the fifth embodiment or similar functions and the description thereof is omitted.

A mixer 1 according to the thirteenth embodiment includes a driving device 2, a cooking container 41, a cover 51 serving also as a closing member, a processing tool 61, intake piping 85, and an inner cover 181.

The driving device 2 is used as a stand on which the cooking container 41 is removably placed. The configuration of the driving device 2 is the same as that of a driving device described in the fifth embodiment.

The cooking container 41 has a volume capable of storing several cups of juice. While the cooking container 41 is placed on a housing 3 of the driving device 2, a rotation axis 46 mounted by passing through the bottom wall of the cooking container 41 is fitted to the tool linking member 21 such that rotation can be transmitted thereto. The configuration of the processing tool 61 connected to an upper portion of the rotation axis 46 is the same as that of a processing tool described in the fifth embodiment.

The top end of the cooking container 41 is open. The cooking container 41 has a stopper portion 175 in a lower portion thereof. The stopper portion 175 is formed as, for example, a circular height integrally projected from the inner circumferential surface of the cooking container 41, but instead, a step formed between the upper portion and the lower portion of the cooking container 41 by making the diameter of the lower portion smaller than that of the upper portion may also be used as a stopper portion. The upper portion above the stopper portion 175 of the cooking container 41 is, excluding the top end thereof, a cylindrical portion in which the diameter does not change.

A cock 176 is mounted at the bottom of the cooking container 41 below the stopper portion 175. The cock 176 includes an effluent pipe, a cock body that opens/closes the effluent pipe, and a cock handle linked to the cock body. The cock body is rotatably arranged inside the effluent pipe. Juice inside the cooking container 41 can flow out after the cock body being rotated using the cock handle to open the effluent pipe.

The configuration of the cover 51 that opens/closes the top end opening of the cooking container 41 is the same as that of a cover described in the fifth embodiment.

The inner cover 181 can be put into and taken out of the cooking container 41. The inner cover 181 is arranged and used in a state in contact with the liquid level like covering substantially the entire liquid level of liquid food such as juice stored inside the cooking container 41.

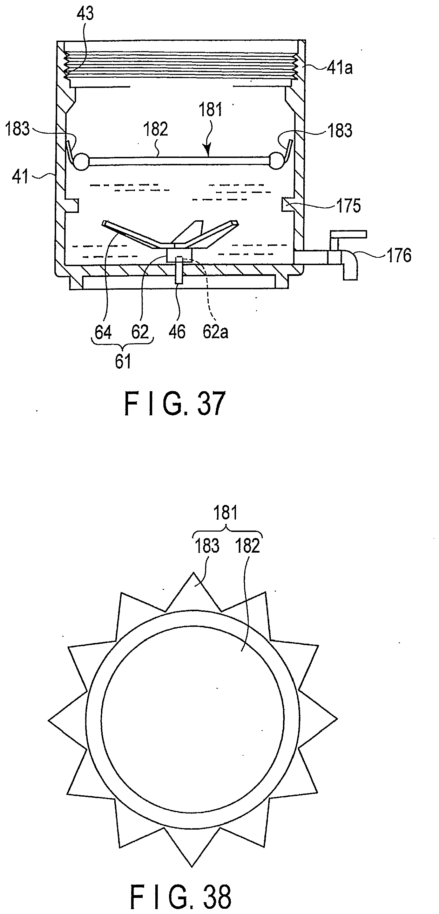

Thus, as shown in FIG. 36, the inner cover 181 includes a cover body 182 and a fin portion 183. The cover body 182 is circular and the diameter thereof is substantially equal to the inside diameter of the cooking container 41 above the stopper portion 175. The fin portion 183 is far thinner than the cover body 182 and can freely be deformed. As shown in FIG. 38, the fin portion 183 is integrally projected along the outer circumference of the cover body 182 by forming, for example, a jaggy shape or a wave shape.

The mixer 1 in the thirteenth embodiment has the same configuration as that in the fifth embodiment including a configuration that is not shown except the configuration described above.

Next, the procedure for using the mixer 1 in the thirteenth embodiment will be described.

First, after communicatively connecting a fitting 28 and a cover-side check valve 55 using intake piping 85, reduce the pressure inside the cooking container 41 and process food under the reduced pressure to produce juice according to the procedure described in the fifth embodiment. After the juice is produced, the pressure inside the cooking container 41 while the cover 51 is closed is retained as a negative pressure. Thus, even if the cock 176 is opened, juice cannot be taken out.

Thus, the juice inside the cooking container 41 can be taken out by detaching the cover 51 and then opening the cock 176. Thereafter, the inner cover 181 is dropped by the user into the cooking container 41. Accordingly, as shown in FIG. 37, the cover body 182 is arranged in a state in contact with the liquid level by covering substantially the entire liquid level of juice and also floating on the juice. In addition, the fin portion 183 is arranged so as to be in contact with the inner surface of the cooking container 41 by being bent at the root thereof.

Because the inner cover 181 is arranged in a state substantially blocking contact between juice and the air, oxidation of juice stored in the cooking container 41 can be inhibited. The fin portion 183 has a jaggy shape and so juice covered with the inner cover 181 can come, even if slightly, into contact with the air. If the cock 176 is opened in this state, juice can be taken out. In this case, the inner cover 181 moves downward following the fall of the liquid level due to the outflow of juice. Thus, even if a portion of juice is taken out, the state capable of inhibiting oxidation of juice stored inside the cooking container 41 is maintained.

After the stopper portion 175 comes into contact with the cover body 182 of the inner cover 181 from below, the inner cover 181 will not fall any more. Thus, the inner cover 181 can be prevented from being damaged by the tool element 64 of the processing tool 61 after coming into contact therewith. The quantity of juice remaining in the cooking container 41 at this point is preferably set to, for example, a quantity corresponding to a cup.

Also in the thirteenth embodiment, as described above, the cooking device 1 capable of processing food with a simple configuration while inhibiting oxidation of food and also inhibiting pressure inside the cooking container 41 from rising excessively can be provided.

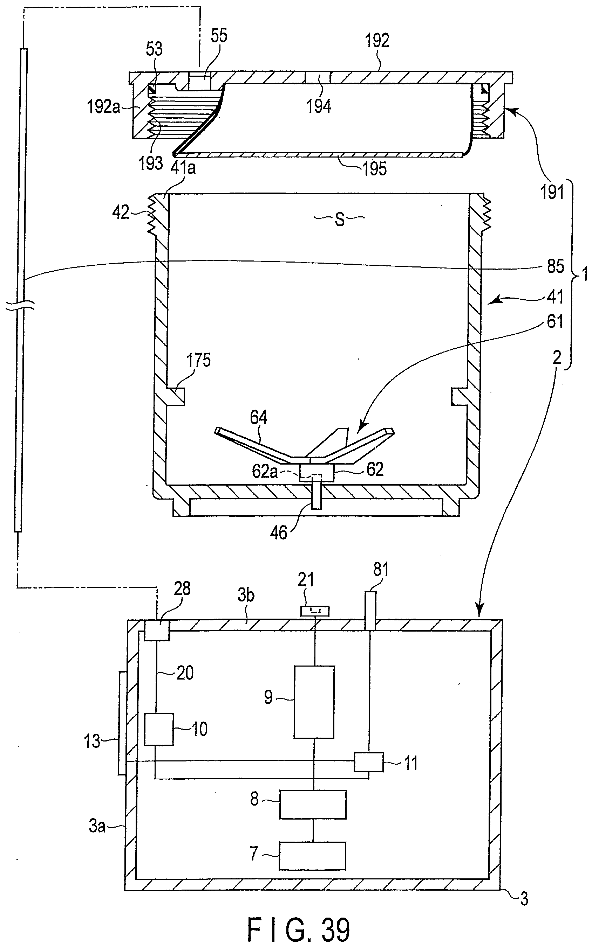

FIGS. 39 to 44 show the fourteenth embodiment. In a mixer according to the fourteenth embodiment described below, the same reference signs are attached to components achieving the same functions as those described in the fifth embodiment or similar functions and the description thereof is omitted.

A mixer 1 according to the fourteenth embodiment includes, as shown in FIG. 39, a driving device 2, a cooking container 41, a closing member 191, a processing tool 61, and intake piping 85.

The driving device 2 is used as a stand on which the cooking container 41 is removably placed. The configuration of the driving device 2 is the same as that of a driving device described in the fifth embodiment.

The cooking container 41 has the inside that can be seen through and the top end thereof is open. Instead of an inner screwing portion, an outer screwing portion 42 configured as a male screw portion is provided on an opening edge 41a of the cooking container 41. The cooking container 41 has a stopper portion 175 in a lower portion thereof. The stopper portion 175 is formed as, for example, a circular height integrally projected from the inner circumferential surface of the cooking container 41, but instead, a step formed between the upper portion and the lower portion of the cooking container 41 by making the diameter of the lower portion smaller than that of the upper portion may also be used as a stopper portion.

The cooking container 41 can removably be placed on a housing 3 of the driving device 2. While the cooking container 41 is placed on the housing 3, a rotation axis 46 mounted by passing through the bottom wall of the cooking container 41 is fitted to the tool linking member 21 such that rotation can be transmitted thereto. The configuration of the processing tool 61 connected to an upper portion of the rotation axis 46 is the same as that of a processing tool in the fifth embodiment.

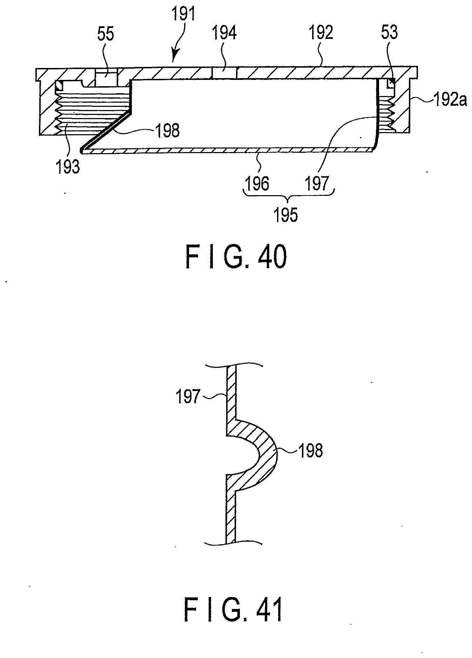

The closing member 191 includes, as shown in FIG. 40, a member base 192 and a bag member 195.

The member base 192 is circular and the diameter thereof has a size that can cover the top end opening of the cooking container 41. The member base 192 includes a circular wall 192a on a circumferential back side thereof and an inner screwing portion 193 configured as a female screw portion is formed on the inner circumferential surface of the wall 192a. The inner screwing portion 193 is removably screwed into the outer screwing portion 42. Due to the screwing, the closing member 191 can removably be connected to the cooking container 41 by covering the opening thereof. A sealant 53 is mounted on the inner screwing portion 193 positioned on the top end thereof.

A vent hole 194 passing through in the up and down direction is opened in, for example, the center portion of the member base 192.

The bag member 195 is formed from a soft material that can be expanded and contracted, for example, rubber and attached to the back side of the member base 192. The internal space of the bag member 195 is communicatively connected to the vent hole 194. The bag member 195 is expanded/contracted according to the inflow or outflow of the outside air through a connecting hole 184.

To enable the expansion/contraction, the bag member 195 is formed, as shown, for example, in FIG. 40, like a bag including a bottom plate portion 196 and an expansion/contraction portion 197. The bottom plate portion 196 is a hard disc that is not easily deformed. The diameter of the bottom plate portion 196 is substantially equal to the inside diameter of the upper portion of the cooking container 41. The expansion/contraction portion 197 is formed thin so as to be able to be freely deformed accompanied by elastic deformation. The top end of the expansion/contraction portion 197 is fixed to the back side of the member base 192 and the top end of the expansion/contraction portion 197 is integrally continued to the circumference of the bottom plate portion 196.

The expansion/contraction portion 197 includes a vent portion 198. As shown in FIG. 41, the vent portion 198 is formed as a groove. The vent portion 198 is made thick so as not to be easily deformed accompanying the expansion of the expansion/contraction portion 197. The vent portion 198 extends in the up and down direction and the bottom end thereof is open to the bottom plate portion 196.

Instead of providing the vent portion 198, the expansion/contraction portion 197 may be provided in a portion of an upper inner circumferential surface of the cooking container 41. In this case, it is desirable to provide a plurality of ribs close to each other extending in the up and down direction on the upper inner circumferential surface of the cooking container 41 to use a groove formed between neighboring ribs as the vent portion 198.

A cover-side check valve 55 is mounted on the circumference of the closing member 191. The vent portion 198 is disposed like continuing to the underside of the cover-side check valve 55. The cover-side check valve 55 mounted on a cover 51 is the same as a cover-side check valve described in the fifth embodiment. The configuration of the cover-side check valve 55 is as described above using FIGS. 7 and 8 and so a detailed description thereof is omitted, but the cover-side check valve 55 includes a push button for valve release (not shown).

The mixer 1 in the fourteenth embodiment has the same configuration as that in the fifth embodiment including a configuration that is not shown except the configuration described above.

The procedure for using the mixer 1 in the fourteenth embodiment will be described.

First, put the processing tool 61 into the cooking container 41 and connect to the rotation axis 46 and also put food to be processed and water into the cooking container 41. Then, screw the inner screwing portion 193 of the closing member 191 into the outer screwing portion 42 of the cooking container 41 to mount the closing member 191 on the cooking container 41. In this state, the bag member 195 of the closing member 191 is accommodated in the upper portion of the cooking container 41 and the vent portion 198 is close to the inner surface of the upper portion of the cooking container 41.

Next, after communicatively connecting a fitting 28 and the cover-side check valve 55 using intake piping 85, reduce the pressure inside the cooking container 41 according to the procedure described in the fifth embodiment. In this case, a negative pressure generated by the pressure reducing device 10 propagates to the cover-side check valve 55 of the cover 191 as a closing member through the intake piping 85. Accordingly, the cover-side check valve 55 is opened and the air in the accommodation space S is exhausted and thus, the pressure inside the cooking container 41 is reduced.

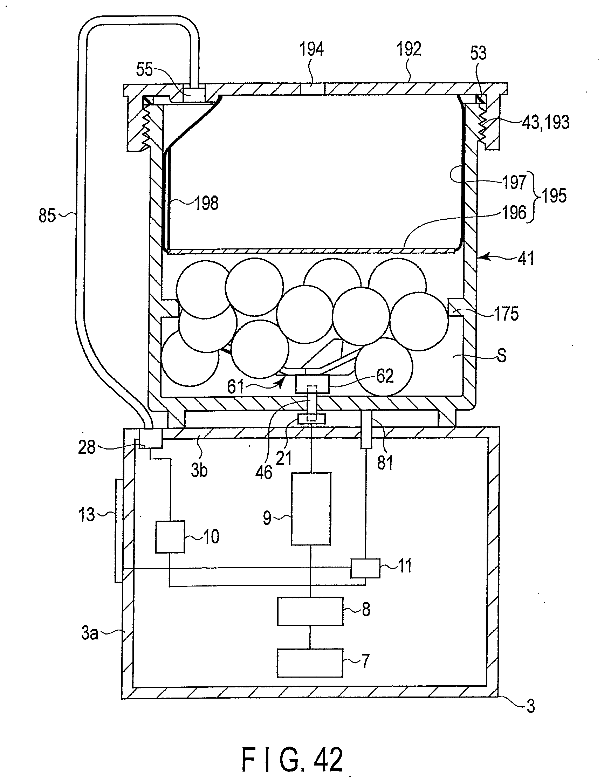

Accompanying the pressure reduction, the bag member 195 is expanded by the outside air being supplied from the vent hole 194. Thus, the quantity of air inside the cooking container 41 is reduced. In addition, the expansion/contraction portion 197 of the expanded bag member 195 is brought into contact with the upper inner circumferential surface of the cooking container 41 like being stuck thereto. Accompanying the contact, an airway is secured between the vent portion 198 and the upper inner circumferential surface of the cooking container 41. Thus, regardless of the expansion of the bag member 195, the air in the lower space of the bag member 195 continues to be exhausted through the airway. In this manner, the pressure inside the cooking container 41 is reliably reduced to reduce the quantity of air inside the cooking container 41. This state is shown in FIG. 42.

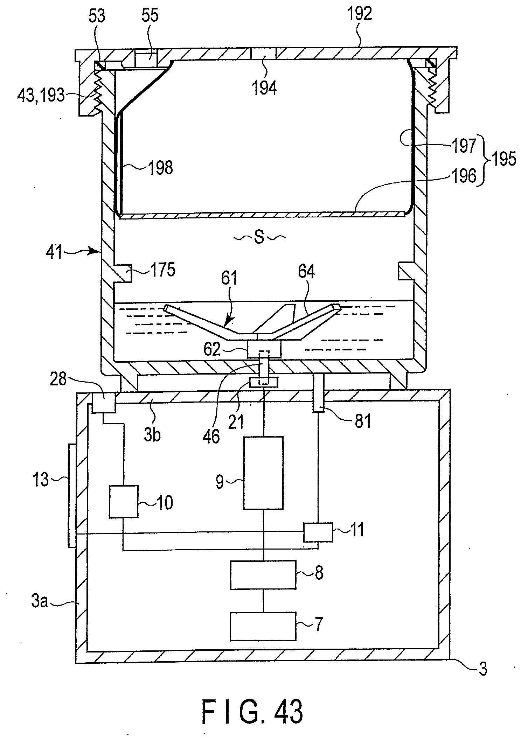

Then, driving of the pressure reducing device 10 is stopped and thus, the cover-side check valve 55 of the closing member 191 is closed and the cooking container 41 is retained in a pressure reduced state. Then, drive a motor 9. Thus, the food can be mixed by the processing tool 61 in a state in which the quantity of air inside the cooking container 41 is small and the pressure is reduced and juice is produced under such conditions. A state in which juice is produced is shown in FIG. 43. Juice in this state is retained in a state in which contact with the air is substantially blocked and thus, oxidation of the juice stored inside the cooking container 41 is inhibited.

In a state after juice is produced, the volume of food and the like decreases and an air layer is formed between the liquid level of the juice and the bottom plate portion 196 of the bag member 195. In this case, to eliminate the air layer from visual recognition from outside the cooking container 41, the air layer may be reduced by driving the pressure reducing device 10 again to expand the bag member 195 and then exhausting the air inside the cooking container 41.

The bag member 195 expands downward after the pressure reducing device 10 is re-driven. When the bag member 195 expands while extending downward, the stopper portion 175 comes into contact with the bottom plate portion 196 of the bag member 195 from below at some point and the bottom plate portion 196 will not fall any more. Thus, the bottom plate portion 196 can be prevented from being damaged by the tool element 64 of the processing tool 61 after coming into contact therewith.

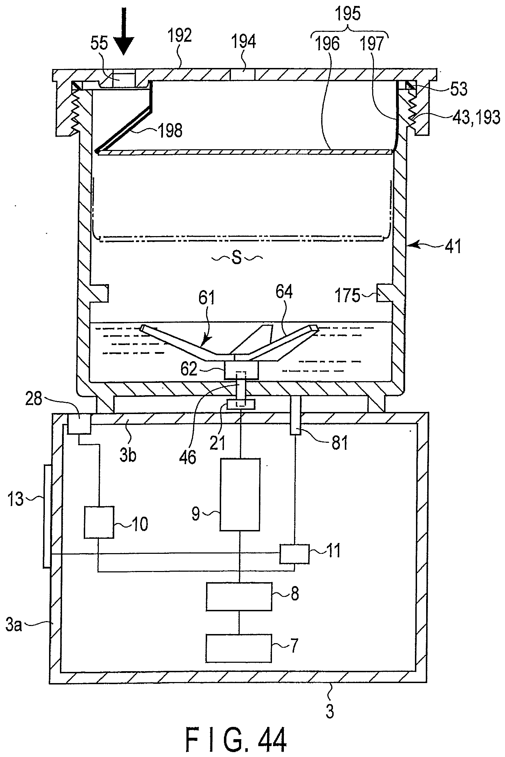

The cooking container 41 in which processed juice is stored is detached from the housing 3 of the driving device 2 while remaining in a state closed by the closing member 191 and is carried or preserved in a refrigerator or the like. In the procedure for drinking juice inside the cooking container 41, first open the cover-side check valve 55 mounted on the closing member 191. This operation is performed by a push button 27d (see FIG. 7 or 8) of the cover-side check valve 55 being pressed in a direction indicated by an arrow in FIG. 44 with a finger of the user or the like.

When the cover-side check valve 55 is opened in this manner, the outside air is introduced into the cooking container 41 through the airway. Accordingly, while the air inside the expansion/contraction portion 197 being exhausted through the vent hole 194, the bottom plate portion 196 rises with the contraction of the expansion/contraction portion 197. This image is shown as a relationship between a chain double-dashed line and a solid line in FIG. 44.

With the introduction of air into the cooking container 41, the closing member 191 can easily be detached from the cooking container 41 without being affected by a negative pressure thereafter. Then, the juice inside can be drunk using the cooking container 41 as a drinking container. In addition, juice can be poured from the cooking container 41 into a drinking container prepared separately and then drunk.

Also in the thirteenth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. Further, the mixer 1 in the thirteenth embodiment reduces the pressure inside the cooking container 41 in a state of reduced air quantity inside the cooking container 41 due to expansion of the bag member 195 and therefore, the pressure reducing device 10 at low price whose pressure reducing performance is low can be used as the pressure reducing device 10.

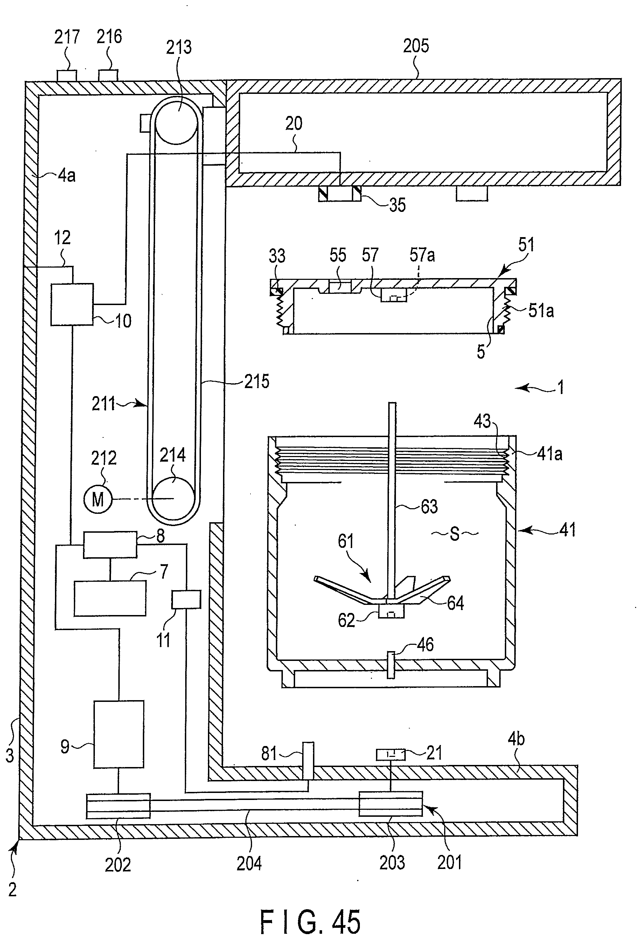

FIGS. 45 to 49 show the fifteenth embodiment. In a mixer according to the fifteenth embodiment described below, the same reference signs are attached to components achieving the same functions as those described in the ninth embodiment or similar functions and the description thereof is omitted.

A mixer 1 according to the fifteenth embodiment includes, as shown in FIG. 45, a driving device 2, an intake pipe 20, a cooking container 41, a cover 51 serving also as a closing member, a processing tool 61, a lifting member 205, and a lifting mechanism 211.

The configuration of the cooking container 41 is substantially the same as that of a cooking container described in the ninth embodiment. As described above, an inner screwing portion 43 is formed on an opening edge 41a of the cooking container 41 and a rotation axis 46 is mounted on the bottom wall of the cooking container 41 by passing therethrough.

A male screw portion 52 is provided on the outer circumference of a cylindrical portion 51a of the cover 51. Otherwise, the configuration of the cover 51 is the same as that of a cover described in the ninth embodiment. The cover 51 includes an axis supporting portion 57 directed downward in the center portion of the undersurface of the cover 51. Further, a cover-side check valve 55 is mounted on the cover 51. As described above, the cover-side check valve 55 allows the air to flow out from the accommodation space S when the air in the accommodation space S is exhausted and also stops the opposite flow of the air after an exhaust operation.

The processing tool 61 has the same configuration as that of a processing tool described in the ninth embodiment. As described above, a connection portion 62 included in the processing tool 61 is removably connected to the rotation axis 34 and also a tool axis 63 included in the processing tool 61 is removably connected to the axis supporting portion 57 of the cover 51 sealing the cooking container 41. Instead of including the tool axis, the processing tool 61 may be configured to be removably connected to the upper portion of the rotation axis 46. Alternatively, instead of including the tool axis, the processing tool 61 may be fixed to the upper portion of the rotation axis 46 so as not to be removed.

Next, the driving device 2 will be described. As shown in FIG. 45 to 49, a housing 3 included in the driving device 2 includes a housing main portion 4a and a stand 4b. The housing main portion 4a is formed longer than is wide by extending in the up and down direction. The stand 4b is projected substantially horizontally forward from the lower portion of the housing main portion 4a. The inside of the stand 4b and that of the housing main portion 4a are communicatively connected.

The cooking container 41 is removably placed on the stand 4b. Thus, the housing main portion 4a is arranged side by side with the cooking container 41 placed on the stand 4b in the lateral direction. For example, the housing main portion 4a is arranged by being placed on the rear side of the cooking container 41.

Thus, the cooking container 41 on the stand 4b and the housing main portion 4a arranged side by side in the lateral direction, instead of overlapping in the up and down direction. Thus, the height of the mixer 1 can be made lower and also the installation state of the mixer 1 when the mixer 1 is installed can be stabilized.

A tool linking member 21 described in the ninth embodiment is mounted on the stand 4b on which the cooking container 41 is placed and also a container detection device 81 is mounted thereon.

The housing main portion 4a contains an AC (alternating current)/DC (direct current) switching power supply 7, a DC (direct current)/DC (direct current) converter 8, a motor 9, a pressure reducing device 10, and a control device 11 and also an operation panel (not shown) is mounted on the outside surface of the housing main portion 4a. These components are the same as corresponding components described in the ninth embodiment. Further, the housing main portion 4a has an exhaust pipe 12 communicatively connecting the outside surface and pressure reducing device 10 installed therein.

The housing 3 contains a driving mechanism 201 extending over the housing main portion 4a and the stand 4b. The driving mechanism 201 is a wrapping driving mechanism including, for example, a driving pulley 202, a driven pulley 203, and an endless driving belt 204 wrapped around these pulleys. However, instead of the mechanism, a gear driving mechanism formed of a train of gears can also be used. The driving pulley 202 serving as an input gear of the driving mechanism 201 is linked to the output axis of the motor 9. The driven pulley 203 serving as an output gear of the driving mechanism 201 is linked to an axis contact of the tool linking member 21 inserted into the stand 4b.

Thus, the rotation of the output axis included in the motor 9 is transmitted to the tool linking member 21 via the driving mechanism 201. In this case, the rotation of the output axis can be transmitted to the tool linking member 21 by changing speed based on the difference of diameters of the input gear and the output gear of the driving mechanism 201 to rotate the member.

The lifting member 205 is disposed above the stand 4b and supported by the housing main portion 4a and can move vertically using the upper portion of the housing main portion 4a as a guide. The lifting member 205 is used to retain the cooking container 41 on which the cover 51 is mounted sandwiched between the lifting member and the stand 4b and also to move the intake pipe 20 connected to the suction port of the pressure reducing device 10.

That is, the lifting member 205 is formed like a box in substantially the same shape as the stand 4b and the intake pipe 20 is drawn thereinto. The tip of the intake pipe 20 is connected to the lower wall of the lifting member 205 and is open downward. Thus, the intake pipe 20 that is freely deformable is moved vertically following the movement of the lifting member 205.

Incidentally, a slit through which the intake pipe 20 runs is provided on the front wall of the housing main portion 4a by extending in the up and down direction. Further, the intake pipe 20 is inserted into a cable carrier (not shown) disposed inside the housing main portion 4a. Accordingly, the intake pipe 20 is prevented from coming into contact with components arranged inside the housing main portion 4a and also an accompanying increase of resistance of the intake pipe 20 to movement can be prevented. Thus, the intake pipe 20 can smoothly be moved following movement of the lifting member 205.

A seal ring 35 is mounted to one of the lower wall of the lifting member 205 and the cover 51, for example, the lower wall. The seal ring 35 is sandwiched between the lifting member 205 and the cover 51 like surrounding the tip of the intake pipe 20. The internal space of the sandwiched seal ring 35 is communicatively connected not only to the intake pipe 20, but also to the cover-side check valve 55.

The lifting mechanism 211 is contained in the housing main portion 4a. The lifting mechanism 211 includes a mechanism motor 212, an upper pulley 213, a lower pulley 214, and an endless driving belt 215. The mechanism motor 212 is connected to one of the upper pulley 213 and the lower pulley 214 arranged thereunder to drive the pulley. The mechanism motor 212 can rotate in normal and opposite directions. The driving belt 215 is wrapped around the upper pulley 213 and the lower pulley 214. The driving belt 215 is linked to the lifting member 205 to support the lifting member 205 in a cantilevered state.

Also, the lifting member 205 can movably be provided in a form of manually sliding vertically. In this case, it is preferable to cause, for example, a retaining mechanism using the principle of a lever to retain the lifting member 205 in a resting state in any height position to which the lifting member is slid. If a configuration in which manual movement of the lifting member 205 is enabled is adopted, the mechanism motor 212, a first switch 216, a second switch 216 and the like can be omitted.

The first switch 216 and the second switch 217 are disposed on, for example, an upper wall of the housing main portion 4a. A signal to rotate the mechanism motor 212 in normal direction is provided to the control device 11 by the first switch 216 being pressed. While the first switch 216 is pressed, the mechanism motor 212 is rotated in normal direction by the control device 11. Accordingly, the driving belt 215 is rotated such that the lifting member 205 is lowered. A signal to rotate the mechanism motor 212 in opposite direction is provided to the control device 11 by the second switch 217 being pressed. While the second switch 217 is pressed, the mechanism motor 212 is rotated in opposite direction by the control device 11. Accordingly, the driving belt 215 is rotated such that the lifting member 205 is lifted.

When the lifting member 205 reaches a predetermined lowering position or lifting position, the movement of the lifting member 205 is stopped in the position and also the lifting member 205 is retained in the position. As an operation for this purpose, the pressing of the first switch 216 or the second switch 217 may be released. In this case, it is preferable to provide a lock mechanism to retain the lifting member 205 in a predetermined height position more reliably. To enable or cancel a lock operation of the lock mechanism, a button operated from outside the housing main portion may be used. In addition, it is preferable to adopt a mechanism in which locking and unlocking are repeated each time the button is pressed.

The mixer 1 in the fifteenth embodiment has the same configuration as that in the ninth embodiment including a configuration that is not shown except the configuration described above.

The procedure for using the mixer 1 in the fifteenth embodiment will be described.

First, put the processing tool 61 into the cooking container 41 and connect to the rotation axis 46 and also put food to be processed and water into the cooking container 41. Then, screw the male screw portion 52 of the cover 51 into the inner screwing portion 43 of the cooking container 41 to mount the cover 51 also serving as a closing member on the cooking container 41. Accordingly, the cooking container 41 is sealed and also the tool axis 63 is fitted and supported by the axis supporting portion 57.

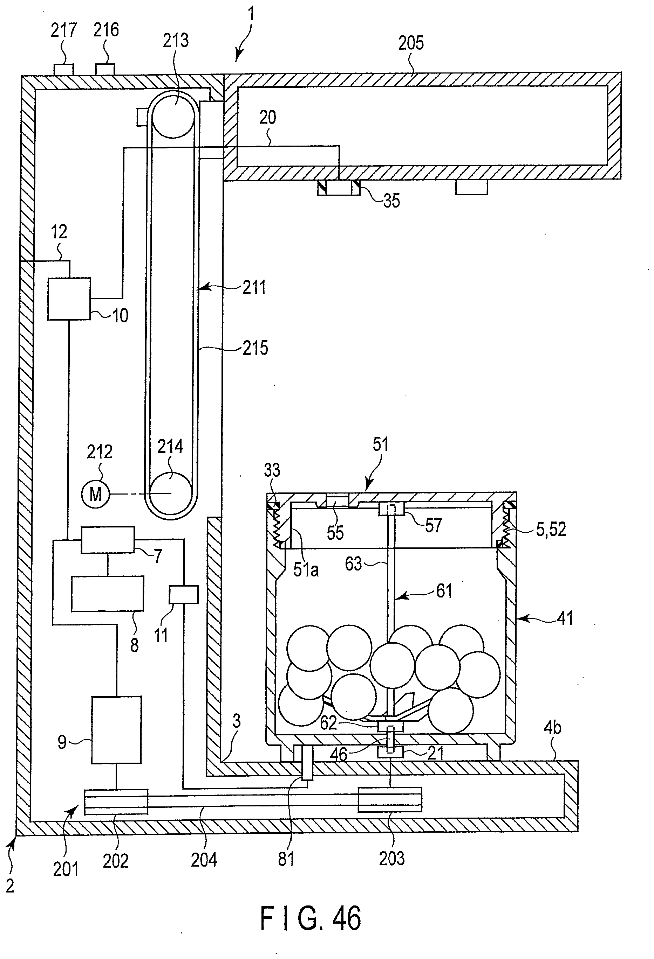

Next, connect the tool linking member 21 on the stand 4b and the rotation axis 46 of the cooking container 41 and also place cooking container 41 mounted with the cover 51 on the stand 4b of the housing 3. This state is shown in FIG. 46.

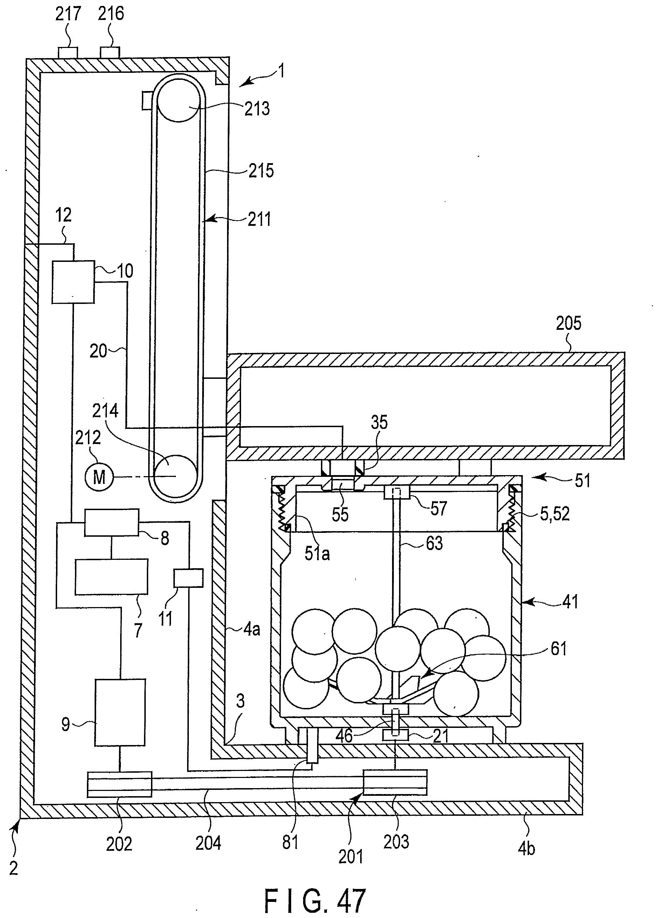

Then, operate the lifting mechanism 211 by pressing the first switch 216 to lower the lifting member 205. With this lowering, as shown in FIG. 47, the cooking container 41 mounted with the cover 51 is sandwiched between the stand 4b and the lifting member 205. In this state, the seal ring 35 is sandwiched between the cover 51 and the lifting member 205 in a compressed state and the tip opening of the intake pipe 20 and the cover-side check valve 55 are communicatively connected via the seal ring 35.

In this state, drive the pressure reducing device 10. Accordingly, a negative pressure generated by the pressure reducing device 10 acts on the cover-side check valve 55 from above through the intake pipe 20 and the cover-side check valve 55 is opened. Therefore, the air inside the cooking container 41 is exhausted and the pressure therein is reduced and so food inside the cooking container 41 is placed in a low oxygen concentration environment.

Then, stop the pressure reducing device 10 and the cover-side check valve 55 is closed due to the negative pressure inside the cooking container 41. Next, operate the lifting mechanism 211 by pressing the second switch 217 to lift the lifting member 205.

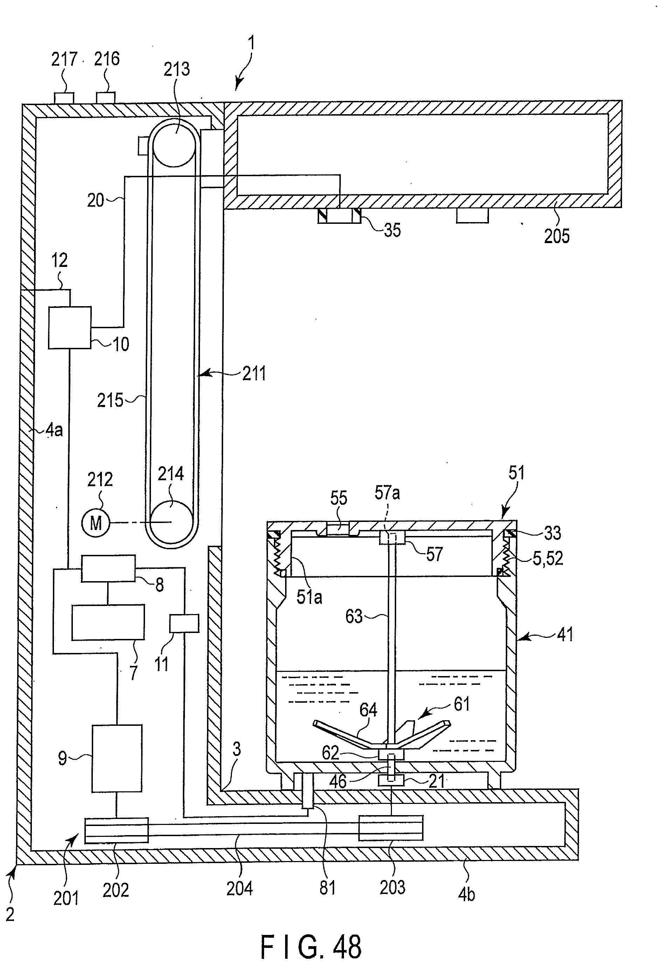

Subsequently, drive the motor 9. Thus, mechanical power of the motor 9 is transmitted to the tool linking member 21 via the driving mechanism 201 and, as a result, the processing tool 61 is rotated together with the rotation axis 46. Therefore, food is crushed inside the cooking container 41 in a low oxygen state to produce juice. This state is shown in FIG. 48.

Incidentally, the motor 9 may be driven in the state shown in FIG. 47 to produce juice. In this case, the cooking container 41 is pressed down. Thus, the cooking container 41 can be inhibited from fluctuating under the influence of rotation of the processing tool 61 without the cooking container 41 being pressed down with a user's hand.

Next, detach the cover 51 temporarily from the cooking container 41. Subsequently, grip the tool axis 63 to take out the processing tool 61 from the cooking container 41. Then, mount the cover 51 again on the cooking container 41.

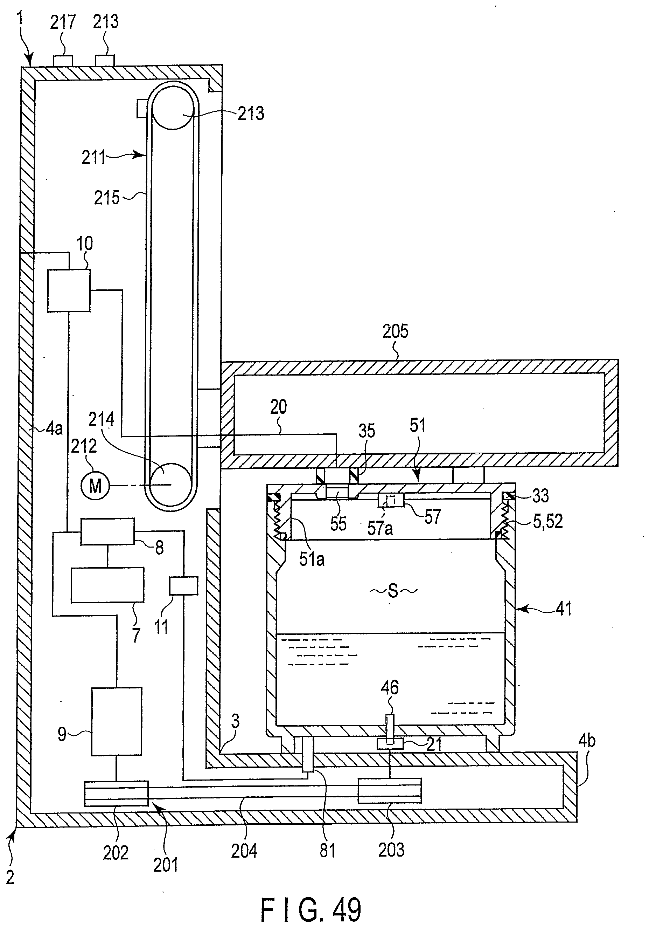

In this state, press the first switch 216 again to lower the lifting member 205 via the lifting mechanism 211. Accordingly, as shown in FIG. 49, the cooking container 41 mounted with the cover 51 is sandwiched between the stand 4b and the lifting member 205. Then, drive the pressure reducing device 10 again. Accordingly, the air inside the cooking container 41 is exhausted and the pressure inside the cooking container 41 is reduced and also a low oxygen state is created.

Lastly, press the second switch 216 again to lift the lifting member 205 and then detach the cooking container 41 together with the cover 51 from the stand 4b. The cooking container 41 and the cover 51 detached from the stand holds juice inside the cooking container 41 in a low oxygen state. The cooking container 41 can directly be preserved in a refrigerator or the like as a storage container or carried.

Juice stored in the cooking container 41 can be drunk by using the cooking container 41 as a drinking container after pressing the cover-side check valve 55 from above to open the valve and detaching the cover 51.

Also in the fifteenth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

Incidentally, the fifteenth embodiment can be carried out by omitting the lifting member, the lifting mechanism, the first switch, and the second switch. In this case, the intake pipe 20 is provided in such a way that the pipe can be pulled out from the top end of the housing main portion 4a and pushed in. In addition, a pipe connection portion that removably connects the tip of the pulled-out intake pipe 20 to the cover 51 is mounted on the cover 51. The pipe connection portion is provided, for example, immediately above the cover-side check valve 55. Thus, a negative pressure to reduce the pressure inside the cooking container 41 can be propagated to the cover-side check valve 55 via the intake pipe 20.

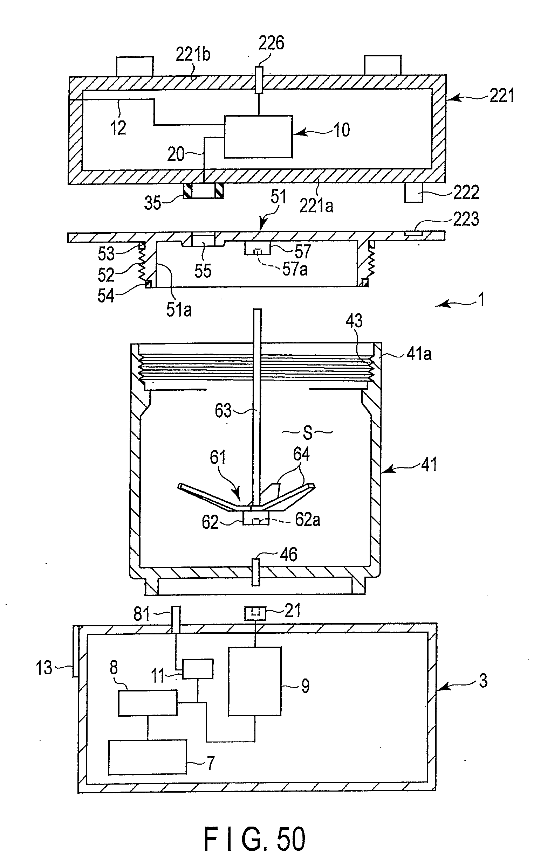

FIGS. 50 to 53 show the sixteenth embodiment. In a mixer according to the sixteenth embodiment described below, the same reference signs are attached to components achieving the same functions as those described in each embodiment described above or similar functions and the description thereof is omitted.

A mixer 1 according to the sixteenth embodiment includes, as shown in FIG. 50, a cooking container 41, a cover 51 serving also as a closing member, a cover-side check valve 55, a processing tool 61, a first housing 221, a pressure reducing device 10, a housing 3 forming a second housing, and a motor 9.

The cooking container 41 partitions the accommodation space S and the top end of the cooking container 41 is open. An inner screwing portion 43 is formed on an opening edge 41a. A rotation axis 46 is mounted on the bottom wall of the cooking container 41 by passing through the wall. The rotation axis 46 is fitted to a tool linking member 21 such that rotation can be transmitted thereto. Mechanical power transmission between the rotation axis 46 and the tool linking member 21 is realized by engagement of a key groove provided on one side and a key provided on the other.

A male screw portion 52 of a cylindrical portion 51a of the cover 51 is formed. Reference signs 53, 54 each show sealants. The cover 51 can removably be connected to the cooking container 41 by closing the top end opening of the cooking container 41 and can seal the cooking container 41 in a connected state.

The configuration of the cover-side check valve 55 mounted on the cover 51 is as described in the other embodiments. Thus, the cover-side check valve 55 allows the air to flow out from the accommodation space S when the air in the accommodation space S is exhausted and also can stop the opposite flow of the air after an exhaust operation.

The processing tool 61 includes a connection portion 62, a tool axis 63, and a tool element 64. The processing tool 61 is connected to the rotation axis 46 and can rotate together with the axis.

The first housing 221 can removably be placed on the cover 51. The first housing 221 and the cover 51 are properly positioned by a positioning device. The positioning device is formed of, for example, a projection 222 projected downward from a one-end wall 221a in the thickness direction of the first housing 221 and a hole 223 provided in the cover 51 by being open to the top surface of the cover 51. The cover 51 and the first housing 221 are positioned by the projection 222 being fitted to the hole 223.

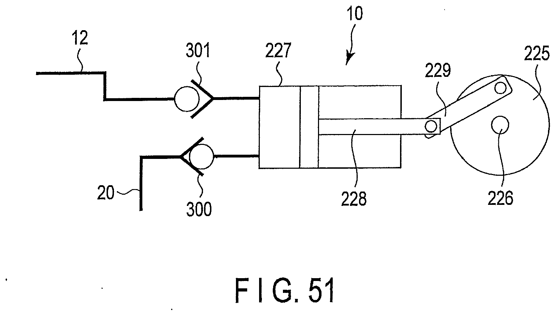

The pressure reducing device 10 is contained, excluding an input axis 226, in the first housing 221. As shown in FIG. 51, the pressure reducing device 10 has a configuration including no motor and includes, for example, as shown in FIG. 51, a rotation member 225, the input axis 226, a cylinder 227, a piston 228, a link 229, an intake valve 300 configured as a one-way valve, and an exhaust valve 301 configured as a one-way valve.

The rotation member 225 is formed from, for example, a disc. The input axis 226 is linked to the center portion of the rotation member 225 at the right angle to the rotation member 225. The input axis 226 is projected out of the first housing 221 by passing through another end wall 221b of the first housing 221 opposite to the one-end wall 221a. The thickness of the input axis 226 is the same as that of the rotation axis 46 and a key groove or a key (not shown) is formed on the circumferential surface of the input axis 226. Thus, the input axis 226 can removably be fitted and connected to the tool linking member 21.

The head of the piston 228 is slidably inserted into the cylinder 227. A rod portion of the piston 228 is connected to the rotation member 225 via the link 229. The intake valve 300 and the exhaust valve 301 are each connected to the piston 228 by being communicatively connected to a piston chamber.

The rotational motion of the rotation member 225 is converted into a linear reciprocating motion of the piston 228 via the link 229. When the piston 228 is thereby moved by being pulled, the volume of the piston chamber is increased and a negative pressure is generated. Conversely, when the piston 228 is pushed, the piston chamber is compressed and the volume thereof is decreased.

The intake pipe 20 is connected to the intake valve 300 and the tip of the pipe is open to the one-end wall 221a. The exhaust pipe 12 is connected to the exhaust valve 301 and the tip of the pipe is open to the outside surface of the first housing 221.

Thus, when a negative pressure arises in the piston chamber, the intake valve 300 is opened by the negative pressure and the air is taken in from the intake pipe 20. At this point, the exhaust valve 301 is closed by the negative pressure acting on the exhaust valve 301. Conversely, when the pressure inside the piston chamber is increased, the intake valve 200 is closed by the pressure. At this point, the exhaust valve 301 is opened by the pressure acting on the exhaust valve 301 and the air is exhausted from the exhaust pipe 12.

The housing 3 forming the second housing is the housing of the driving device 2. The housing 3 contains an AC (alternating current)/DC (direct current) switching power supply 7, a DC (direct current)/DC (direct current) converter 8, a motor 9, and a control device 11. In addition, an operation panel 13 is mounted on the outside surface of the housing 3. Further, the tool linking member 21 rotated by the motor 9 is disposed outside the housing 3. The selected axis of the rotation axis 46 and the input axis 226 is removably fitted and connected to the tool linking member 21.

The mixer 1 in the sixteenth embodiment has the same configuration as that in the fifth embodiment including a configuration that is not shown except the configuration described above.

The procedure for using the mixer 1 in the sixteenth embodiment will be described.

First, put the processing tool 61 into the cooking container 41 and connect to the rotation axis 46 and also put food to be processed and water into the cooking container 41. Then, screw the male screw portion 52 of the cover 51 also serving as a closing member into the inner screwing portion 43 of the cooking container 41 to mount the cover 51 on the cooking container 41. In this state, the tool axis 63 of the processing tool 61 is supported by being fitted into an axis supporting portion 57 of the cover 51.

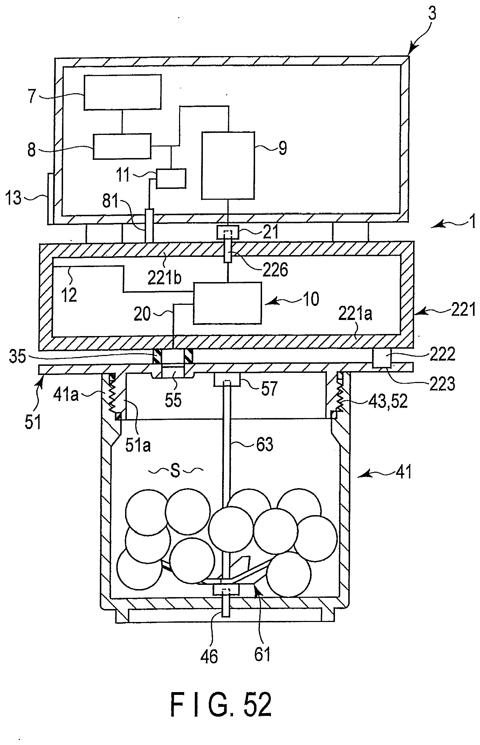

Next, as shown in FIG. 52, place the first housing 221 in a posture in which the input axis 226 is projected upward on the cover 51. At this point the projection 222 is fitted into the hole 223. Accordingly, the first housing 221 is properly positioned with respect to the cover 51. In addition, a seal ring 35 is arranged immediately above the cover-side check valve 55 and the seal ring 35 is sandwiched between the first housing 221 and the cover 51 in an elastically deformed state. Thus, the tip opening of the intake pipe 20 is arranged in a state near immediately above the cover-side check valve 55 with the internal space of the seal ring 35 therebetween.

Further, place the housing 3 of a driving unit 2a in a state in which the driving unit 2a is turned upside down, that is, in a posture in which the tool linking member 21 is projected downward on the first housing 221. With this placement, the tool linking member 21 and the input axis 226 are fitted and connected. In addition, a container detection device 81 detects the first housing 221. That is, that the first housing 221 and the housing 3 as the second housing are properly combined is detected and the control device 11 enables driving of the motor 9.

A state in which the cover 51, the first housing 221, and the housing 3 as the second housing are set on the cooking container 41 according to the above procedure is shown in FIG. 52.

Then, drive the motor 9 to reduce the pressure inside the cooking container 41. That is, when the motor 9 is driven, a rotating force thereof is transmitted to the rotation member 225 of the pressure reducing device 10 via the tool linking member 21 and the input axis 226 connected thereto. In other words, the pressure reducing device 10 is driven by the motor 9 in the housing 3 as a power source.

This, a negative pressure generated by driving of the pressure reducing device 10 is propagated to the cover-side check valve 55 of the cover 51 serving as a closing member via the intake pipe 20. Accordingly, the cover-side check valve 55 is opened and the air in the accommodation space S is exhausted. The pressure inside the cooking container 41 is thereby reduced and food inside is placed in a low oxygen concentration environment. When the driving of the pressure reducing device 10 is stopped, the cover-side check valve 55 is in a closed state and the cooking container 41 is retained in a pressure reduced state.

Then, detach the driving device 2 from the first housing 221 and turn the first housing 221 to be opposite to the state in FIG. 52 so that the tool linking member 21 is directed upward. Further, detach the first housing 221 from the cover 51.

Next, place the cooking container 41 sealed with the cover 51 on the housing 3 of the driving device 2. With this placement, the tool linking member 21 directed upward and the lower portion of the rotation axis 46 mounted on the cooking container 41 are fitted and connected. In addition, the container detection device 81 detects the cooking container 41. That is, that the driving device 2 and the cooking container 41 are properly combined is detected and the control device 11 enables driving of the motor 9.

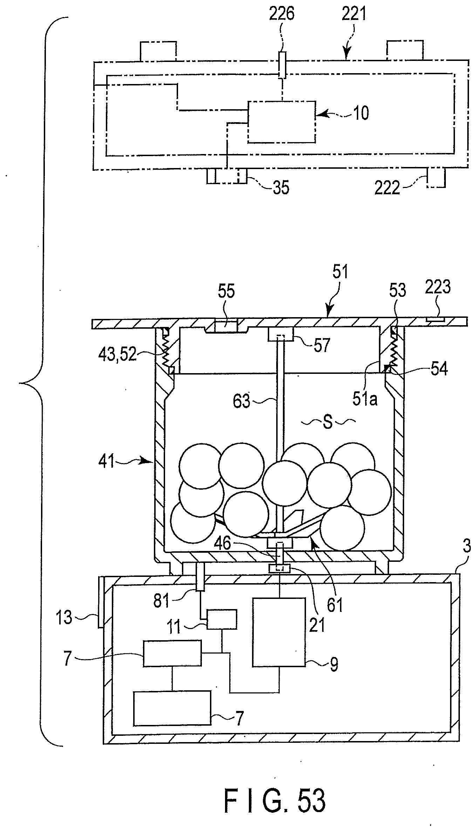

A state in which the cooking container 41 is set on the housing 3 of the driving device 2 according to the above procedure is shown in FIG. 53.

Then, drive the motor 9 to mix food inside the cooking container 41 in which the pressure is reduced. That is, the rotation of the motor 9 is transmitted to the processing tool 61 via the tool linking member 21 and the rotation axis 46 connected thereto. Accordingly, the food is crushed and mixed to produce juice. At this point, the pressure inside the cooking container 41 is reduced and a low oxygen state is maintained and thus, oxidation of juice produced inside the cooking container 41 is inhibited.

The cooking container 41 in which juice is stored as described above is detached from the housing 3 of the driving device 2 while remaining in a state closed by the cover 51 serving as a closing member and is carried or preserved in a refrigerator or the like. In the procedure for drinking juice inside the cooking container 41, first press a push button 27d (see FIG. 7 or 8) of the cover-side check valve 55 with a finger of the user or the like to open the cover-side check valve 55 of the cover 51. When the cover-side check valve 55 is opened, the outside air is introduced into the cooking container 41 through the airway.

With the introduction of air into the cooking container 41, the cover 51 can easily be detached from the cooking container 41 without being affected by a negative pressure thereafter. Then, the juice inside can be drunk using the cooking container 41 as a drinking container. In addition, juice can be poured from the cooking container 41 into a drinking container prepared separately and then drunk.

Also in the sixteenth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided. Further, the motor 9 inside the housing (second housing) 3 of the driving device 2 is commonly used as a driving source when the pressure inside the cooking container 41 is reduced and when the processing tool 61 is rotated in a pressure reduced state. Thus, there is no need to prepare a motor for reducing the pressure and the cost can be cut.

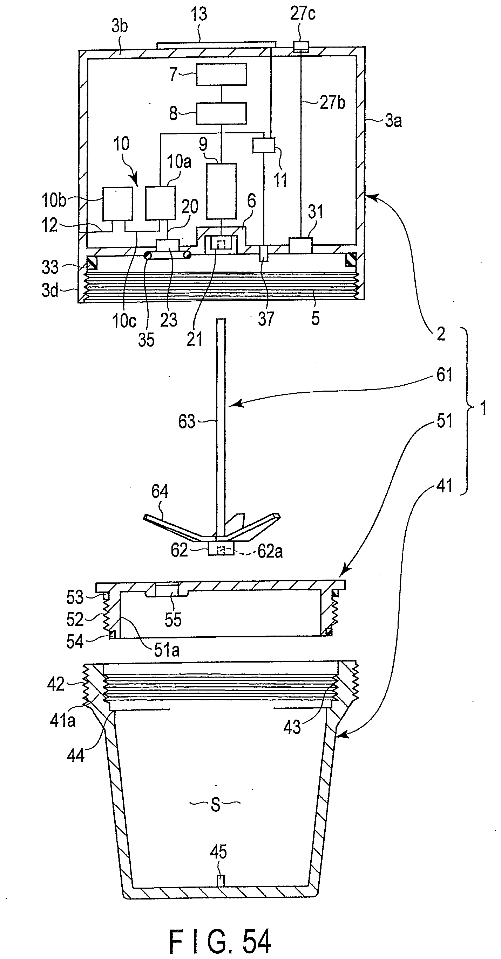

FIG. 54 shows the seventeenth embodiment. In a mixer according to the seventeenth embodiment described below, the same reference signs are attached to components achieving the same functions as those described in the first embodiment or similar functions and the description thereof is omitted.

In a mixer 1 according to the seventeenth embodiment, a pressure reducing device 10 contained in a housing 3 of a driving device 2 is formed by connecting a plurality of electric vacuum pumps in series.

That is, the multi-stage pressure reducing device 10 includes, for example, a vacuum pump 10a arranged upstream based on the flow of the exhaust air and a vacuum pump 10b arranged downstream. The discharge port of the vacuum pump 10a and the suction port of the vacuum pump 19b are communicatively connected by a vent pipe 10c connecting these both ends.

An intake pipe 20 is connected to the suction port of the vacuum pump 10a. An air tube 12 is connected to the discharge port of the vacuum pump 10b.

The mixer 1 in the seventeenth embodiment has the same configuration as that in the first embodiment including a configuration that is not shown except the configuration described above.

Therefore, also in the seventeenth embodiment, the problem is solved by being able to mixing under a reduced pressure as in the first embodiment. In addition, the mixer 1 capable of processing food with a simple configuration while inhibiting oxidation of food and also inhibiting pressure inside the cooking container 41 from rising excessively can be provided.

Further, in the seventeenth embodiment, the pressure reducing device 10 is a multi-stage type. Thus, to generate a predetermined vacuum pressure (negative pressure) to exhaust the air inside the cooking container 41 and to reduce the pressure therein, when compared with a case in which one vacuum pump capable of generating the predetermined vacuum pressure is used, pump performance needed for each of the vacuum pumps 10a, 10b can be lowered. The vacuum pumps 10a, 10b whose pump performance is low are cheap and can contribute to reduce the overall cost of the cooking device. Further, when a pressure reducing device in which more vacuum pumps are connected in series and used is adopted, exhaust capabilities can further be improved.

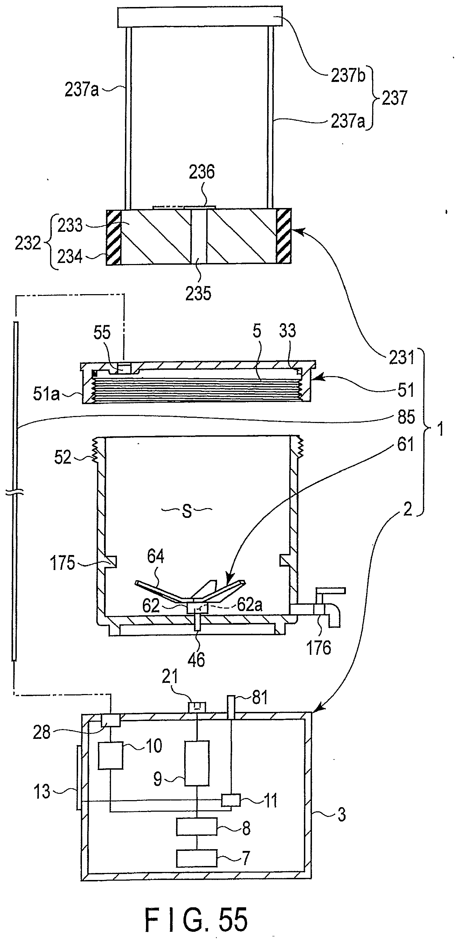

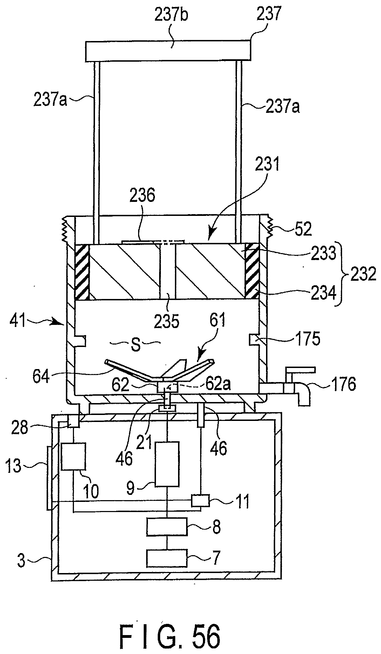

FIGS. 55 and 56 show the eighteenth embodiment. In a mixer according to the eighteenth embodiment described below, the same reference signs are attached to components achieving the same functions as those described in each embodiment described above or similar functions and the description thereof is omitted.

A mixer 1 according to the eighteenth embodiment includes a driving device 2, a cooking container 41, a cover 51, intake piping 85, a piston member 231, and a processing tool 61.

The driving device 2 is the same as a driving device described in the fifth embodiment. Thus, a housing 3 of the driving device 2 contains an AC (alternating current)/DC (direct current) switching power supply 7, a DC (direct current)/DC (direct current) converter 8, a motor 9, a pressure reducing device 10, and a control device 11. In addition, an operation panel 13, a tool linking member 21, and a container detection device 81 are mounted on the housing 3.

The top end of the cooking container 41 is open. The cooking container 41 has a male screw portion 52 on the outer circumference of an opening edge thereof. The cooking container 41 has a stopper portion 175 in a lower portion thereof. The stopper portion 175 is formed as, for example, a circular height integrally projected from the inner circumferential surface of the cooking container 41. Instead, a step formed between the upper portion and the lower portion of the cooking container 41 by making the diameter of the lower portion smaller than that of the upper portion may also be used as a stopper portion. The upper portion above the stopper portion 175 of the cooking container 41 is a cylindrical portion in which the diameter does not change. At least the cylindrical portion is transparent to allow visual recognition inside the cooking container 41.

The cooking container 41 has a volume capable of storing, for example, several cups of juice. The cooking container 41 is placed on the housing 3. In this state of placement, a rotation axis 46 mounted by passing through the bottom wall of the cooking container 41 is fitted to the tool linking member 21 such that rotation can be transmitted thereto.

A cock 176 is mounted at the bottom of the cooking container 41 below the stopper portion 175. The cock 176 includes an effluent pipe, a cock body that opens/closes the effluent pipe, and a cock handle linked to the cock body. The cock body is rotatably arranged inside the effluent pipe. Juice inside the cooking container 41 can flow out after the cock body being rotated using the cock handle to open the effluent pipe.

The cover 51 has a female screw portion 5 on the inner circumference of a cylindrical portion 51a thereof. A sealant 33 and a cover-side check valve 55 are mounted on the cover 51.

The processing tool 61 is formed of a connection portion 62 and a tool element 64 and is configured not to include a tool axis. The processing tool 61 is removably or fixedly connected to an upper portion of the rotation axis 46 inside the cooking container 41. The top end of the processing tool 61 is arranged lower than the height position of the top end of the stopper portion 175.

The piston member 231 includes a head 232 and a handle 237.

The head 232 includes a head body 233 and a seal 234 mounted on a circumferential portion of the head body 233. The seal 234 is formed from rubber, elastomer or the like capable of elastic deformation. The diameter of the head 232 specified by the seal 234 is a size fitting to the inside diameter of the upper portion in the cylindrical shape of the cooking container 41.

The head 232 is fitted into the cooking container 41 movably in the up and down direction. In this fitted state, the seal 234 in an elastically deformed state is slidably in contact with the inner surface of the upper portion of the cooking container 41. The head 232 can be inserted into or removed from the cooking container 41 from above.

The head body 233 includes a vent hole 235 cut through in the thickness direction thereof. An opening/closing member 236 that opens/closes the vent hole 235 is mounted on the head body 233. The opening/closing member 236 can be moved along the top surface of the head body 233 by a manual operation. The opening/closing member 236 can move between the closing position of the vent hole 235 and the opening position of the vent hole 235. The opening/closing member 236 is preferably retained temporarily in each of the positions by a lock device.

The handle 237 is formed of, for example, two longitudinal bars 237a and a grip portion 237b configured as a crossbar. The bottom end of the longitudinal bar 237a is linked to the head body 233 from above. The top end of the longitudinal bar 237a is continued to the grip portion 237b to support the grip portion 237b substantially horizontally. While the head 232 is inserted into the cooking container 41, the head 232 can be moved vertically by gripping the grip portion 237b projected out of the cooking container 41.

Next, the procedure for using the mixer 1 in the eighteenth embodiment will be described.

First, put the processing tool 61 and food to be processed into the cooking container 41 and also seal the cooking container 41 by mounting the cover 51 thereon. In this state, place the cooking container 41 on the housing 3 of the driving device 2 and next, communicatively connect the pressure reducing device 10 and the cover-side check valve 55 using the intake piping 85. In this state, drive the pressure reducing device 10 to reduce the pressure inside the cooking container 41 and then, drive the motor 9 to produce juice by rotating the processing tool 61.

To describe briefly, open the cover-side check valve 55 by propagating a negative pressure generated by the pressure reducing device 10 to the valve through the intake piping 85 to reduce the pressure inside the cooking container 41 to create a low oxygen state. Next, after stopping the pressure reducing state, drive the motor 9 to crush food inside the cooking container 41 under a reduced pressure by transmitting the rotation thereof to the processing tool 61 to produce juice.

Then, detach the cover 51 from the cooking container 41 and insert the piston member 231 into the cooking container 41. In this case, insert the head 232 into the cooking container 41 after moving the opening/closing member 236 to the opening position of the vent hole 235. With this insertion, the air inside the cooking container 41 goes out above the head 232 by passing through the vent hole 235. Stop the insertion of the head 232 when the undersurface of the head 232 comes into contact with the liquid level of juice inside the cooking container 41. In this case, whether such a contact state is reached is checked visually by seeing through the cooking container 41.

Further, while the head 232 is inserted up to an appropriate position, move the opening/closing member 236 to the closing position of the vent hole 235. In this state, the piston member 231 partitions the air thereon and juice thereunder and thus, juice and the air are prevented from coming into contact with each other. Therefore, juice stored inside the cooking container 41 can be retained in a state in which oxidation hardly occurs.

To take out juice stored as described above from the cooking container 41. First, move the opening/closing member 236 to the opening position of the vent hole 235. Then, open the cock 176. Accordingly, juice can be caused to flow out from the cooking container 41 through the cock 176.

Due to accompanying lowering of the liquid level of juice, an air layer is formed between the liquid level and the head 232.

Thus, push down the piston member 231 by gripping the handle 237. The air between juice and the head 232 is exhausted through the vent hole 235 by the pushing down so that the undersurface of the head 232 can be brought into contact with juice. Then, a state in which oxidation of juice inside the cooking container 41 hardly occurs can be retained by moving the opening/closing member 236 to close the vent hole 235.

After the stopper portion 175 comes into contact with the head 232 of the piston member 231 from below, the piston member 231 will not be pushed down any more. Thus, a head portion 173 can be prevented from being damaged by the tool element 64 of the processing tool 61 after coming into contact therewith. The quantity of juice remaining in the cooking container 41 at this point is preferably set to, for example, a quantity corresponding to a cup.

As another method of taking out juice stored inside the cooking container 41 from the cooking container 41, the piston member 231 may be pushed down while the vent hole 235 is in a closed state after opening the cock 176. In this case, juice can be caused to flow out from the cock 176 like a syringe by the pressure pushing down the piston member 231. Compared with the above method, this method has an advantage of preventing juice and the air from coming into contact still more.

Also in the twelfth embodiment, as described above, the problem is solved by being able to mixing under a reduced pressure. In addition, the cooking device 1 capable of processing food with a simple configuration while inhibiting oxidation of food and also inhibiting pressure inside the cooking container 41 from rising excessively can be provided.

Some embodiments of the present disclosure have been described, but these examples are presented by way of example and do not intend to limit the scope of the invention. These new embodiments can be carried out in other various forms and also various omissions, substitutions, and alterations can be made without deviating from the scope of the invention. These embodiments and modifications thereof are included in the scope of the invention and also included in the inventions described in claims and equivalents thereof.

In each embodiment, a check valve used to exhaust the air in a cooking space is mounted on a closing member such as a cover that seals the cooking space, but instead, the check valve may be provided in a cooking container. That is, mounting the check value on the closing member is, however, preferable because the design of the cooking container does not become complex and the manufacture and handling thereof become easier.

In each embodiment, the configuration of a cover (closing member) mounted on a sealed cooking container is not limited to that of mounting by screwing. For example, one circular sealant or more that are in contact with the cover and the inner circumference or outer circumference of an opening edge of the cooking container and seal between the opening edge of the cooking container and the cover mounted on the cooking container by being fitted into the opening edge may be mounted on one of the cover and the cooking container. In this case, an O ring made of rubber or the like can be used for the sealant. Even such a configuration can seal the cooking container and in addition, when compared with the screwing system, the cover (closing member) can easily be inserted and removed.

## Claims

1. A cooking device (1) comprising:
a housing (3) including a stand;
a first cooking container (41) which is placed on the stand and whose top end is open;
a closing member (51) removably connected to an upper portion of the first cooking container (41) by closing an opening of the first cooking container (41);
a processing tool (61) which is arranged in an accommodation space (S) formed of the first cooking container (41) and the closing member (51) and processes food in the accommodation space (S);
a motor (9) which is arranged in the housing (3) and rotates the processing tool (61);
a pressure reducing device (10) which reduces pressure in the accommodation space (S); **characterized in that**
a selecting device which is arranged in the housing and is capable of selecting a first operation mode in which pressure in the accommodation space (S) is reduced by the pressure reducing device (10) and a second operation mode in which after the pressure in the accommodation space (S) is reduced by the pressure reducing device (10), the processing tool (61) is rotated by the motor (9).

2. The cooking device (1) according to claim 1, further comprising:
a container detection device (81) which is arranged in the housing (3) and detects the first cooking container (41) placed on the stand;
a drive control device (11) which exercises control to inhibit driving of at least the motor (9) when the first cooking container (41) placed on the stand is not detected by the container detection device (81),
wherein the drive control device (11) enables driving of the pressure reducing device (10) regardless of detection results by the container detection device (81).

3. The cooking device (1) according to claim 1 or 2, wherein when the first operation mode is performed, a second cooking container not having the processing tool (61) is employable instead of the first cooking container (41) .

4. The cooking device (1) according to claim 3, wherein the second cooking container is storable in a refrigerator or the like as a storage container or is portable as a drinking container.

5. The cooking device (1) according to any one of claims 1 to 4, wherein a first pressure reduced in the first operation mode and a second pressure reduced in the second operation mode are different from each other.

6. The cooking device (1) according to claim 5, wherein the first pressure reduced in the first operation mode is higher than the second pressure reduced in the second operation mode.

7. The cooking device (1) according to any one of claims 1 to 6, wherein the motor (9) is provided to the closing member (51).

8. The cooking device (1) according to any one of claims 1 to 7, wherein the pressure reducing device (10) is provided in the housing (3).

9. The cooking device (1) according to any one of claims 1 to 7, wherein the pressure reducing device (10) is arranged outside the housing (3).

10. The cooking device (1) according to any one of claims 1 to 9, further comprising a check valve (23) which is provided in the closing member (51), allows an outflow of the air out of the accommodation space (S) by the pressure reducing device (10), and stops an opposite flow of the air.

11. A cooking device (1) according to any of claims 1, 2, 3, 5 and 6,
wherein the housing (3) includes a housing main portion which is arranged side by side in a lateral direction with respect to the first cooking container (41) while the first cooking container (41) is placed on the stand, and
wherein the motor (9) and the pressure reducing device (10) are arranged in an up and down direction in the housing main portion.

## Patentansprüche

1. Kochvorrichtung (1), Folgendes beinhaltend:
ein Gehäuse (3), beinhaltend einen Ständer;
einen ersten Kochbehälter (41), welcher auf dem Ständer platziert ist und dessen oberes Ende offen ist;
ein Verschlussglied (51), welches abnehmbar mit einem oberen Abschnitt des ersten Kochbehälters (41) durch Schließen einer Öffnung des ersten Kochbehälters (41) verbunden ist;
ein Verarbeitungswerkzeug (61), welches in einem Unterbringungsraum (S) angeordnet ist, gebildet aus dem ersten Kochbehälter (41) und dem Verschlussglied (51), und welches Nahrungsmittel in dem Unterbringungsraum (S) verarbeitet;
einen Motor (9), welcher in dem Gehäuse (3) angeordnet ist und das Verarbeitungswerkzeug (61) dreht;
eine Druckminderungsvorrichtung (10), welche Druck in dem Unterbringungsraum (S) mindert; **dadurch gekennzeichnet, dass**
eine Wählvorrichtung, welche in dem Gehäuse angeordnet und fähig ist, eine erste Betriebsart zu wählen, in welcher Druck im Unterbringungsraum (S) durch die Druckminderungsvorrichtung (10) gemindert wird, und eine zweite Betriebsart, in welcher, nachdem der Druck im Unterbringungsraum (S) durch die Druckminderungsvorrichtung (10) gemindert wurde, das Verarbeitungswerkzeug (61) durch den Motor (9) gedreht wird.

2. Kochvorrichtung (1) nach Anspruch 1, zudem beinhaltend:
eine Behältererkennungsvorrichtung (81), welche in dem Gehäuse (3) angeordnet ist und den ersten auf dem Ständer platzierten Kochbehälter (41) erkennt;
eine Antriebssteuerungsvorrichtung (11), welche Kontrolle ausübt, um Antrieb von mindestens dem Motor (9) zu unterdrücken, wenn der auf dem Ständer platzierte Kochbehälter (41) nicht von der Behältererkennungsvorrichtung (81) erkannt wird,
wobei die Antriebssteuerungsvorrichtung (11) Antrieb der Druckminderungsvorrichtung (10) ungeachtet des Erkennungsresultats der Behältererkennungsvorrichtung (81) ermöglicht.

3. Kochvorrichtung (1) nach Anspruch 1 oder 2, bei welcher, wenn die erste Betriebsart ausgeführt wird, ein zweiter Kochbehälter, welcher nicht das Verarbeitungswerkzeug (61) besitzt, anstelle des ersten Kochbehälters (41) verwendbar ist.

4. Kochvorrichtung (1) nach Anspruch 3, bei welcher der zweite Kochbehälter in einem Kühlschrank oder ähnlich als Aufbewahrungsbehälter gelagert werden kann oder als ein Trinkbehälter tragbar ist.

5. Kochvorrichtung (1) nach einem der Ansprüche 1 bis 4, bei welcher ein erster, in der ersten Betriebsart geminderter Druck, und ein zweiter, in der zweiten Betriebsart geminderter Druck, sich voneinander unterscheiden.

6. Kochvorrichtung (1) nach Anspruch 5, bei welcher der erste, in der ersten Betriebsart geminderte Druck höher ist als der zweite, in der zweiten Betriebsart geminderte Druck.

7. Kochvorrichtung (1) nach einem der Ansprüche 1 bis 6, bei welcher der Motor (9) dem Verschlusselement (51) bereitgestellt ist.

8. Kochvorrichtung (1) nach einem der Ansprüche 1 bis 7, bei welcher die Druckminderungsvorrichtung (10) im Gehäuse (3) bereitgestellt ist.

9. Kochvorrichtung (1) nach einem der Ansprüche 1 bis 7, bei welcher die Druckminderungsvorrichtung (10) außerhalb des Gehäuses (3) angeordnet ist.

10. Kochvorrichtung (1) nach einem der Ansprüche 1 bis 9, zudem beinhaltend ein Rückschlagventil (23), welches in dem Verschlusselement (51) bereitgestellt ist, welches ein Ausströmen der Luft aus dem Unterbringungsraum (S) durch die Druckminderungsvorrichtung (10) ermöglicht und einen gegenläufigen Strom der Luft stoppt.

11. Kochvorrichtung (1) nach einem der Ansprüche 1, 2, 3, 5 und 6,
bei welcher das Gehäuse (3) einen Gehäusehauptabschnitt beinhaltet, welcher Seite an Seite in einer seitlichen Richtung in Bezug auf den ersten Kochbehälter (41) angeordnet ist, während der erste Kochbehälter (41) auf dem Ständer platziert ist, und
wobei der Motor (9) und die Druckminderungsvorrichtung (10) in einer Auf- und Abwärtsrichtung in dem Gehäusehauptabschnitt angeordnet sind.

## Revendications

1. Dispositif culinaire (1) comprenant :
un boîtier (3) incluant un support,
un premier récipient de cuisine (41) qui est placé sur le support et dont l'extrémité supérieure est ouverte,
un élément de fermeture (51) connecté de façon amovible à une partie supérieure du premier récipient de cuisine (41) en fermant une ouverture du premier récipient de cuisine (41),
un outil de traitement (61) qui est disposé dans un espace de réceptacle (S) formé par le premier récipient de cuisine (41) et l'élément de fermeture (51) et qui traite les aliments dans l'espace de réceptacle (S),
un moteur (9) agencé dans le boîtier (3) qui fait tourner l'outil de traitement (61),
un dispositif de réduction de pression (10) qui diminue la pression dans l'espace de réceptacle (S), **caractérisé en ce qu'**il comprend en outre
un dispositif de sélection disposé dans le boîtier qui est capable de sélectionner un premier mode de fonctionnement selon lequel la pression dans l'espace de réceptacle (S) est diminuée par le dispositif de réduction de pression (10) et un second mode de fonctionnement selon lequel, une fois que la pression dans l'espace de réceptacle (S) est diminuée par le dispositif de réduction de pression (10), l'outil de traitement (61) est mis en rotation par le moteur (9).

2. Dispositif culinaire (1) selon la revendication 1, comprenant en outre :
un dispositif de détection de récipient (81) qui est disposé dans le boîtier ((3) et détecte la présence du premier récipient de cuisine (41) placé sur le support,
un dispositif de commande d'entraînement (11) qui exerce une commande pour empêcher l'entraînement du au moins un moteur (9) lorsque le premier récipient de cuisine (41) placé sur le support n'est pas détecté par le dispositif de détection de récipient (81),
dans lequel le dispositif de commande d'entraînement (11) permet l'entraînement du dispositif de réduction de pression (10) indépendamment des résultats de la détection par le dispositif de détection de récipient (81).

3. Dispositif culinaire (1) selon la revendication 1 ou 2, dans lequel lorsque le premier mode de fonctionnement est exécuté, un second récipient de cuisine ne comportant pas l'outil de traitement (61) est utilisable au lieu du premier récipient de cuisine (41).

4. Dispositif culinaire (1) selon la revendication 3, dans lequel le second récipient de cuisine peut être entreposé dans un réfrigérateur ou un appareil similaire en tant que récipient de conservation ou est portable comme un récipient de boisson.

5. Dispositif culinaire (1) selon l'une quelconque des revendications 1 à 4, dans lequel une première pression réduite dans le premier mode de fonctionnement et une seconde pression réduite dans le second mode de fonctionnement sont différentes l'une de l'autre.

6. Dispositif culinaire (1) selon la revendication 5, dans lequel la première pression réduite dans le premier mode de fonctionnement est supérieure à la seconde pression réduite dans le second mode de fonctionnement.

7. Dispositif culinaire (1) selon l'une quelconque des revendications 1 à 6, dans lequel le moteur (9) est agencé sur l'élément de fermeture (51).

8. Dispositif culinaire (1) selon l'une quelconque des revendications 1 à 7, dans lequel le dispositif de réduction de pression (10) est disposé dans le boîtier (3).

9. Dispositif culinaire (1) selon l'une quelconque des revendications 1 à 7, dans lequel le dispositif de réduction de pression (10) est disposé à l'extérieur du boîtier (3).

10. Dispositif culinaire (1) selon l'une quelconque des revendications 1 à 9, comprenant en outre un clapet anti-retour (23) qui est disposé dans l'élément de fermeture (51), qui permet la sortie de l'air hors de l'espace de réceptacle (S) par le dispositif de réduction de pression (10) et arrête une admission d'air dans le sens opposé.

11. Dispositif culinaire (1) selon l'une quelconque des revendications 1, 2, 3, 5 et 6,
dans lequel le boîtier (3) inclut une partie principale de boîtier qui est disposée côte à côte dans le sens latéral par rapport au premier récipient de cuisine (41), lorsque le premier récipient de cuisine (41) est placé sur le support, et
dans lequel le moteur (9) et le dispositif de réduction de pression (10) sont disposés dans une direction de haut en bas dans la partie principale du boîtier.
